(19) **Europäisches Patentamt / European Patent Office / Office européen des brevets**

(11) **EP 3 123 257 B1**

(12) ## EUROPÄISCHE PATENTSCHRIFT

(45) Veröffentlichungstag und Bekanntmachung des Hinweises auf die Patenterteilung:
**12.09.2018 Patentblatt 2018/37**

(21) Anmeldenummer: **15712877.8**

(22) Anmeldetag: **25.03.2015**

(51) Int Cl.:
***G05B 19/418*** (2006.01)

(86) Internationale Anmeldenummer:
**PCT/EP2015/056404**

(87) Internationale Veröffentlichungsnummer:
**WO 2015/144762 (01.10.2015 Gazette 2015/39)**

(54) **VERFAHREN ZUR STEUERUNG BZW. HANDHABUNG EINES MATERIALFLUSSES IN EINER EINE DRUCKMASCHINE**

METHOD FOR CONTROLLING AND/OR MANIPULATING A MATERIAL FLOW IN A PRINTING MACHINE

PROCÉDÉ DE COMMANDE OU DE MANIPULATION D'UN FLUX DE MATIÈRES DANS UNE MACHINE D'IMPRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.03.2014 DE 102014205669**

(43) Veröffentlichungstag der Anmeldung:
**01.02.2017 Patentblatt 2017/05**

(73) Patentinhaber: **Koenig & Bauer AG**
**97080 Würzburg (DE)**

(72) Erfinder:
• **GRETSCH, Harald**
**97246 Eibelstadt (DE)**
• **HESSLER, Stephan**
**97753 Karlstadt (DE)**
• **LEHRIEDER, Erwin**
**97253 Gaukönigshofen (DE)**
• **UGLJESA, Senad**
**97249 Eisingen (DE)**

(74) Vertreter: **Koenig & Bauer AG**
**- Lizenzen - Patente -**
**Friedrich-Koenig-Straße 4**
**97080 Würzburg (DE)**

(56) Entgegenhaltungen:
| | |
|---|---|
| EP-A1- 0 491 657 | EP-A1- 2 481 566 |
| WO-A1-2007/045468 | CN-A- 103 009 675 |
| CN-U- 202 124 265 | DE-U1-202007 012 351 |

EP 3 123 257 B1

## Beschreibung

Die Erfindung betrifft ein Verfahren zur Steuerung eines Materialflusses in einer eine Druckmaschine umfassenden mehrstufigen Anlage sowie ein System zur Steuerung des Materialflusses in einer eine Druckmaschine umfassenden Anlage gemäß den Ansprüchen 1 bzw. 15.

Durch die DE 197 40 974 A1 ist ein Buchfertigungssystem mit mehreren Fertigungsmaschinen, wie z. B. Zusammentragmaschine, Klebebinder und Dreiseitenschneider, bekannt, wobei mittels Rechnern programmgesteuert Auftragsdaten verarbeitet, Einrichtungsmaßnahmen durchgeführt und Maschinenprozesse überwacht werden. Von den Rechnern ist ein Leitrechner umfasst, welcher über ein DatenbusSystem mit SPS-en und Arbeitsstationen verbunden sind. In signaltechnisch mit dem Leitrechner verbundenen Speichern sind Datenbanken u. a. mit Produktdaten, Auftragsdaten, Kundendaten und Materialstammdaten sowie Programme u. a. zur Anlagenkonfigurierung, Prozesskonfiguration und Auftragsüberwachung gespeichert. Das Programm-Modul "Planung und Steuerung" umfasst Mittel zur eine Ressourcenplanung und Planung der Maschinenbelegung. In einem Modul zur "Prozessplanung" erfolgt u.a. eine Produktstrukturierung, Modellierung der Prozessschritte und Definition von Größen wie Papierart, Format, Bindung, Leimart und andere.

Die EP 0 654 721 B1 betrifft eine automatische Fabrikationsanlage, wobei mittels eines Systems für den Informationsfluss zwischen den Anlageneinheiten und den Werkstücken bzw. Werkzeugen eine flexible, insbesondere auftragsbezogene Fertigung mit vielen verschiedenen Werkstücken in kleinen Losgrößen ermöglicht sein soll. Die zu bearbeitenden Werkstücke sind jeweils auf Paletten montiert, welche an den Bearbeitungs- und vermessungsorten positionsgerecht einspannbar sind und einen Datenspeicher umfassen, auf welchem an den Stationen auslesbare Informationen zum spezifischen Bearbeitungsprogramm auslesbar sind. Auf dem Datenspeicher der Palette können auch die Weiterbearbeitung betreffende Daten gespeichert werden.

Durch die DE 43 29 886 A1 ist eine Ablaufsteuerung für Druckereien mit über ein Netzwerk verbundenen Dateneingabe- und Datenausgabeeinheiten bekannt, wobei in einer Speichereinheit liegende maschinenspezifische Daten über die Dateneingabeeinheiten manipulierbar, und die manipulierten Daten an allen Datenausgabeeinheiten abrufbar sind.

Durch einen Prospekt betreffend die "RAPIDA 106" der Fa. Koenig & Bauer AG ist beispielsweise auf Seite 28 und 29 ein Drucksaal mit mehreren Druckmaschinen und einem Logistiksystem bekannt, wobei in einer Ausführung die Anleger mit Mitteln für eine unterbrechungsfreie Materialzufuhr ausgeführt sind. Im Logistiksystem ist ein Stapelwender für den Tausch einer Einweg- gegen eine Nonstop-Logistikpalette sowie ein Palettenwender zum Wenden und ein Palettenspender zur Aufnahme von leeren Nonstop-Logistikpaletten vorgesehen. Durch einen ferngesteuerten Transportwagen kann ein Stapel von einer Rollenbahn entnommen und zu einem vorbestimmten Ziel gefahren werden, wobei eine Zielbestimmung durch EAN-Codierung erfolgen kann.

Die DE 201 22 255 U1 betrifft eine Ausrichtstation in einer Logistik für Druckereiern und offenbart eine Anordnung zur Logistik an Bogen verarbeitenden Druckmaschinen mit einer Anlieferung, mit einem Hochregallager, mit als Rollenbahnen ausgeführte Transortstrecken zu den Maschinen, mit Parkbereichen für bereitzustellende Bogenstapel und mit einer Umstapelposition, an welcher die Stapel für den an der Maschine vorgesehenen Non-Stop-Stapelwechsel von Transportpaletten auf Systempaletten umgesetzt werden. Ausgangsseitig der Druckmaschine kann der Stapel wieder auf ein Fördersystem übergeben oder über weitere Fördermittel einer Weiterverarbeitung zugeführt werden.

In der DE 10 2012 215 369 A1 ist ein Verfahren und eine Vorrichtung zur Handhabung von Bedruckstoffgebinden in einem Bedruckstoffversorgungssystem einer eine Druckmaschine umfassenden Druckanlage offenbart, wobei ein automatisches Weiterbewegen eines in einen Kontrollbereich einfahrenden Gebindes erst nach einem Quittieren erfolgen kann.

Die DE 201 22 255 U1 offenart eine Druckanlage mit mehreren parallelen Druckmaschinen und einer Stapellogistik und ist auf ein Stapelkontrollsystem gerichtet. Die Anlage umfasst u. a. ein Lager und eine Station zum Umpalettieren der Stapel auf Systempaletten, um stromabwärts ein unterbrechungsfreies An- und Auslegen zu ermöglichen. Systempaletten können durch einen Stapler oder ein Fördersystem vom Anleger zum Ausleger gefördert werden. Für den Fall eines stromabwärtigen Weiterverarbeitens kann ein Kreislauf für die Systempaletten erforderlich sein. Im Zusammenhang mit der Logistik sei für die erleichterte Einstellung der Maschinen, zur Verfolgung der Bogen und zur Bestandsführung des Rohmaterials ein Datensystem von Vorteil. Der jeweilige Stapel kann beim Umpalettieren oder bereits bei Anlieferung mit einer Coduierung verseghen werden, die sowohl in seiner Herkunft seine Eigenschaften als auch seine Verarbeitungshinweise entält. Diese Codierung der Stapel oder der die Stapel tragenden Paletten ermöglichen es, den Bestand und den Umlauf dieser Waren zu steuern und stets genau zu kennen. Die Zufuhr zur Druckmaschine und der Weitertransport eines Stapels könne durch derlei Codierungen, wie beispielsweise Strichcodiereungen oder Magnetcodierungen, verbessert und die Steuerung des Stapels angepasst an die Steuerung der Druckmaschine oder des gesamten Logistiksystems beeinflusst werden

Die DE 199 26 822 A1 offenbart eine Ausführung für eine Palettenwechselvorrichtung mit rechenartig angeorneten Tragstäben zum vorübergehenden Unterfangen des umzusetzenden Stapels auf.

Die DE 39 14 238 A1 betrifft ein Verfahren und eine Anordnung zur Steuerung von Druckmaschinen mit einem Personalcomoputer, der über eine Datenleitung mit einem fahrerlosen Transportsystem verbunden ist, das automatisch die Zuführung des Bedruckstoffes zu den Druckmaschinen vornimmt.

Ein die Drupa betreffender Artikel von Frank Lohmann im Internet über "Fahrerloses Transportsystem für Papierstapelwechsel an Druckmaschinen" der Fa. Asti offenbart ein Fahrerloses Transportfahrzeu für den Stapelwechsel am An- und Ausleger einer Druckmaschine. Ein solches Transportfahrzeu soll auch bei anderen Produktionsmaschionen, wie Stanzanlagen und Falzmaschinen zum Einsatz kommen können.

Die DE 20 2008 008 081 U1 offenart eine Druckanlage mit mehreren parallelen Druckmaschinen und einer Stapellogistik und ist auf ein Transportsystem zum Transporteren leerer paletten vom Anleger zum Ausleger der Druckmaschine gerichtet.

Die DE 101 22 430 A1 offenart eine Druckanlage mit mehreren parallelen Druckmaschinen und einer Stapellogistik und ist auf einen Rücktransport eines z. B. fehlerhaften Stapels vom Bogenanleger der Druckmaschine weg gerichtet.

Die DE 37 39 659 C1 betrifft eine Vorrichtung zur Zuführung eines Stapels von KartonZuschnitten zu einem Magazin einer Karton-Packmaschine, wobei eine mit den Zuschnitten beladene Palette durch ein fahrerloses Transportsystem zum Magazin verbracht werden. Um ein Umkonfektionieren zu vermeiden, wird die Palette bereits beim Hersteller mit den Zuschnitten beladen

Die US 3 180 638 A offenbart eine Vorrichtung für eine Nonstopp-Bogenzufuhr.

Durch die DE 11 2005 002 817 T5 ist ein automatisiertes Materialhandhabungssystem für eine automatisierte Fertigungsumgebung anhand einer Anlage zur Produktion von Halbleiterbauteilen offenbart. Dabei unterhält ein "Losdisponiermittel" einen Kalender, in welchem es Bearbeitungsaufträge und Transportaufträge speichert. Die Disponierung der Transporte und Bearbeitungsaufträge erfolgt dann z. B. unter Anwendung eines Vertragsverhandlungsprotokolls, beispielsweise unter dem Gesichtspunkt des Einhaltens von Terminen, einer effektiven Auslastung von Maschinen oder anderem. Nach einem in Wikipedia mit Stand vom 31.12.2013 veröffentlichten Beitrag ist das JDF-Format als offenes Dateifiormat charakterisiert, welches sich für die grafische branche als Industrie-Standard durchsetzten soll. Es basiert auf XML und soll den direkten Datenaustausch zwischen den EDV-Systemen der unterschiedlichen Anlagenkomponenten ernöglichen.

Die DE 102 45 658 A1 betrifft ein Verfahren und eine Vorrichtung zur automatischen Materialversorgung einer Bearbeitungsmaschine, insbesondere zur automatischen Rollenversorgung einer Rollendruckmaschine, mit einem Materialflusssystem. Eine Planungsebene des Materialflusssystems ist dabei für die auf die anstehenden Produktionen bezogene Verbrauchsberechnung, eine Einlager- und eine Versorgungsstrategie sowie für eine Lager- und Bestandsverwaltung zuständig. Von der Planungsebene erhält eine Koordinationsebene die Informationen, wo wann welche Rolle benötigt wird. Die Koordinationsebene veranlasst und koordiniert die hierzu erforderlichen Lager- und Transportvorgänge. Die konkrete Durchführung der aus der Koorinationsebene erhaltenen Transportaufträge, d. h. die Bewegungssteuerung der anzusprechenden Transportmittel, erfolgt in einer Ausführungsebene.

In der DE 10 2010 041 837 A1 ist ein Verfahren und eine Vorrichtungb zur Steuerung von Transportmitteln in einem Materialtransportsystem einer Rollendruckmaschine offenbart, wobei an einem oder mehreren Kontrollstellen des Transportpfades Lesegeräte Informationen aus einem am Transportmittel angeordneten Informationsträger. Hierüber ist eine exakte Position des Transportmittels feststellbar und ggf. zusätzlich hierzu eine das Transportmittel individualisierende Information auslesbar.

Die DE 10 2005 054 496 B3 betrifft ein Verfahren zur erstellung eines elektronischen Datensastzes, wobei der Datensatz in einem an der Bedruckstoffeinheit gespeichert wird und hinsichtlich von den Bedruckstoff betreffenden Daten aktualisiert wird.

Duch die DE 10 2006 061 119 A1 ist eine Produktionsflusssteuerung für eine Druckerei offenbart, wobei durch einen prozessübergreifenden Transport von an Bedruckstoffe und Druckerzeugnisse gebundenen Daten ein Bedruckstofftransport auf transportpaletten in einer Bogen verarbeitenden Druckerei verbessert werden soll. Hierzu werden an den Transportpaletten dauerhaft oder lösbar Datenspeicher vorgesehen, in welchen Logistikdaten und verarbeitungsdaten von Bogendruckmaschinen speicherbar, akzualisierbar und auslesbar sind. Dadurch können Fehler effizient vermieden werden, die beispielsweise ansonsten dadurch entstehen können, dass Stapelzettel beim Auspacken verloren gehen. Z. B. können auch Bedruckstoffstapel, nicht nicht zhum aktuell abzuarbeitenden Auftrag gehören, aus dem Pfad zur Druckmaschine ausgeschleust werden.

Auch in der DE 10 2006 033 365 A1 kann anhand von mit den Stapeln mitgeführten, Verarbeitungsparameter zum Bedruckstoffstapel enthaltenden Barcodes oder Datenrträgern überprüft werden, ob der Bedruckstoff zum vorgesehenen Auftrag passt. Die mitgeführten Verarbeitungsparameter können auch Auftragsdaten, z. B. in der JDF-Spezifikation genannte Auftragsdaten umfassen.

Nach einem in Wikipedia mit Stand vom 31.12.2013 veröffentlichten Beitrag ist das JDF-Format als offenes Dateifiormat charakterisiert, welches sich für die grafische branche als Industrie-Standard durchsetzten soll. Es basiert auf XML und soll den direkten Datenaustausch zwischen den EDV-Systemen der unterschiedlichen Anlagenkomponenten ernöglichen.

Die DE 20 2007 012 351 U1 betrifft ein Fertigungssystem zur Herstellung von bedruckten Produkten und will den Nachteilen begegnen, die sich bei einer mehrstufigen Fertigung mit Druck- und Stanzmaschinen ohne eine direkte Materialflussverkettung ergäben. Letzteres sei nachteilig im Hinblick auf entstehende Makulatur, erforderliche Lagerflächen und einen erfordere ein kompliziertes Auslagern nach dem Drucken. Sie schlägt vor, die Transporte zwischen Druckmaschinen und Stanzmaschinen auf entsprechenden Transportpfaden durch eine gemeinsame Steuerung zu steuern. Die Steuerung berechnet anhand von Auftragsdaten und der momentanen Auslastung mittels Optimierungsalgorithmen die mittelfristigen Auslastung der Druckmaschinen und Stanzmaschinen und die Transportpfade für die Produkte von jeweils einer Druckmaschine zu einer jeweiligen Stanzmaschine. Entsprechend den so gefundenen Transportpfaden werden die Weichen des Transportsystems geschaltet.

Durch die EP 2 481 566 A1 ist ein Verfahren und ein System zum Abarbeiten von Aufträgen zur Herstellung von Säcken offenbart, wobei einer Steuerung Fertigungsdaten zweier Maschinen übertragen werden und wobei die Steuerung aus den Daten Steuerbefehle zum Produktionsablauf in den wenigstens zwei mit der Steuerung verbundenen Maschinen ermittelt. Dabei kann die Steuerung Berechnungen zu der günstigsten Abfolge von Aufträgen ausführen und diese der Steuerung der Maschinen zugrunde legen. Um während des Betriebes Grenzen zwischen Teilmengen von Säcken oder Sackhalbzeugen auf dem Weg durch das System zu verfolgen, können den durch das System bearbeiteten Teilmengen von einer Steuervorrichtung die Teilmenge charakterisierende Daten zugeordnet werden. Auch können Änderungen im Bearbeitungszustand der betreffenden Teilmenge durch das System nachgetragen werden.

Der Erfindung liegt die Aufgabe zugrunde, ein Verfahren zur Steuerung eines Materialflusses in einer eine Druckmaschine umfassenden mehrstufigen Anlage sowie ein System zur Steuerung des Materialflusses in einer eine Druckmaschine umfassenden Anlage zu schaffen.

Die Aufgabe wird erfindungsgemäß durch die Merkmale des Anspruches 1 bzw. 15 gelöst.

Die mit der Erfindung erzielbaren Vorteile bestehen insbesondere darin, dass eine effektive und/oder sichere Versorgung einer Produktionsanlage mit mehreren Bearbeitungsschritten, insbesondere -stufen unter Minimierung des hierfür erforderlichen Raum- und/oder Ressourcenbedarfs geschaffen wird. Insbesondere von Vorteil ist dies in zur mehrfachen und/oder mehrstufigen Produktion ausgebildeten Produktionsanlagen mit einem entkoppeltem Materialdurchsatz wenigstens zweier aufeinander folgender Bearbeitungsschritte bzw. -stufen, in welchen eine Mehrzahl von Materialeinheiten ausgangsseitig einer Bearbeitungsstufe zunächst zu einem Gebinde zusammengefasst werden, bevor sie als Gebinde einer weiteren Bearbeitung oder einer Zwischenspeicherung zugeführt werden.

Von Vorteil ist im Fall mehrerer Bearbeitungsstufen die Einbindung der Transporte zumindest zwischen zwei Bearbeitungsstufen bzw. -aggregaten, beispielsweise unter Einbeziehen eines Zwischen- oder Pufferlagers, vorteilhaft unter Eibeziehung auch zumindest des letzten Transportabschnittes bei der Anlieferung zum ersten vorzunehmenden Bearbeitungsschritt. Besonderes große Vorteile ergeben sich für Anlagen mit wenigstens drei Bearbeitungsschritten bzw. -stufen, z. B. zumindest einem bedrucken, einem Stanzen und zumindest einem Weiterverarbeiten, wobei in die Materialflusssteuerung zumindest der letzte Transportabschnitt zum ersten Bearbeitungsschritt, als auch die Transportpfade zwischen dem ersten und zweiten, sowie dem zweiten und dem dritten Prozessschritt durch die Materialflusssteuerung gesteuert sind bzw. werden, wobei dazwischen auch Wege zu und von einem oder mehreren Pufferlager n eingeschlossen sein können. In derart komplexen Prozessen kann die Materialflusssteuerung ebenfalls für effektive Abläufe sorgen.

Durch das System zur Materialflusssteuerung wird beispielsweise auch ein bevorzugt vorhandenes Pufferlager verwaltet.

In einem auch für sich betrachtet besonders vorteilhaften Teilaspekt für die Ausführung einer Anlage bzw. eines Systems ist eine Steuerung des Materialflusses über eine Materialflusssteuerung vorgesehen, welche Zugriff auf Daten zu anstehenden Aufträgen, Zugriff zu Daten aus einer Produktionsplanung und Zugriff zu den Bearbeitungsstatus von zu handhabenden Gebinden repräsentierenden Daten sowie eine implementierte Logik aufweist, durch welche unter Verwendung derartiger Daten - eigenständig oder auf einen Anstoß hin - Transportaufträge generiert und an Steuermittel, insbesondere eine Fahrzeugsteuerung, von für den Transport vorgesehener fahrerloser Transportmittel übermittelt werden. Dies gilt zumindest für den in die Materialflusssteuerung integrierten Teil der Anlage, beispielsweise zumindest einer oder mehrerer Druckmaschinen und mindestens einem oder mehreren eines weiteren Typ Bearbeitungsaggregates, z. B. einer oder mehrerer Stanzvorrichtjungen, und Teil der Transportmittel, z. B. auf zumindest den der Druckmaschine eingangsseitig direkt vor- und ausgangsseitig direkt nachgeordneten Transportpfaden zu einem stromabwärtigen weiteren Aggregat und/oder zu einem Pufferlager.

Von besonderem Vorteil ist eine Ausführung der Anlage und/oder des Systems zur Steuerung des Materialflusses, wobei der Transport der Gebinde, insbesondere der als Bogenstapel ausgebildeten Gebinde, von einem Eingangslager zu einem Bearbeitungsaggregat hin und/oder zwischen einem Bearbeitungsaggregat und einem nachfolgenden Bearbeitungsaggregat hin automatisiert unter Verwendung von fahrerlosen Transportmitteln erfolgt, denen entsprechende Transportaufträge von einer einer Mehrzahl von Transportmitteln des selben oder eines verschiedenen Typs übergeordneten Materialflusssteuerung übermittelt werden. In einer besonders vorteilhaften Weiterbildung umfasst das System neben der Materialflusssteuerung eine mit diesem verbundene oder in diese integrierte Lagerverwaltung, wobei Auslageranweisungen oder entsprechende Transportaufträge an Transportmittel des Lagers z. B. ebenfalls durch die Materialflusssteuerung generiert werden.

Bevorzugt erfolgt sowohl ein Transport auf zumindest einem letzten Teil der Transportstrecke hin zu einem Bearbeitungsaggregat sowie ein Transport auf zumindest einem ersten Teil der Transportstrecke weg vom Bearbeitungsaggregat durch fahrerlose Transportmittel, deren Steuermittel den entsprechenden Transportauftrag zwischen einer Abholposition und einer Lieferposition von der übergeordneten Materialflusssteuerung erhalten. Die bevorzugt als fahrerlose Transportfahrzeuge ausgebildeten Transportmittel können hierbei als mechanisch auf einer Transportstrecke geführte, insbesondere schienengebundene Transportfahrzeuge eines mechanisch auf eine auf mechanischer Führung beruhenden Transportsystems oder als berührungslos, d. h. ohne mechanische Führung, entlang einer Transportstrecke geführtes Transportfahrzeug eines entsprechend eingerichteten Systems (FTS) ausgeführt sein. Zumindest zwischen dem Ausgang der ersten, auf die Materialeinheiten wirkenden Bearbeitungsstufe und einem Eingang z6ur zweiten auf die Materialeinheiten wirkenden Bearbeitungsstufe und einem ggf. im Prozess dazwischen vorgesehenen Lager und/oder für den Rücktransport von leeren Systemtransporthilfsmitteln sind die fahrerlosen Transportfahrzeuge bevorzugt berührungslos geführt ausgebildet. Für den Transport aus dem Lager zur ersten Bearbeitungsstufe oder einer vorgeordneten Konditionierung kann - zumindest auf einem Teilstück - ein mechanisch geführtes fahrerloses Transportfahrzeug vorgesehen sein.

Von besonderem Vorteil ist die Materialflusssteuerung dazu ausgebildet, über wenigstens eine entsprechend eingerichtete Schnittstelle Daten zu anstehenden Aufträgen und Daten eines Produktionsplanes aus einem Planungs- und/oder Steuersystem der Produktionsanlage zu erhalten.

Bevorzugt ist die Anlage bzw. das System zur Steuerung des Materialflusses mit Signalverbindungen zwischen der Materialflusssteuerung und den in das Materialflusssystem eingebundenen Bearbeitungsaggregaten und mit einer entsprechend eingerichteten Schnittstelle ausgebildet, um Angaben zum Zustand der Gebinde und/oder Angaben zu einem Staus des Bearbeitungsaggregates von den in das das Materialflusssystem eingebundenen Bearbeitungsaggregaten bzw. dort zugeordneten Steuereinrichtungen und/oder Signalgebern zu empfangen. Bevorzugt ist das Materialflusssystem dazu ausgebildet, die Daten zum aktuellen Zustand von Gebinden in einem Satz von entsprechenden Angaben in Form einer Datei zu empfangen. Von besonderem Vorteil ist eine Ausführung, in welcher zwischen der Materialflusssteuerung und den in die Materialflusssteuerung und/oder das Materiallogistiksystem integrierten Aggregaten - z. B. zumindest einer Druckmaschine und einer weiteren, bevorzugt mechanischen Bearbeitungsstufe - ein Austausch bzw. eine Übermittlung einer die Angaben zum Zustand des - insbesondere am Ausgang der betreffenden Bearbeitungsstufe vorliegenden - Stapels enthaltenden Datei in der Art einer elektronischen Gebindekarte erfolgt bzw. erfolgen kann. Alternativ hierzu kann zwar eine o. g. Übermittlung gebindespezifischer Daten zur Materialflusssteuerung erfolgen, die zu aktualisierenden Daten selbst jedoch - z. B. auf einem Schreib-Lese-Speicher (beispielsweise einem Transponder) durch das Gebinde bzw. durch das jeweils aktuelle Transporthilfsmittel mitgeführt sein.

Insbesondere sieht eine erfindungsgemäße Lösung für ein Verfahren zur Steuerung eines Materialflusses in einer eine Druckmaschine und mindestens ein weiteres, bogenförmige Materialabschnitte (02.j) verarbeitendes Bearbeitungsaggregat umfassenden mehrstufigen Anlage (01), wobei eine Vielzahl zu bearbeitender Materialabschnitte in einem Gebinde durch wenigstens ein erstes Transportmittel zu einem als Druckmaschine ausgebildeten Bearbeitungsaggregat transportiert werden, die Materialabschnitte die Druckmaschine zumindest einmal durchlaufen und dabei zumindest einmal bedruckt werden und die zumindest einfach bedruckten Materialabschnitte in mindestens einem Gebinde durch das wenigstens eine erste oder durch ein davon verschiedenes zweites Transportmittel zur weiteren Bearbeitung von der Druckmaschine weg zu einem weiteren, von einer Druckmaschine verschiedenen Bearbeitungsaggregat oder alternativ zur Zwischenlagerung zu einer Lagerposition eines Lagers transportiert werden vor, dass zumindest für Transporte von der Druckmaschine weg zum weiteren Bearbeitungsaggregat oder zur Lagerposition hin Transportaufträge durch Datenverarbeitungsmittel einer Materialflusssteuerung generiert werden, und die betreffenden Transporte auf der Basis dieser durch die Materialflusssteuerung generierten Transportaufträge erfolgen.

Eine erfindungsgemäße Lösung zur Handhabung von Stapeln aus Materialabschnitten in einer Anlage zur Herstellung von Produkten aus ursprünglich bogen- oder plattenförmigen Materialabschnitten in mehreren Bearbeitungsschritten, wobei durch wenigstens ein Handhabungsaggregat ein Stapel mit zu verarbeitenden Materialabschnitten auf ein Systemtransporthilfsmittel verbracht wird, der Stapel stromabwärts des Handhabungsaggregates durch ein erstes Transportmittel zu einem als Druckmaschine ausgeführten Bearbeitungsaggregat transportiert wird, in welchem die Materialabschnitte ein- oder mehrfach bedruckt werden, und ausgangsseitig der Druckmaschine die bedruckten Materialeinheiten auf einem weiteren Transporthilfsmittel in wenigstens einem Stapel zusammengefasst werden, sieht vor, dass der auf dem weiteren Transporthilfsmittel zusammengefasste Stapel mit den wenigstens einmal bedruckten Materialabschnitten stromabwärts der Druckmaschine durch ein erstes oder ein zweites Transportmittel wahlweise entlang eines Transportpfades von der Druckmaschine zur weiteren Bearbeitung einem weiteren Bearbeitungsaggregat oder entlang eines abweichenden Transportpfades für eine der weiteren Bearbeitung im Prozessablauf vorgeordnete Zwischenspeicherung einer außerhalb des erstgenannten Transportpfades liegenden Lagerposition eines Lagers zugeführt wird, und mittels des mindestens einen ersten, des zweiten oder eines dritten Transportmittels entlang eines Transportpfades ein leeres Systemtransporthilfsmittel von einer dem Eingangsbereich der Druckmaschine zuzuordnenden Abnahmeposition einzeln oder zu mehreren zu einer Vorlageposition des für das Umsetzen vorgesehenen Handhabungsaggregates zurückgefördert wird.

Ein erfindungsgemäßes System zur Steuerung des Materialflusses in einer eine Druckmaschine sowie eine oder mehrere weitere bogenverarbeitende Bearbeitungsaggregate umfassenden Anlage sieht eine Datenverarbeitungsmittel umfassenden Materialflusssteuerung vor, die programmtechnisch dazu eingerichtet ist, aus in elektronischer Form vorliegenden Daten zu einer Auftragsbeschreibung und zu einer Ablauf- und Ressourcenplanung einen Transportauftrag für den Transport eines Stapels aus zu bearbeitenden Materialabschnitten von einer definierten Startposition zu einer definierten Zielposition zu generieren und einer einem oder mehreren Transportmitteln zugeordneten Transportmittelsteuerung zuzuleiten und/oder dazu eingerichtet ist.

Eine erfindungsgemäße Vorrichtung zur Handhabung von Stapeln von Materialabschnitten in einer Anlage zur Herstellung von Verpackungs- und/oder Druckerzeugnissen in mehreren Bearbeitungsschritten, umfassend wenigstens ein erstes, als Druckmaschine ausgebildetes Bearbeitungsaggregat, durch welches die Materialabschnitte ein- oder mehrfach bedruckbar sind, wenigstens eine der Druckmaschine im Transportweg vorgeordnetes Handhabungsaggregat, durch welches ein Stapel mit zu verarbeitenden Materialeinheiten auf ein sich vom vorherigen Transporthilfsmittel unterscheidendes Systemtransporthilfsmittel verbringbar ist, ausgangsseitig der Druckmaschine einen Stapelausleger, welcher zur Aufnahme eines weiteren Transporthilfsmittels ausgebildet ist und durch welchen in der Druckmaschine bedruckte Materialeinheiten in wenigstens einem neuen Stapel zusammenzufassen sind, einen Transportpfad, über welchen der neue Stapel mit den bedruckten Materialeinheiten durch mindestens ein Transportmittel entlang eines Transportpfades von der Druckmaschine zur weiteren Bearbeitung einem weiteren Bearbeitungsaggregat zuführbar ist, vor, dass ein weiterer Transportpfad vorgesehen ist, über welchen der neue Stapel anstatt direkt zum weiteren Bearbeitungsaggregat verbracht zu werden durch das mindestens eine oder ein weiteres Transportmittel für eine Zwischenspeicherung einer Lagerposition eines Lagers zuführbar ist, und dass ein Transportpfad vorgesehen ist, auf welchem mittels des mindestens einen oder mittels eines weiteren Transportmittels ein leeres Systemtransporthilfsmittel von einer dem Eingangsbereich der Druckmaschine zuzuordnenden Abnahmeposition einzeln oder zu mehreren zurück zu einer Vorlageposition des für das Umsetzen vorgesehenen Handhabungsaggregates förderbar ist.

Die genannten erfindungsgemäßen und besonders vorteilhaften Ausführungen können durch der Beschreibung und/oder den Ansprüchen einzeln oder in Kombination zu entnehmende Merkmale weitergebildet sein bzw. werden.

Ausführungsbeispiele der Erfindung sind in den Zeichnungen dargestellt und werden im Folgenden näher beschrieben.

Es zeigen:

Fig. 1 eine schematische Darstellung eines Beispiels für eine zur mehrfachen, insbesondere mehrstufigen Produktion ausgebildeten Produktionsanlage;

Fig. 2 ein Beispiel für ein mit einer Produktionsanlage zu produzierenden Produktes a) als Zwischenprodukt oder als Halbzeug und b) als Fertigware;

Fig. 3 ein Beispiel für die materialseitige und steuerungstechnische Anbindung eines Bearbeitungsaggregates;

Fig. 4 eine schematische Darstellung von Phasen einer unterbrechungsfreien Materialzufuhr;

Fig. 5 eine schematische Darstellung von Phasen einer unterbrechungsfreien Materialabfuhr;

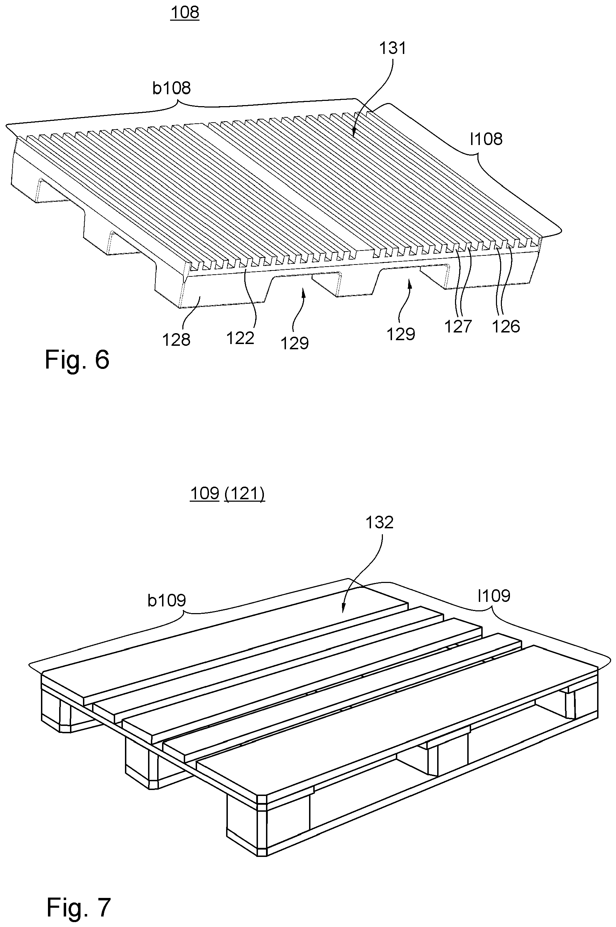

Fig. 6 eine perspektivische Darstellung eines Beispiels für die Ausführung eines in der Anlage zirkulierenden Systemtransporthilfsmittels;

Fig. 7 eine perspektivische Darstellung eines Beispiels für die Ausführung eines normiertes Transporthilfsmittel;

Fig. 8 eine perspektivische Darstellung eines Beispiels für die Ausführung eines als Wende- und/oder Konditioniervorrichtung ausgebildeten Handhabungsaggregates;

Fig. 9 eine perspektivische Darstellung eines Beispiels für die Ausführung eines als Wendeaggregat für Transporthilfsmittel ausgebildeten Handhabungsaggregates mit einem Stapel gewendeter Transporthilfsmittel;

Fig. 10 Darstellungen für die Ausführung von als Flurförderfahrzeuge ausgebildeten Transportmitteln;

Fig. 11 eine Prozesskettendarstellung von Bearbeitungs- und Handhabungsprozessen bei der Herstellung eines Produktes;

Fig. 12 eine Darstellung von Informationsflüssen in einer Anlage zur zur mehrfachen und/oder mehrstufigen Produktion ausgebildeten Produktion ausgebildeten Herstellung von Produkten;

Fig. 13 eine schematische Darstellung für ein Beispiel einer Systemarchitektur zur Materialflusssteuerung in einer zur mehrfachen und/oder mehrstufigen Produktion ausgebildeten Produktionsanlage;

Fig. 14 eine schematische Darstellung einer dateibasierten Informationsübermittlung am Beispiel auftragsrelevanter Daten;

Fig. 15 eine schematische Darstellung einer zugriffsbasierten Informationsübermittlung am Beispiel auftragsplanrelevanter Daten;

Fig. 16 eine schematische Darstellung zu einer Materialverwaltung und die Interaktion mit einem Erfassungsmittel;

Fig. 17 eine schematische Darstellung für den Vorgang einer Änderung oder einer Neuanlage eines Satzes von Gebindedaten;

Fig. 18 eine schematische Darstellung zur Bereitstellung eines Satzes von Gebindedaten aus der Materialverwaltung;

Fig. 19 ein vereinfachtes Blockschaltbild mit einer Darstellung von Kommunikationspfaden und -interaktionen;

Fig. 20 eine schematische Darstellung für das Zusammenwirken der für die Steuerung der Materialflüsse zusammen wirkenden Teilsysteme.

Eine materialver- und/oder bearbeitende Anlage 01, insbesondere Produktionsanlage 01, ist zur Herstellung eines Produktes 03 aus Rohmaterial in einem bevorzugt mehrfachen, insbesondere mehrstufigen, und/oder diskontinuierlichen Prozess P, z. B. Produktionsprozess P, ausgebildet. Als diskontinuierlicher Produktionsprozess P ist hier ein Prozess P mit wenigstens einem Bearbeitungsschritt P.x verstanden, bei welchem eine Mehrzahl von in diesem Prozessschritt P.x nacheinander bearbeiteter Materialeinheiten ausgangsseitig des Prozessschrittes P.x - im Gegensatz zu beispielsweise einem kontinuierlichen Weiterfluss - zunächst zu einem Gebinde, zusammengefasst werden, bevor sie als Gebinde einer nächsten Bearbeitung oder einer Speicherung zugeführt werden. Dies kann beispielsweise ein Bedrucken oder anders geartetes Bearbeiten von stückigem Material sein. Als mehrfacher Bearbeitungsprozess ist ein Prozess verstanden, durch welchen in welchem Rohmaterial, beispielsweise zu bearbeitende Materialeinheiten 02.0, in einem oder in mehreren auf einen selben Produktionsauftrag A, kurz Auftrag A, bezogenen Gebinden 04.0 nacheinander in wenigstens zwei Prozessschritten P.x, sich in der Art der Bearbeitung, z. B. einer Bearbeitungsstufe S.q, wiederholende oder sich zumindest zum Teil unterscheidende, Prozessschritten P.x, bearbeitet wird bzw. bearbeitbar ist (P.x mit $x = \epsilon\ \mathbb{N},\ x \geq 2$). Dies kann beispielsweise ein mehrfaches Bedrucken oder anders geartetes Bearbeiten in einer selben Bearbeitungsstufe S.q mit derselben oder einer anderen Ressource sein.

Als mehrstufiger und diskontinuierlicher Produktionsprozess P ist ein Prozess P zu verstehen, in welchem Rohmaterial, beispielsweise zu bearbeitende Materialeinheiten 02.0, in einem oder in mehreren auf einen selben Produktionsauftrag A, kurz Auftrag A, bezogenen Gebinden 04.0 nacheinander durch wenigstens zwei, insbesondere sich in der Art der Bearbeitung unterscheidende, Bearbeitungsstufen S.q bearbeitet wird bzw. bearbeitbar ist (mit q = 1, 2, 3,... s; $s\ \epsilon\ \mathbb{N},\ s \geq 2$, wobei s die Anzahl der möglichen Bearbeitungsstufen S.q bezeichnen soll). Die Bearbeitungsstufen S.q sind mit voneinander entkoppeltem Materialdurchsatz betreibbar bzw. betrieben. Die zu bearbeitenden Materialeinheiten 02.0 können bevorzugt als bereits einzeln im Gebinde 04.0, z. B. einem Materialstapel 04.0, vorliegende Werkstücke 02.0 oder Materialabschnitte 02.0 oder ggf. auch als noch ungeschnittene Gebindeabschnitte 02.0, z. B. Materialabschnitte 02.0, eines zusammenhängenden, prozessabwärts ggf. zu zerteilenden Gebindes 04.0, z. B. einer Materialrolle 04.0, sein.

In einem derartigen, bevorzugt mehrfachen, insbesondere mehrstufigen, und/oder diskontinuierlichen Produktionsprozess P wird ein in einer i-ten Bearbeitungsstufe S.i (q = i, $i\ \epsilon\ \mathbb{N},\ i \leq s$) zu bearbeitendes Gebinde 04.j ($j\ \epsilon\ \mathbb{N}_0,\ j < s$, insbesondere j = i-1) mit einer Vielzahl von z. B. zuvor j-fach bearbeiteten Materialeinheiten 02.j, z. B. Werkstücken 02.j desselben Typs und des selben Bearbeitungsstatus oder z. B. die Gebindeabschnitte 02.j eines zusammenhängenden Gebindes 04.j, dieser i-ten Bearbeitungsstufe S.i und nach dessen Bearbeitung das Gebinde 04.j+1 mit den nun (j+1)-fach bearbeiteten Materialeinheiten 02.j+1, z. B. Werkstücken 02.j+1 bzw. Gebindeabschnitten 02.j+1, bis auf ggf. entfernten Ausschuss, vorzugsweise insgesamt oder ggf. in mehreren Chargen von dort direkt oder nach einer Zwischenlagerung einer im Prozess P nachfolgenden Bearbeitungsstufe S.i+1 zugeführt. Beispielsweise wird ein in einer ersten Bearbeitungsstufe S.1 (q = l) zu bearbeitendes Gebinde 04.0 (j = 0) mit einer Vielzahl von noch unbearbeiteten Materialeinheiten 02.0, z. B. Werkstücken 02.0 desselben Typs oder Gebindeabschnitten 02.0, dieser ersten Bearbeitungsstufe S.1 und nach dessen Bearbeitung das Gebinde 04.1 mit den nun einfach bearbeiteten Materialeinheiten 02.1, z. B. Werkstücken 02.1 bzw. bearbeiteten Gebindeabschnitten 02.1, bis auf ggf. entfernten Ausschuss, insgesamt oder ggf. in mehreren Chargen von dort direkt oder nach einer Zwischenlagerung der im Prozess P nachfolgenden Bearbeitungsstufe S.2 (x = i+1 = 2) zugeführt wird. Ein die letzte für die Produktion vorgesehene Bearbeitungsstufe S.s (x = s) verlassendes Gebinde 04.s umfasst schließlich die bzw. einen Teil der Produkte 03, die durch den Produktionsprozess P aus durch die mehrfache, insbesondere mehrstufige Bearbeitung der ursprünglich der Prozesskette zugeführten Materialeinheiten 02.0, z. B. Werkstücke 02.0, hergestellt wurden bzw. sind. Für die Variante mit der Zufuhr ungeschnittener Gebindeabschnitte 02.0 kann dieses Gebinde 04.0 im Laufe des Prozesses P in einer der Bearbeitungsstufen S.q, ggf. in einer den übrigen bearbeitungsstufen S.x vorangestellten ersten Bearbeitungsstufe S.1, in einzelne Materialabschnitte 02.j geschnitten sein. Alternativ können die Produkte 03 am Prozessende als Materialabschnitte eines unzerteilten Gebindes vorliegen.

Im Gegensatz zu kontinuierlichen mehrfachen, insbesondere mehrstufigen Prozessen, z. B. entlang eines Fließbandes oder anderen kontinuierlichen Fördersystems, ist der Materialfluss durch die unabhängigen Bearbeitungsstufen S.q und deren Betrieb z. B. innerhalb derjenigen Grenzen unabhängig voneinander und entkoppelt, die durch ein entsprechendes Management bei der Bereitstellung der zu bearbeiteten Materialeinheiten 02.j bzw. Gebinden 04.j an einer Vorlage der betreffende Bearbeitungsstufe S.i und durch das jeweilige Entfernen der z. B. als Zwischenprodukte vorliegenden Materialeinheiten 02.j+1 und Produkte 03 bzw. deren Gebinde 04.j; 08 von einer Auslage der gerade durchlaufenen Bearbeitungsstufe S.i gegeben sind.

Die nachfolgenden Erläuterungen erfolgen zwar weitgehend am Beispiel der bevorzugten Ausführung mit bereits als einzelne Werkstücke 02.0 vorliegenden zu bearbeitenden Materialeinheiten 02.0, sie sind jedoch - wo sinnvoll möglich und auch nicht ausdrücklich ausgenommen - auf die Verarbeitung von Materialeinheiten 02.0 beider Ausführungsvarianten zu verallgemeinern, also auch - zumindest was die Bearbeitung in der ersten Bearbeitungsstufen S.1 betrifft - die Be- bzw. Verarbeitung von Materialabschnitten 02.0 noch zusammenhängender Gebinde 04.0 zu übertragen. Für eine Verallgemeinerung tritt im Folgenden z. B. an die Stelle des Ausdruckes "Werkstück" der Ausdruck "Materialabschnitt" oder "Materialeinheit" und an die Stelle des Ausdruckes "Stapel" z. B. der allgemeinere Ausdruck "Gebinde". Für eine Übertragung auf die zweitgenannte Variante tritt im Folgenden z. B. an die Stelle des Ausdruckes "Werkstück" der Ausdruck "Materialabschnitt" oder "Gebindeabschnitt" und an die Stelle des Ausdruckes "Stapel" z. B. der Ausdruck "Materialrolle".

In einer nicht dargestellter Ausführungsvariante können die als Werkstücke 02.0 einer selben Ausprägung zu Produkten 03 zu verarbeitenden Materialeinheiten 02.0 eines Gebindes 04.0 durch eine in der Prozessführung der ersten dargestellten Bearbeitungsstufe S.1 vorgeordneten Bearbeitungsstufe (entspräche in der Systematik der Figuren z. B. einer Bearbeitungsstufe "S.0"), z. B. durch ein Formatschneiden mittels einer entsprechenden Schneideinrichtung, aus größerformatigen Rohmaterialgebinden, z. B. aus größeren Materialplatten bzw. -bogen oder aus von Rohmaterialrollen abzuwickelndem Rohmaterial, bereitgestellt und zu den zu verarbeitenden Gebinden 04.0 einer bestimmten Anzahl von Werkstücke 02.0 derselben Ausprägung zusammengefasst werden bzw. sein. Bevorzugt sind bzw. werden die Werkstücke 02.0 der selben Ausprägung bzw. die diese umfassenden Gebinde 04.0 jedoch - wie exemplarisch für eine hier bevorzugte Ausführung der Produktionsanlage 01 unten dargelegt - im Bereich einer Anlieferung 06, z. B. einem Wareneingang 06, der Produktionsanlage 01 zugeführt. Das durch die Produktionsanlage 01 durch mehrere Bearbeitungsstufen S.q hergestellte und ggf. beim Packen und Palettieren zu neuen, auftragsbezogenen Gebinden 03, z. B. Produktgebinden 03, zusammen gefasste Produkt 08 verlässt - als Fertigware oder als durch den Kunden oder einen Endkunden zu vervollständigendes Halbzeug, z. B. als Zuschnitte, - nach beispielsweise einem Verpacken die Produktionsanlage 01 an einem Produkt- oder Warenausgang 07.

Obgleich die nachfolgende Darstellung der sowohl für sich alleine oder in Kombination besonders vorteilhaften Lösungen und Lösungteile am Beispiel der besonders bevorzugten Ausführung einer als Verpackungsroh- und/oder Bedruckstoffe ver- und/oder bearbeitenden und/oder einer Verpackungs- und/oder Druckerzeugnisse 03 produzierenden mehrfachen, insbesondere mehrstufigen Produktionsanlage 01 erfolgt, soll die Lehre nicht allein auf diese Art Anlage beschränkt sein, sondern ist auch auf andere mehrfache, insbesondere mehrstufige Herstellungs- und/oder Produktionsanlagen 01 mit z. B. voneinander unabhängig betreibbaren Bearbeitungsstufen S.q anzuwenden und zu übertragen. In einer derartigen Herstellungs- und/oder Produktionsanlagen 01 mit mindestens zwei Bearbeitungsstufen S.q wird bzw. ist z. B. eine Mehrzahl, insbesondere Vielzahl von Materialeinheiten 02.0 mit einer selben Beschaffenheit (Material, Bearbeitungszustand) als Gebinde 04.0 einer ersten der mindestens zwei Bearbeitungsstufen S.i zugeführt bzw. zuführbar, am Ausgang dieser Bearbeitungstufe S.i ein Gebinde 04.1 mit einer Mehrzahl, insbesondere Vielzahl bearbeiteter Materialeinheiten 02.0 gebildet bzw. bildbar, dieses Gebinde 04.1 mit bearbeiteten Materialeinheiten 02.1 im Anschluss an die Fertigstellung des Gebindes 04.1 wahlweise direkt oder nach einem Zwischenlagern P.15; P.20 zu einem späteren Zeitpunkt und/oder unter Verwendung wenigstens eines autonom vom Betreib der beiden Bearbeitungsstufen S.i; S.i+1 betreibbaren Fördermittels der zweiten der mindestens zwei Bearbeitungsstufe S.i+1, z. B. einer mechanischen Bearbeitung, S.2; S.3, zugeführt bzw. zuführbar. Dasselbe gilt in einer bevorzugten Weiterbildung zwischen der zweiten und einer weiteren Bearbeitungsstufe S.i+2. In einer Weiterbildung kann die Anlage 01 dazu ausgebildet sein, dass im Anschluss an die Fertigstellung des Gebindes 04.1 nach der ersten der genannten Bearbeitungsstufen S.i dieses Gebinde 04.1 wahlweise anstatt zur zweiten - direkt oder über ein Zwischenlagern P.15, P.20 - zu einer weiteren Bearbeitungsstufe S.i+2 gefördert wird bzw. werden kann.

Die zur mehrfachen im o. g. Sinne diskontinuierlichen Bearbeitung, insbesondere mehrstufig und diskontinuierlich ausgebildete Produktionsanlage 01 ist bevorzugt als eine Produktionsanlage 01 ausgebildet, durch welche Verpackungsroh- und/oder Bedruckstoffe, insbesondere Materialeinheiten 02.0 bzw. Werkstücke 02.0 aus Verpackungsroh- und/oder Bedruckstoffmaterial, zu als Verpackungs- und/oder Druckerzeugnisse 03, z. B. zu als Verpackungs- und/oder Druckprodukte 03, ausgebildeten Produkten 03 ver- und/oder bearbeitet werden bzw. werden können. Dabei sollen unter dem Begriff der Verpackungs- und/oder Druckerzeugnisse 03 bzw.

Verpackungs- und/oder Druckprodukte 03 sowohl Enderzeugnisse bzw. -produkte, beispielsweise bereits gefalzte und/oder geklebte Verpackungsbehältnisse, wie z. B. offene oder verschließbare Schachteln, Kartons oder Trays, als auch an Kunden abzugebende Halberzeugnisse, beispielsweise gestanzte und z. B. bereits eine das Falzen entlang der Falzlinien erleichterndes Rillen umfassende und/oder bereits ausgebrochene Verpackungsrohlinge, wie z. B. bereits ausgestanzte und ggf. vorgerillte und ggf. bereits ausgebrochene Falzbogen, z. B. als sog. Zuschnitte, für durch den Kunden oder Endkunden durch Falten und ggf. Stecken und/oder Kleben fertigzustellenden Faltschachteln, Kartons oder Trays, gefasst sein. Derartige Fertig- und Halberzeugnisse sollen vom Begriff der Verpackungserzeugnisse mit umfasst sein. Auch vereinzelte oder als Materialabschnitte auf einer Rolle vorliegende (Verpackungs-) Materialeinheiten 02.j, wie beispielsweise Folien, Kartonagen oder Wellpappe, kann ggf. hiervon umfasst sein.

In hier dargelegter und vorteilhafter Ausführung ist die Anlage 01 als eine Produktionsanlage 01 ausgeführt, welche als eine der Bearbeitungsstufen S.1, S.1' einen ein- oder mehrfachen Stoffauftrag S.1, S.1', z. B. in Form eines ein- oder mehrfachen Bedruckens S1.1 und/oder Beschichtens S1.1' (z. B. ein Lackieren und/oder ein Laminieren und/oder ein Folienkaschieren und/oder einen Prägefoliendruck und/oder ein Blindprägen und/oder ein Kaltfolienveredeln und/oder ein Laminieren und/oder ein flächiger Leimauftrag) umfasst. Hierzu umfasst die Produktionsanlage 01 wenigstens ein als Druckmaschine 11 ausgebildetes Aggregat 11, z. B. Bearbeitungsaggregat 11, und/oder wenigstens ein als Beschichtungsaggregat 12 zum Beschichten und/oder zur Druckveredelung ausgebildetes Aggregat 12, z. B. Bearbeitungsaggregat 12. In der bevorzugten Ausführung stellt das Aggregat 11; 12 ein bogenver- und/oder bearbeitendes Aggregat 11; 12 dar, wobei hierunter neben der Be- bzw. Verarbeitung von Bogen im o. g. engen Sinne im weiteren Sinne das Be- bzw. Verarbeitung bogen- und plattenartiger Materialeinheiten 02.j gefasst sein kann.

Alternativ zum Beschichten S.1' kann die Bearbeitungsstufen S.1' für den Stoffauftrag S.1' als ein Kaschieren S.1' bei der Herstellung von mehrlagigen Produkten 03, wie z. B. Wellpappenbogen, oder hieraus zu formenden Produkten 03 ausgebildet sein.

Zusätzlich umfasst die Produktionsanlage 01 wenigstens eine weitere, mechanisch auf die Materialeinheiten 02.j, z. B. Werkstücke 02.j, bzw. Gebinde 04.j einwirkende Bearbeitungsstufe S.2 (S.2'; etc.); S.3; S.5. Hierzu umfasst die Produktionsanlage 01 wenigstens ein sich in der Art der Bearbeitung von den erstgenannten Bearbeitungsaggregaten 11; 12 unterscheidendes Aggregat 13; 14, 18, z. B. Bearbeitungsaggregat 13; 14; 18 zur mechanischen Bearbeitung S.2 (S.2' etc.; S.3; S.5 und ggf. ein oder mehrere weitere Aggregate 16; 17, z. B. Bearbeitungsaggregate 16; 17 für ein Kleben S.4; S.4', z. B. ein Kleben S.4 von Laschen und/oder ein Kleben S.4' von Fenstern.

Diese wenigstens eine weitere mechanische Bearbeitungsstufe S.2 (S.2'; S.2'''; S.2'') kann bzw. können durch ein ein- oder mehrfaches Ab- oder Ausschneiden S.2 (S.2'), z. B. bevorzugt ein Stanzen S.2 und/oder ggf. ein nicht dargestelltes Querschneiden (S2') von Materialabschnitten 02.j aus einem bahnförmigen Gebinde 04.j, gegeben sein. Hierbei kann die Produktionsanlage 01 als Bearbeitungsaggregat 13 wenigstens eine Stanzvorrichtung 13, z. B. einen sog. Stanzautomat 13, und/oder wenigstens eine nicht dargestellte Querschneideinrichtung, z. B. in Art eines Pianoauslegers, umfassen. Mit einem Stanzens S.2 bzw. einer Stanzvorrichtung 13 ist die Produktionsanlage 01 beispielsweise zur Herstellung von bedruckten und/oder beschichteten Verpackungsprodukten 03, d. h. bedruckten und/oder beschichteten Verpackungen oder Verpackungshalberzeugnissen, ausgebildet. Zusätzlich oder stattdessen kann als wenigstens eine weitere mechanische Bearbeitungsstufe ein ein- oder mehrstufiges bzw. mehrfaches Umformen (S.2''; S.2''') , z. B. ein Prägen (S.2'') der Werkstückoberfläche mit einem Prägewerkzeug oder ein Wellen des noch unbearbeiteten oder bereits ein- oder mehrfach bearbeiteten Werkstückes 02.j durch eine Riffelwalze, vorgesehen sein. Hierbei kann die Produktionsanlage 01 als Bearbeitungsaggregat wenigstens eine nicht dargestellte Prägevorrichtung und/oder wenigstens eine nicht dargestellte Welleinrichtung, z. B. mit einer Riffelwalze, umfassen.

In der bevorzugten Ausführung stellt das mechanische Bearbeitungsaggregat 13 ebenfalls ein (mechanisch) bogenver- und/oder bearbeitendes Aggregat 13 dar, wobei hierunter neben der Be- bzw. Verarbeitung von Bogen im o. g. engen Sinne im weiteren Sinne das Be- bzw. Verarbeitung bogen- und plattenartiger Materialeinheiten 02.j gefasst sein kann

Stattdessen oder zusätzlich zu einer oder mehreren der der genannten mechanischen Bearbeitungsstufen S.2 (S.2'; S.2"), bevorzugt zusätzlich zur Bearbeitungsstufe S.2 des Stanzens S.2, ist in vorteilhafter Ausführung der Produktionsanlage 01 bzw. des Produktionsprozesses P als mechanisch auf die Materialeinheiten 02.j, z. B. Werkstücke 02.j, bzw. Gebinde 04.j einwirkende Bearbeitungsstufe S.3 ein räumliches Verformen S.3, insbesondere ein Falzen S.3, der z. B. bereits bedruckten und/oder beschichteten und ggf. bereits quergeschnittenen und/oder gestanzten Werkstücke 02.1; 02.1' vorgesehen. Hierbei kann die Produktionsanlage 01 als Bearbeitungsaggregat 14 wenigstens ein als Falzvorrichtung 14 ausgebildetes Aggregat 14 zur mechanischen Bearbeitung umfassen. Mit dem Ausgestaltungsmerkmal des Falzens S.3 ist die Produktionsanlage 01 bevorzugt zur Herstellung von bedruckten und/oder beschichteten Verpackungsprodukten 03, d. h. bedruckten und/oder beschichteten Verpackungen ausgebildet.

In einer Ausführungsvariante zu den obigen Ausführungen kann anstelle des ein- oder mehrstufigen bzw. mehrfachen Bedruckens S.1 und/oder Beschichtens S.1'ein ein- oder mehrstufiges bzw. mehrfaches Umformen (S.2"; S.2'''), z. B. ein Prägen (S.2") der Werkstückoberfläche mit einer ein Prägewerkzeug umfassenden Prägevorrichtung oder ein Wellen (S.2''')' des noch unbearbeiteten oder bereits ein- oder mehrfach mechanisch bearbeiteten Werkstückes 02.j mit einer z. B. eine Riffelwalze umfassenden Welleinrichtung vorgesehen sein.

In einer Alternative zu den o. g. Ausführungen und Ausführungsvarianten oder aber in deren Weiterbildung kann in einer vorteilhaften Ausgestaltung zusätzlich ein ein- oder mehrstufiges bzw. mehrfaches Kleben S.4; S4' als eine weitere Bearbeitungsstufe S.4; S.4' und eine entsprechende Klebeeinrichtung 16; 17, als Aggregat 16; 17 bzw. Bearbeitungsaggregat 16; 17 vorgesehen sein. Dies kann vorzugsweise als ein Leimauftrag S.4 von Laschen und/oder ein Leimauftrag S.4' für ein Fensterkleben im Rahmen einer Herstellung von z. B. als Verpackungskartons oder sog. Trays ausgebildeten Produkten 03 ausgeführt sein. Im ersten Fall und/oder zweiten kann die Leimeinrichtung 16 mit der Falzvorrichtung 14 zu einem gemeinsamen Aggregat 14, 16; 14; 17; 14; 16; 17 bzw. einer Aggregatgruppe 14, 16; 14; 17; 14; 16; 17, z. B. einem Falz-Klebe-Aggregat 14, 16; 14; 17; 14; 16; 17, und im dritten Fall zusammenmit einer Welleinrichtung in einem Pappenwell- und Klebeaggregat zusammen gefasst sein.

Zusätzlich zu einem Stanzen S.2 bzw. einer Stanzvorrichtung 13 und ggf. einem oder mehreren der o.g. Bearbeitungsstufen S1; S1'; S.2'; S.2"; S.2'''; S.3; S.4; S4' (S.4") und/oder Aggregaten 11; 12; 14; 16 kann als weitere Bearbeitungsstufe S.5 ein Ausbrechen S.5 an z. B. einem als Ausbrechlinie 18, z. B. automatische, halbautomatische oder manuell zu bedienende Ausbrechvorrichtung 18 ausgebildeten Aggregat 18, z. B.

Bearbeitungsaggregat 18 zur mechanischen Bearbeitung, vorgesehen sein.

Ein einmaliges Drucklaufen einer o. g. Bearbeitungsstufe S.q; S.1; S.1'; S.2'; S.2"; S.2'''; S.3; S.4; S.4' (S.4") definiert einen entsprechenden Prozessschritt P.x; P.1; P.1'; P.2'; P.2"; PS.2'''; P.3; P.4; P4' (P.4"); P.5, insbesondere einen Bearbeitungsschritt P.x; P.1; P.1'; P.2'; P.2"; PS.2'''; P.3; P.4; P.4' (P.4"); P.5, des zur Herstellung des spezifischen Produktes 03 erforderlichen Produktionsprozesses P, insbesondere Gesamtprozesses P. Eine selbe Bearbeitungsstufe, S.q; S.1; S.1'; S.2'; S.2"; S.2'''; S.3; S.4; S.4', z. B. diejenige des Bedruckens S.1, kann in mehreren Prozessschritten P.x mehrmals nacheinander durchlaufen werden.

Für die o. g. Varianten, Abwandlungen und Weiterbildungen und für die nachfolgenden Ausführungen kann es sich bei den entsprechend zu bearbeitenden Materialeinheiten 02.0 bzw. Werkstücken 02.0 - mit Ausnahme der Ausführung mit aus einer Materialrolle hergestellten Materialeinheiten 02.0 - im Ausgangszustand grundsätzlich um Materialeinheiten 02.0 bzw. Werkstücke 03 mit beliebiger Außenkontur und Formgebung, z. B. um Flachmaterial beliebig ausgeprägter Außenumfangskontur oder um beliebig geformtes und konturiertes Voll- oder Hohlmaterial handeln. Für die Ausführungsvarianten mit prozessaufwärts aus einer Rohmaterialrolle hergestellten Materialeinheiten 02.0 kann es sich bei den so erzeugten und weiter zu bearbeitenden Werkstücken 02.0 ebenfalls grundsätzlich um Werkstücke 03 aus Flachmaterial mit beliebiger, z. B. regel- oder unregelmäßig vieleckförmig, allgemein elliptischer, oder einer unregelmäßig verlaufender Außenumfangskontur, handeln.

In vorteilhafter Ausführung für o. g. Varianten, Abwandlungen und Weiterbildungen und für die nachfolgenden Ausführungen handelt es sich bei den zu bearbeitenden Materialeinheiten 02.0; 02.j um platten- oder bogenartige Werkstücke 02.0; 02.j, z. B. um Materialplatten 02.0; 02.j oder Materialbogen 02.0; 02.j, mit bevorzugt einer regelmäßigen, insbesondere rechteckförmigen Außenumfangskontur. Diese platten- oder bogenartigen Werkstücke 02.0; 02.j zeichnen sich insbesondere dadurch aus, dass deren Dicke höchstens einem Bruchteil, z. B. höchstens einem Zehntel, insbesondere höchstens einem Zwanzigstel, der kürzeren Seite aus Länge und Breite entspricht. Sie weisen z. B. eine Dicke von höchstens 20 mm, insbesondere eine Dicke von 0,03 mm bis 10 mm auf. Diese z. B. platten- oder bogenartigen Materialeinheiten 02.0; 02.j, z. B. Werkstücke 02.0; 02.j, können grundsätzlich aus Metall, Kunststoff, Holz, Karton, Papier oder -z.B. mit Ausnahme von aus Rohmaterialrollen gebildeten Werkstücke 02.0; 02.j - aus Stein oder, Glas ausgebildet sein. Das platten- oder bogenartige Werkstück 02.0; 02.j kann beispielsweise - z. B. mit Ausnahme eines aus Rohmaterialrollen gebildeten Werkstückes 02.0; 02.j - als Materialplatte 02.0; 02.j, z. B. eine Metallplatte, eine Kunststoffplatte, einen Karton oder durch Pappe mit einer Dicke von z. B. mehr als 0,5 mm, z. B. zwischen 0,5 und 20 mm, insbesondere zwischen 0,5 und 10 mm, oder aber vorteilhaft als Materialbogen 02.0; 02.j, z. B. als ein Metallblech, ein Kunststoffbogen, oder insbesondere als ein - ggf. vorbeschichteten - Karton- oder Papierbogen 03 ausgebildet sein, wobei die Dicke eines derartigen Materialbogens 02.0; 02.j z. B. höchstens 0,8 mm beträgt, insbesondere zwischen 0,03 und 0,5 mm liegt.

Die für einen selben, spezifischen Auftrag A(n) zur mehrfachen Bearbeitung zumindest eingangsseitig der ersten Bearbeitungsstufe S.1 des Produktionsprozesses P vorgesehenen oder vorzusehenden, bevorzugt stückigen Materialeinheiten 02.0 liegen in einem Gebinde 04.0 oder regelmäßig in mehreren Gebinden 04.0 vor. Ein Gebinde 04.0 weist dabei eine Vielzahl (z. B. eine Anzahl z > 10, vorteilhaft $z \geq 50$, insbesondere $z \geq 100$, mit $z \, p \, \epsilon \, \mathbb{N}$ ) von Materialeinheiten 02.0, insbesondere Werkstücken 02, desselben Typs (z. B. Material) und/oder derselben Ausprägung (z. B. Gestalt) und/oder des selben Bearbeitungsstatus (z. B. noch unbearbeitet) auf. In der Ausführung des Gebindes 04.0 als Materialrolle oder -bahn 04.0 weist diese eine nutzbare Abwicklungslänge bzw. Länge auf, die den Abschnittslänge der Vielzahl, z. B. Anzahl z, von mit dem Gebinde 04.0 zu verarbeitenden Materialabschnitte 02.0 entspricht - ggf. zuzüglich einer vorzusehenden Sicherheitsrestlänge. Für den bevorzugten Fall von als Materialstapel 04.0, kurz Stapel 04.0 ausgebildeten Gebinden 04.0 umfasst der Stapel 04.0 die Vielzahl, insbesondere Anzahl z, von durch das Gebinde 04.0 umfassten Materialeinheiten 02.0 in Form von gestapelten Materialabschnitten 02.0, insbesondere Materialplatten 02.0 oder -bogen 02.0.

Bevorzugt ist jeder in der Anlage 01 abzuwickelnde und/oder gerade in Abwicklung befindliche spezifische Auftrag A(n) durch eine eindeutige Bezeichnung $a_n$ (mit $n \, \epsilon \, \mathbb{N}$ ), z. B. eine eindeutige Produktbenennung und/oder bevorzugt durch zumindest eine sog. Job-ID $a_n$, eindeutig benannt und identifizierbar. Dabei können sich die Bezeichnungen $a_n$ zwar ggf. im Laufe der Zeit wiederholen, sofern jedoch nie gleichzeitig zwei unterschiedliche Aufträge A(n) mit derselben Bezeichnung $a_n$ in der Anlage 01 zur Abwicklung vorgesehen sind, abgewickelt werden oder noch zur Auslieferung anstehen.

Das an der - bezogen auf die für den spezifischen Auftrag A(n) geplanten Bearbeitungsschritte P.x - ersten Bearbeitungsstufe S.i; S.1 zu bearbeitende Gebinde 04.0 kann in einer ersten, nicht weiter dargestellten Variante vor Ort durch Schneiden (S.0) aus einem größeren Rohmaterialgebinde bereitgestellt werden bzw. sein. Dieses bereitgestellte Gebinde 04.0 wird bzw. ist dann in einem ersten, einen oder mehrere Prozessschritte umfassenden Transportprozess von einer dem z. B. als Formatschneider ausgebildeten Schneideaggregat zugeordneten Abgabeposition, welche auch als "Eintrittsstelle" für das Gebinde 04.1 in den Prozess P betrachtet werden kann, über einen homogenen oder heterogenen ersten Transportpfad einer Vorlageposition 23 oder einer ggf. dieser im Transportpfad vorgeordneten Pufferposition 24 der für den betreffenden Auftrag A(n) zuerst vorgesehenen Bearbeitungsstufe S.i, z. B. einem Bedrucken S.1 oder einem Beschichten S.1', bzw. des betreffenden Aggregates 11; 12; 13; 14; 16; 17; 18, z. B. einer Druckmaschine 11 oder einer Beschichtungsmaschine 12, zugeführt.

Wie dargelegt, werden jedoch die in der ersten Bearbeitungsstufe S.i; S.1 zu bearbeitenden, z. B. zu bedruckenden oder zu beschichtenden Materialeinheiten 02.0 bevorzugt bereits in jeweiligen Gebinden 04.0 der Produktionsanlage 01 im Bereich der Anlieferung 06 zugeführt und in einem z. B. ersten, einen oder mehrere Prozessschritte P.y (z. B. ggf. Umpalettieren, Transport P.6, Einlagern P.7, Auslagern P.8, Transport P.9, Auspacken als Konditionieren P.10, Umsetzen/Umpalettieren als Konditionieren P.11 und/oder Transport P.12) umfassenden Transportprozess von einer dem Wareneingang 06 zuzurechnenden Eintrittsposition 21 über einen homogenen oder heterogenen, z. B. ersten Transportpfad 22 bzw. Transportstrecke 22 der Vorlageposition 23 oder einer ggf. dieser Vorlageposition 23 im Transportpfad vorgeordneten Pufferposition 24 der für den betreffenden Auftrag A(n) vorgesehenen ersten Bearbeitungsstufe S.i, z. B. einem Bedrucken S.1 oder einem Beschichten S.1', S.1, bzw. der Vorlageposition 23 oder einer ggf. dieser Vorlageposition 23 vorgeordneten Pufferposition 24 des betreffenden Aggregates 11; 12; 13; 14; 16; 17; 18, z. B. einer Druckmaschine 11 oder einer Beschichtungsmaschine 12 zugeführt. Die Pufferposition 24 befindet sich hierbei beispielsweise in der betreffenden Transportstrecke 22 und ist z. B. durch eines oder mehrere dieser Transportstrecke 22 bzw. diesem Transportstreckenabschnitt zugeordnete Transportmittel 65; 68; 69; 74; 79 handzuhaben.

Die Gebinde 04.0 werden der Produktionsanlage 01 im Bereich des Wareneingangs 06 z. B. in zu fördernden Transporteinheiten 27 zugeführt. Dabei können die Gebinde 04.0 ggf. selbst für sich alleine oder zusammen mit mindestens einem weiteren Gebinde 04.0 eine derartige Transporteinheit 27 mit einem oder mehreren Gebinden 04.0 ausbilden. Bevorzugt werden bzw. sind sie jedoch einzeln oder zu mehreren in oder auf Transporthilfsmitteln 26, z. B. in Behältnissen oder auf bevorzugt als Paletten 26, z. B. Wareneingangs- oder Formatpalette 26, ausgebildeten Trägern 26, angeordnet dem Wareneingang 06 zugeführt und bilden mit diesen zusammen die zu transportierenden Transporteinheiten 27 aus. Dabei können zumindest im Bereich des Wareneingangs 06 mehrere Gebinde 04.0 für mehrere Aufträge A(n), insbesondere für mehrere mit Materialeinheiten 02.0 desselben Typs und/oder derselben Ausprägung durchzuführende Aufträge A(n), als ein Mehrfachgebinde mit beispielsweise einer sich aus der Summe über die jeweilige Anzahl z ergebenden Gesamtzahl von Materialabschnitten 02.0 in einer selben Transporteinheit 27 auf einem selben Transporthilfsmittel 26 zusammengefasst sein. Bevorzugt sind jedoch für spezifische Aufträge A(n) bestellte Gebinde 04.0 bereits von einzelnen Transporthilfsmittel 26 aufgenommen, sodass diese im weiteren Verlauf bedarfsweise gebindeweise vereinzelt und transportiert werden können. Diese können zunächst, z. B. zumindest im Bereich des Wareneinganges 06, dennoch neben- oder übereinander angeordnet zu einer Transporteinheit 27 zusammen gefasst sein.

Nach Durchlaufen der ersten für das Produkt 03 vorgesehenen Bearbeitungsstufe S.1 ist das Gebinde 04.1 mit den zumindest einfach bearbeiteten, z. B. bedruckten oder beschichteten Materialeinheiten 02.1, z. B. Werkstücken 02.1, in einem weiteren, z. B. zweiten, einen oder mehrere Prozessschritte P.y (z. B. P. Transport 13) umfassenden Transportprozess über einen z. B. zweiten homogenen oder heterogenen Transportpfad 28 von einer dem Ausgang der zuerst durchlaufenen Bearbeitungsstufe S.i, z. B. dem Bedrucken S.1, bzw. dem Ausgang des betreffenden Aggregates 11; 12; 13; 14; 16; 17; 18 zugeordneten Abgabeposition 29 oder einer ggf. dieser Abgabeposition 29 nebengeordneten aggregatseitigen Pufferposition hin zu einer Vorlageposition 32; 33 oder einer ggf. dem Aggregat zugeordneten Pufferposition der mindestens einen weiteren Bearbeitungsstufe S.i+1, z. B. direkt einem mechanischen Bearbeiten S.2 als zweiter Stufe oder einem vorherigen Beschichten S.1'als zweiter Stufe, bzw. einem Eingang des betreffenden Bearbeitungsaggregates 11; 12; 13; 14; 16; 17; 18; 11, z. B. der Beschichtungsmaschine 12 oder eines z. B. ein Schneidwerkzeug umfassenden Bearbeitungsaggregates 13, und/oder und in einem weiteren, z. B. dritten einen oder mehrere Prozessschritte P.y (z. B. Transport P.14) umfassenden Transportprozess über einen z. B. dritten homogenen oder heterogenen Transportpfad 34 zu einem - planmäßigen oder außerplanmäßigen - Zwischenlagen P.15 als einem weiterem Prozessschritt P.15 einer Pufferposition 36, z. B. Lagerposition 36, eines Lagers 37, z. B. Pufferlagers 37, zuführbar.

Auf einem hier nicht explizit dargestellten homogenen oder heterogenen Transportpfad kann das in der Bearbeitungsstufe S.i einmal bearbeitete Gebinde 04.1 vor einem Bearbeiten in einer nächsten Bearbeitungsstufe S.q, vom Ausgang der Bearbeitungsstufe S.i oder nach einem Zwischenlagern P.15 von einer Pufferposition 36 des Lagers 37 in einem nächstfolgenden, nicht dargestellten Prozessschritt, ggf. nach einem vorherigen Prozessschritt P.16 eines Konditionierens P.16, insbesondere eines Wendens P.16 mittels beispielweise eines entsprechend ausgebildeten Aggregates 19, z. B. eine Wende- und/oder Konditioniervorrichtung 19, zur nochmaligen Bearbeitung in derselben Bearbeitungsstufe S.i, z. B. demselben oder einem anderen Bearbeitungsaggregat 11; 12; 13; 14; 16; 17; 18 dieser Bearbeitungsstufe S.i, dem betreffenden Bearbeitungsaggregat 11; 12; 13; 14; 16; 17; 18 zugeführt werden.

Fallen im zuvor und im nachfolgend Dargelegten die Vorlageposition 23; 32 oder eine aggregatseitige Pufferposition, an welche das Gebinde 04.j von der vorgeordneten Transportstrecke abgegeben wird, und die Arbeits- bzw. Anlageposition 31; 33, d. h. die im Betrieb für die Materialzufuhr tatsächlich einzunehmende Position des Gebindes 04.0; 04.1, räumlich auseinander, so kann ein dem betreffenden Aggregates 11; 12; 13; 14; 16; 17; 18 zuzurechnender Prozessschritt eines aggregatinternen Transportes und eine zugehörige Transporteinrichtung, z. B. eine dem Aggregat 11; 12; 13; 14; 16; 17; 18 zugeordnete Beschickungsstrecke, vorgesehen sein, welche beispielsweise durch eine dem Aggregat 11; 12; 13; 14; 16; 17; 18 und dem betreffenden Bearbeitungsschritt P.x zugeordnete Steuereinrichtung 98 (s.u.) gesteuert wird. Das an der Vorlageposition 23; 32 bzw. einer durch das Aggregat verwalteten Pufferposition angelieferte Gebinde 04.0; 04.1 wird dann bevorzugt durch die aggregatseitige Fördereinrichtung 103 (s.u.) übernommen und weiter gehandhabt. In diesem Sinne soll eine Anlieferung am Aggregat 11; 12; 13; 14; 16; 17; 18, sofern nicht explizit unterschieden, die Anlieferung an der als Schnittstelle wirksamen Vorlageposition 23; 31; 32; 33 verstanden sein, die z. B. direkt an der die Arbeits- bzw. Anlageposition 31; 33 darstellenden Vorlageposition 31; 33, an einer hiervon ggf. verschiedenen und zusätzlich zur Anlageposition 31; 33 vorgesehenen Vorlageposition 23; 32 oder einer ggf. vorgesehenen aggregateigenen Pufferposition gelegen sein kann. Die derartig definierte Vorlageposition 23; 31:32; 33 bildet die Schnittstelle 23; 31; 32; 33 zwischen einem Transportmittel 60; 65; 68; 79 der vorgelagerten Transportstrecke 22; 38 (28; 34; 39; 54) und dem Eingangsbereich des betreffenden Aggregates 11; 12 (13; 14; 16; 17; 18). Dasselbe ist auch ausgangsseitig des betreffenden Aggregates 11; 12 (13; 14; 16; 17; 18) für die Bereitstellung das Gebindes 04.1; 04.2 mit den dort bearbeiteten Materialabschnitten 02.1; 02.2 für den Weitertransport direkt an der mit der Abgabeposition 29 zusammen fallenden Auslageposition 111, an einer hiervon beabstandeten Abgabeposition 29 oder einer ggf. dort vorgesehenen aggregatseitigen Pufferposition, also die Bereitstellung an einer einen Ausgang darstellenden Schnittstelle zwischen Aggregat 11; 12 (13; 14; 16; 17; 18) und einem Transportmittel 60; 65; 68; 79 einer sich anschließenden Transportstrecke 28; 34; 39; 42; 43; 46 (48; 49). Das am Eingang und Ausgang des ersten und zweiten zu durchlaufenden Aggregates 11; 12 (13; 14; 16; 17; 18) für die betreffende Schnittstellen Dargelegte ist sinngemäß auf eines, mehrere oder sämtliche der übrigen, in der Anlage 01 vorgesehenen Aggregate 13; 14; 16; 17; 18 zu übertragen.

In der vorteilhaften Ausführung der Produktionsanlage 01 mit dem mindestens einen Pufferlager 37 zur Aufnahme von Gebinden 04.1; 04.1' mit zumindest einfach bearbeiteten, z. B. bedruckten und/oder beschichteten Materialeinheiten 02.1; 02.1', insbesondere Werkstücken 02.1; 02.1', ist ein weiterer, z. B. vierter homogener oder heterogener Transportpfad 38 vorgesehen, über welchen in einem z. B. vierten, einen oder mehrere Prozessschritte P.y (z. B. Transport P.17) umfassenden Transportprozess ein auf einer Lagerposition 36 des Pufferlagers 37 zwischengelagertes Gebinde 04.1; 04.1' der Vorlageposition 32; 33 oder der ggf. vorgesehenen Pufferposition der mindestens einen weiteren Bearbeitungsstufe S.i+1, z. B. einem Beschichten S.1' der bis dahin beispielsweise noch unbeschichteten Materialabschnitte 02.1 oder einem mechanischen Bearbeiten S.2; S.2', insbesondere Stanzen S.2, der zuvor bedrucken und/oder beschichteten Materialabschnitte 02.1 bzw. der Vorlageposition 32 oder der ggf. vorgesehenen Pufferposition 33 des betreffenden weiteren Bearbeitungsaggregates 11; 12; 13; 14; 16; 17; 18, z. B. der Beschichtungsvorrichtung 12 oder einem Bearbeitungsaggregat 13; 14; 18 zur mechanischen Bearbeitung, bevorzugt einem ein Schneidwerkzeug umfassenden Bearbeitungsaggregat 13, zuführbar ist. Was die Vorlage- bzw. Pufferposition 32; 33 als Schnittstelle betrifft, ist das o. g. anzuwenden.

In der Ausführungsvariante des Produktionsprozesses P bzw. der Anlage bzw., in welcher zwischen dem ein- oder mehrmaligen Bedrucken S.1 und dem (z. B. ersten) mechanischen Bearbeiten S.2 ein Beschichten S.1' liegt, sind nicht bezeichnete Transportpfade für Gebinden 04.1 bereits bedruckter Materialabschnitte 02.1 vom Ausgang des Bedruckens S.1 und/oder vom Lager 37 zum Eingang des Beschichtens S.1' und nicht bezeichnete homogene oder heterogene Transportpfade für Gebinden 04.1' bereits bedruckter und beschichteter Materialabschnitte 02.1' vom Ausgang des Beschichtens S.1'zum (z. B. ersten) mechanischen Bearbeiten S.2 und entsprechende Vorlage, Abgabe- und/oder Pufferpositionen vorgesehen, auf deren in jeweils einem oder mehreren Prozessschritten, z. B. Transportschritten, die jeweiligen Gebinde 04.1; 04.1' förderbar sind.

In einer vorteilhaften Weiterbildung der Produktionsanlage 01 umfasst diese zusätzlich zu den zwei nacheinander zu durchlaufende Bearbeitungsstufen S.q bzw. zusätzlich zu dem mindestens einen Stoffauftrag S.1; S.1' und dem nachgeordneten mechanisches Bearbeiten S.2 (S.2'), welche z. B. einem Bearbeitungs- oder insbesondere Hauptbearbeitungsabschnitt 51 der Anlage 01 zugeordnet sind, eine oder mehrere z. B. optional zu durchlaufende Bearbeitungsstufen S.i+2 eines Weiterbe- und/oder - verarbeitungsabschnittes 52. Hierzu ist vorzugsweise ein weiterer, z. B. fünfter homogener oder heterogener Transportpfad 39 vorgesehen, über welchen in einem z. B. fünften, einen oder mehrere Prozessschritte P.y (z. B. Transport P.18) umfassenden Transportprozess das Gebinde 04.2 mit zumindest zweifach bearbeiteten, z. B. einen Auftrag erhaltenen und (aus-)geschnittenen bzw. gestanzten, Materialeinheiten 02.2, z. B. Werkstücken 02.2, von einer dem Ausgang der zweiten durchlaufenen Bearbeitungsstufe S.i+1 bzw. des betreffenden Aggregates 11; 12; 13 zugeordneten Abgabeposition 41 oder einer ggf. dort vorgesehenen Pufferposition zu einer der Übersichtlichkeit halber nicht dargestellten Vorlageposition oder ggf. vorgesehenen Pufferposition der wenigstens einen von ggf. mehreren für sich alleine oder nacheinander durchlaufbarer Bearbeitungsstufen S.i+2 bzw. Bearbeitungsaggregate 14; 16; 17; 18. Als ein oder mehrere einzeln oder nacheinander durchlaufbare Bearbeitungsstufen S.i+2, können z. B. eine oder mehrere Bearbeitungsstufen S.3 zum mechanischen Verformen und/oder eine oder mehrere Bearbeitungsstufen S.4; S.4' zum Verbinden, z. B. Kleben von Laschen und/oder Fenstern, und/oder eine oder mehrere Bearbeitungsstufen S.5 für das Ausbrechen der Nutzen aus den zuvor gestanzten Materialabschnitten 02.2 vorgesehen sein. Als ein oder mehrere einzeln oder nacheinander durchlaufbare Bearbeitungsaggregate 14; 16; 17; 18 können eine oder mehrere Falzvorrichtungen 14 und/oder ein oder mehrere Aggregate 16; 17 zum Verbinden, wie z. B. eine oder mehrere Leimeinrichtungen 16; 17, und/oder eine oder mehrere Ausbrechlinien 18.

Zusätzlich zum direkten Transport zur Bearbeitungstufe S.i+2 bzw. zum Bearbeitungsaggregat 14; 16; 17; 18 des Weiterbe- und/oder -verarbeitungsabschnittes 52 kann ein sechster homogener oder heterogener Transportpfade 46 vorgesehen sein, über welchen ein Gebinde 04.2 mit z. B. zwei- oder mehrfach bearbeiteten Materialabschnitten 02.2 in einem weiteren, z. B. sechsten, einen oder mehrere Prozessschritte P.y (z. B. Transport P.19) umfassenden Transportprozess von der Abgabeposition 41 oder einer ggf. dort vorgesehenen Pufferposition einer Pufferposition 36 des oben genannten ersten Pufferlagers 37 und/oder einer Pufferposition 56, z. B. Lagerposition 56, eines weiteren Lagers 57, z. B. Pufferlagers 57, zum Prozessschritt P.20 eines Zwischenlagerns P.20 zuführbar ist.

Was die Abgabe- bzw. Pufferposition 41 des Gebindes 04.2 mit z. B. zwei- oder mehrfach bearbeiteten Materialabschnitten 02.2 betrifft, ist ebenfalls jeweils das oben zur betreffenden Schnittstelle Dargelegte anzuwenden.

In vorteilhafter Ausführung der Produktionsanlage 01 mit der Möglichkeit des Zwischenlagerns P.20 der zweifach bzw. vollständig im Hauptbearbeitungsabschnitt 51 bearbeiteten Materialabschnitte 02.2 ist ein weiterer, z. B. siebter homogener oder heterogener Transportpfad 54 vorgesehen, über welchen ein auf einer Lagerposition 36; 56 des ersten oder weiteren Pufferlagers 37; 57 in einem Prozessschritt P.20 zwischengelagertes Gebinde 04.2; 04.2' in einem z. B. siebten, einen oder mehrere Prozessschritte P.y (z. B. Transport P.21) umfassenden Transportprozess einer der Übersichtlichkeit halber nicht dargestellter Vorlageposition oder ggf. vorgesehenen Pufferposition der wenigstens einen von ggf. mehreren für sich alleine oder nacheinander durchlaufbarer Bearbeitungsstufen S.i+2 bzw. des wenigstens einen von ggf. mehreren für sich alleine oder nacheinander durchlaufbarer Bearbeitungsaggregate 14; 16; 17; 18 zuführbar ist.

Unabhängig davon, ob eine oder mehrere Bearbeitungsaggregate 14; 16; 17; 18 bzw. Bearbeitungsstufen S.q eines Weiterverarbeitungsabschnittes 51 und/oder ein oder mehrere Pufferlager 37; 57 vorgesehen sind, kann im Prozess P stromabwärts des letzten Bearbeitungsprozesses S.q der Anlage 01 eine Packstufe K und/oder mindestens ein weiterer Prozessschritt P.24, z. B. ein Verpacken P.24 und/oder Palettieren P.25 mit einer oder mehreren entsprechenden, hier nur durch entsprechende Bezugszeichen angedeutete Verpack- und/oder Palettiereinrichtungen 58; 59 vorgesehen sein. Die Packstufe K bzw. der weiterer Prozessschritt P.24; P.25 kann u. a. eine Schrumpf-Einrichtung 59 bzw. als Prozess ein Schrumpfen umfassen, durch welche bzw. welches die die fertigen Produkte 03 bzw. ein diese umfassendes Gebinde 04.j mit einer Folie versehen und dadurch verpackt werden können bzw. kann.

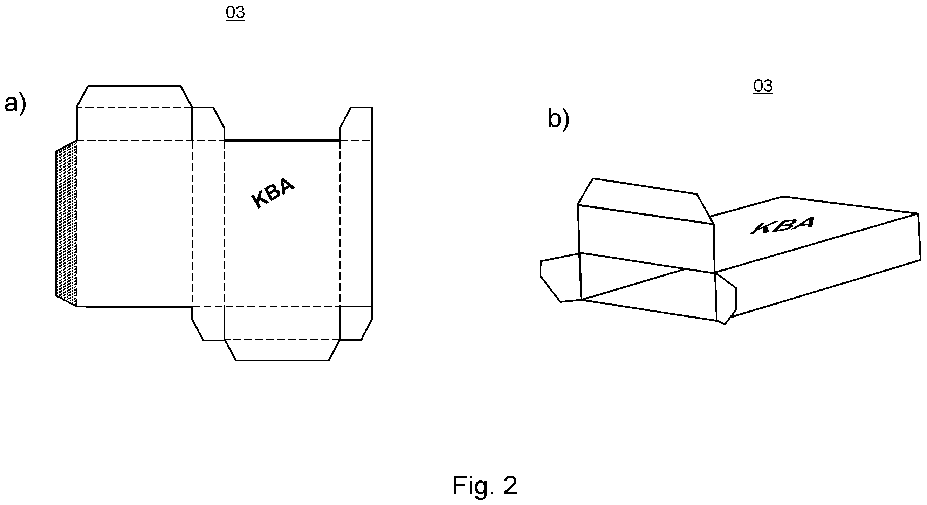

Die je nach Ausgestaltung der Anlage 01 selbst und/oder je nach Anforderung an das zu fertigende Produkt 03, z. B. als Halberzeugnis 03 (siehe z. B. Fig. 2a) oder Fertigware 03 (siehe z. B. Fig. 2b) den Be- und/oder verarbeitungsabschnitt 53 bereits nach dem Hauptbearbeitungsabschnitt 51, nach einem dem Hauptbearbeitungsabschnitt 51 nachgelagerten Zwischenlagern P.20 und/oder nach einem oder mehreren durchlaufenen Weiterbearbeitungsstufen S13; SP14; S16; S17; S.18 und ggf. einem nachgeordneten Zwischenlagern P20 als Produkte 03 verlassenden Materialabschnitte 02.j bzw. das diese umfassende Gebinde 04.j sind bzw. ist in mindestens einem weiteren, einen oder mehrere Prozessschritte P.y (z. B. einem direkten Transport P.22 ohne nachfolgende Weiterverarbeitung und/oder aus einer nachgeordnete Weiterverarbeitung P.23) umfassenden Transportprozess über mindestens einen weiteren homogenen oder heterogenen Transportpfad 43; 44; 46; 47; 48; 49 der Packstufe K und/oder in mindestens einem weiteren, einen oder mehrere Prozessschritte P.y (z. B. Transport P.26 und Einlagern P.27) umfassenden Transportprozess über mindestens einen weiteren homogenen oder heterogenen Transportpfad 61 einer Position 62, insbesondere Lagerposition 62 oder einem Lagerplatz 62, eines Lagers 63, z. B. Fertig- oder Ausgangslagers 63, zuführbar. Z. B. geht dem Einlagern P.27 ein entsprechender Transport P.26 von der Packstufe K oder - unter Auslassung der Packstufe K - von der für das Produkt 03 zuletzt durchzulaufenden Bearbeitungsstufe S.j oder dem letzten Zwischenlagern P.15; P20 voraus.

Direkt von der Packstufe K und/oder bevorzugt vom Lager 63 her ist das ggf. vorübergehend eingelagerte Produktgebinde 08 über einen weiteren homogenen oder heterogenen Transportpfad 64 in einem weiteren Transportprozess in einem einen oder mehrere Prozessschritte P.y (z. B. Auslagern P.28, Umlagern, Umpalettieren P.29 und/oder Transport P.30) vom Lagerplatz 62 zum Warenausgang 07 verbringbar. Dies kann durch ein Auslagern P.28 und einen anschließenden Transport 30 erfolgen. Innerhalb des Lagers 63 kann je nach Erfordernis zwischenzeitlich ein ein- oder mehrmaliges Umlagern erfolgt sein kann.

Die Lager 09; 37; 57; 63 können jeweils grundsätzlich in verschiedener und beliebiger Ausführungsart, z. B. als Hochregallager Etagenlager, Hochflachlager, Turmlager, Paternosterlager oder Bodenlager, zur Aufnahme von jeweiligen Gebinden 04.1; 04.2 bzw. von die jeweiligen zu lagernden Gebinde 04.1; 04.2; 08 umfassenden Transporteinheiten 27; 66; 67; 108; 109 ausgebildet sein. Sie sind jedoch bevorzugt hinsichtlich ihrer Ein- und Auslagerung automatisiert ausgeführt und umfassen eine Schnittstelle, über welche eine entsprechende Einlager- und/oder Auslageranforderung übermittelbar ist.

In einer bevorzugten Ausführung ist das Wareneingangslager 09 jedoch als ein Hochregallager 09 mit wenigstens einer eine Vielzahl von Lagerplätzen 71 umfassenden Regalflucht 72 beidseitig einer Verfahrspur 73 wenigstens eines, z. B. ein als Regalbediengerät 74 ausgebildetes Transportmittel 74 ausgebildet.

Das Warenausgangslager 63 ist in bevorzugter Ausführung als ein Hochregallager 63 mit wenigstens einer eine Vielzahl von Lagerplätzen 62 aufweisenden Regalflucht 76 beidseitig einer z. B. in einem Regalgang verlaufende Verfahrspur 77 wenigstens eines Handhabungsmittels 78, z. B. ein als Regalbediengerät 78 ausgebildetes Transportmittel 78, ausgebildet. Wie dargestellt, sind bevorzugt mehrere, z. B. zwei, parallel verlaufende Regalflure mit jeweiligen beidseitigen Regalfluchten 76 und Verfahrspuren 77 für z. B. je zwei Regalbediengeräte 78 vorgesehen.

Wareneingangslager 09 und/oder des Warenausgangslager 63 können als baulich voneinander getrennte Lager 09; 63 oder aber als zwei räumlich voneinander getrennte Lagerbereichen 09; 63 eines gemeinsamen Lagers 09, 63, z. B. Wareneingangs- und - ausgangslager 09, 63, ausgebildet sein. In einer hier nicht dargelegten Ausführungsvariante könnten die beiden Lager 09; 63 auch variabel dem einen oder anderen "Lager" zuordenbare Lagerplätze 62; 71 eines gemeinsamen Rohwaren- und Produktlagers 09, 63 sein.

In einer bevorzugten Ausführung des Wareneingangslager 09 und/oder des Warenausgangslager 63 ist dieses mit einem Lagerplätze 62; 71 umfassenden Lagerbereich ausgeführt, dessen Erstreckung in Längsrichtung einem mehrfachen, insbesondere mindestens einem dreifachen, der Erstreckung in der Breite entspricht. In einer dargestellten vorteilhaften Ausführung verlaufen Wareneingangslager 09 und Warenausgangslager 63 auf einer Längsseite Seite an Seite.

Zusätzlich oder für sich betrachtet ist das Wareneingangslager 09 und/oder Warenausgangslager 63 in bevorzugter Ausführung derart in der Anlage 01 orientiert, dass dieses mit seiner Längsrichtung, d. h. der Richtung größerer Erstreckung und/oder des Verlaufs der Verfahrspur(en) 73; 77, zumindest überwiegend in, d. h. weniger als 45° geneigt oder bevorzugt im Wesentlichen (z. B. mit höchstens ± 10° Abweichung) parallel zur mittleren Materialflussrichtung vom ersten Bearbeitungsaggregat 11; 12; 13; 14; 16; 17; 18 zum Eingang in die Packstufe K verläuft. Hierbei wird z. B. als mittlere Materialflussrichtung eine über sämtliche Verbindungslinien möglicher Eintrittsstellen in die erste Bearbeitungsstufe S.1; S.1' mit den möglichen Eintrittsstellen in die Packstufe K gemittelte Richtung verstanden. Zusätzlich oder für sich betrachtet weist das Warenausgangslager 63 in vorteilhafter Ausführung im Bereich eines in Längsrichtung betrachteten Endes den Eingang für die Einlagerung und im Bereich des anderen Endes den Ausgang für die Auslagerung der Produktgebinde 08 auf. Zusätzlich hierzu oder für sich betrachtet befinden sich in vorteilhafter Ausführung der Eingang für die Einlagerung der Rohmaterialgebinde 04.0 in das Wareneingangslager 09 und der Ausgang für die Auslagerung der Produktgebinde 08 im Bereich einer in die selbe Richtung weisenden Seite des jeweiligen Lagers 09; 63 bzw. Lagerbereichs 09; 63.

Der Transport der Gebinde 04.0 vom Wareneingangslager 09 über den Transportpfad 22 zur ersten zu durchlaufenden Bearbeitungsstufe S.1; S.1' - bevorzugt über zumindest einen Prozessschritt P.10; P.11 eines Konditionierens P.10; P.11 - kann vom Handhabungsmittel 74 des Lagers 06 über ein oder mehrere Handhabungsmittel 68; 59 desselben oder verschiedenen Typs erfolgen. Beispielsweise kann das Gebinde 04.0 durch das Handhabungsmittel 74 des Lagers 06 direkt an ein z. B. als Transportfahrzeug 65; 68; 79 ausgebildetes Transportmittel 65; 68; 79 als Handhabungsmittel 65; 68; 79 übergeben werden. In einer hier angedeuteten Ausführung wird das Gebinde 04.0 durch das Handhabungsmittel 74 des Lagers 06 zunächst an eine B. als Fördereinrichtung 69 ausgebildetes Transportmittel 69 abgegeben, welches beispielsweise als Rollenbahn 69 ausgeführt ist. Von einer Übergabestelle wird das Gebinde 04.0 dann beispielsweise durch ein insbesondere fahrerlos ausgebildetes Transportmittel 60; 65, zu. B. ein mechanisch geführtes Transportfahrzeug 60, beispielsweise einen sog. Verfahrwagen 60 oder ein berührungslos geführtes Transportfahrzeug 65; 68; 79, z. B. als fahrerloses Flurförderfahrzeug 65; 68; 79, ausgebildetes Transportmittel 60; 65; 68; 79 aufgenommen und - bevorzugt über zumindest einen Prozessschritt P.10; P.11 eines Konditionierens P.10; P.11 - zur ersten zu durchlaufenden Bearbeitungsstufe S.1; S.1' verbracht.

Der Transport der Gebinde 04.j zwischen den Bearbeitungsaggregaten 11; 12; 13; 14; 16; 17; 18 untereinander und/oder den Pufferlagern 37; 57 (falls vorgesehen) kann grundsätzlich durch beliebig ausgebildete Handhabungsmittel 65; 68; 79 erfolgen. Um eine hoher Flexibilität zu erhalten erfolgt der Transport hier bevorzugt durch ein oder insbesondere mehrere z. B. als Transportfahrzeuge 65; 68; 79, insbesondere berührungslos geführte Transport- bzw. Flurförderfahrzeuge 65; 68; 79, ausgebildete Transportmittel 65; 68; 79.

Durch das bzw. die Pufferlager 37; 57 wird der Materialdurchsatz zwischen zwei Bearbeitungsschritten P.x entkoppelt,.

Das erste und/oder das zweite Pufferlager 37; 57 kann grundsätzlich beliebig angeordnet, z. B. in einer besonders kompakten Variante als Lagerbereich im Wareneingangs- und/oder im Warenausgangslager 09; 63 integriert sein. Vorteilhaft ist das erste und/oder das zweite Pufferlager 37; 57 jedoch als vom Wareneingangs- und/oder im Warenausgangslager 09; 63 verschiedenes Lager 37; 57 ausgebildet und/oder zumindest zu einem Teil zwischen zwei einander folgenden Bearbeitungsstufen S.i; S.i+1 angeordnet.

Für den Fall zweier Pufferlager 37; 57 können diese als Bereiche eines gemeinsamen Lagers 37, 57 ausgebildet sein, sind jedoch bevorzugt als getrennte Lager 37; 57 jeweils räumlich optimiert, z. B. je zumindest zu einem Teil zwischen je zwei einander folgenden Bearbeitungsstufen S.i-1, S.i bzw. S.i, S.i+1 angeordnet, in der Anlage 01 vorgesehen.

Für den Fall eines oder mehrerer Pufferlager 37; 57 können diese - in Abhängigkeit von deren Typ - zu dessen Ein- und Auslagerung grundsätzlich durch verschieden ausgebildete Handhabungsmittel 79 bedient sein. In bevorzugter Ausführung ist das erste und/oder das zweite Pufferlager 37; 57 jedoch als beispielsweise durch ein oder mehrere Handhabungsmittel 65; 68; 79, z. B. durch als Transportfahrzeuge 65; 68; 79, insbesondere Flurförderfahrzeuge 65; 68; 79, ausgebildete Transportmittel 65; 68; 79, bedienbares Bodenlager 37; 57 ausgebildet. Insbesondere sind diese Transportfahrzeuge 65; 68; 79 als fahrerlose und bevorzugt berührungslos geführte Transportfahrzeuge 65; 68; 79 ausgeführt. Im Fall zweier Pufferlager 37; 57 sind diese z. B. als beispielsweise durch jeweils verschiedene, durch gleiche oder gar durch selbe derartige Handhabungsmittel 65; 68; 79 bedienbare Bodenlager 37; 57 ausgebildet.

Vorteilhaft ist das erste und/oder zweite Pufferlager 37; 57 mit Lagerplätzen 36; 56 in Reihenanordnung mit dazwischen verlaufenden, jedoch hier nicht dargestellten Verfahrwegen ausgeführt und ermöglicht daher einen guten Zugriff auf eine Vielzahl von unterschiedlichen Lagerplätzen 36; 56 und damit auf Gebinde 04.1; 04.2 mit Materialabschnitten 02.1, 02.2, die unterschiedlichen Aufträgen A(n) zugeordnet sind.

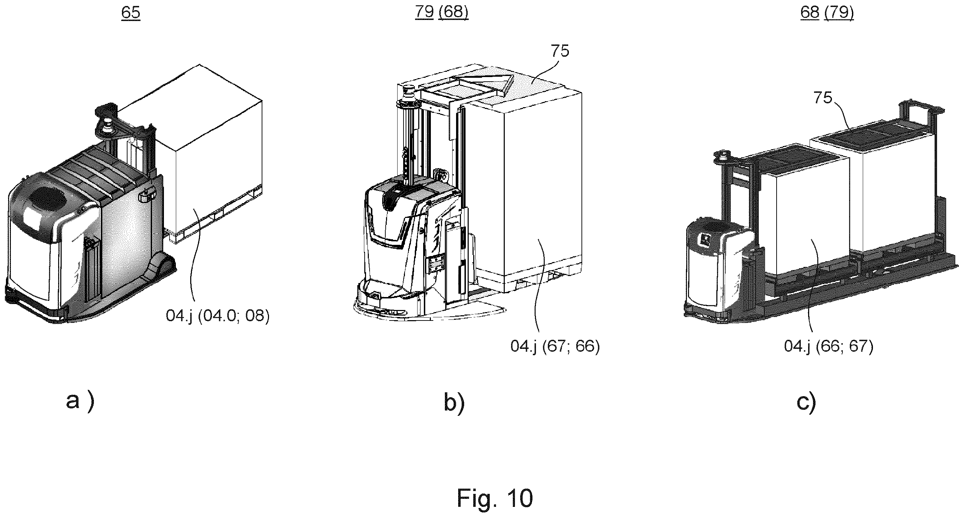

Grundsätzlich kann auf sämtlichen durch mechanisch nicht geführte Transportfahrzeuge 65; 68; 79 zu bedienenden Transportpfaden und -pfadabschnitten der Transport durch übliche, als Gabelhubfahrzeug 65; 68; 79 ausgebildete, bevorzugt fahrerlos geführte Flurförderfahrzeug 65; 68; 79 erfolgen. Insbesondere kann im Bereich des Wareneinganges 06 und/oder der dem Auspacken P.10 vorgeordnete und/oder ein dem Packen P.25 nachgeordneter Transport P.9; P.26; P.30 mit üblichen, als Gabelhubfahrzeuge 65; 68; 79 ausgebildeten fahrerlosen Flurförderfahrzeugen 65 erfolgen bzw. ausgebildet sein (siehe z. B. Fig. 10 a). Das Transportmittel 65 ist dann z. B. mit Gegengewicht (d. h. ohne betriebsmäßigen Bodenkontakt im Bereich der Lastaufnahme während des Transportes) ausgeführt.

Auch im Bereich des Wareneinganges 06 und in zumindest einem Transportabschnitt zwischen der Packstufe und dem Warenausgang 07 kann ein Transport P.26; P.30 durch ein übliches, als Gabelhubfahrzeug 65 mit z. B. Gegengewicht (d. h. ohne Bodenkontakt im Bereich der Lastaufnahme während des Transportes) ausgeführtes, insbesondere fahrerlös geführtes Flurförderfahrzeug 65 erfolgen. Dies gilt auch für Rücktransporte leerer Transporthilfsmittel 108; 109.

Zwischen dem Auspacken P.10 und z. B. einem Packen P.24, zumindest jedoch zwischen dem Verlassen der ersten Bearbeitungsstufe S.1 und einer Übergabe an die Vorlageposition 32 der zweiten Bearbeitungsstufe S.2 oder bevorzugt einer Übergabe an die Vorlageposition 32 der dritten Bearbeitungsstufe S.3 erfolgt der Transport P.12; P13; P14; P.17 bevorzugt durch ein mit Ladungssicherung, insbesondere mit einer das Gebinde 04.j bzw. die Transporteinheit 67; 66 auf der Oberseite sichernden Einrichtung 75, ausgebildeten Transportmittel 79; 68, beispielsweise Transportfahrzeug 79; 68, insbesondere Flurförderfahrzeug 79. Die Einrichtung 75 zur Ladungssicherung kann beispielsweise als eine oder mehrere auf die Oberseite des ausgenommenen Gebindes 04.j bzw. der aufgenommenen Transporteinheit 67; 66 absenkbare Klemmelemente 75, z. B. eine oder mehrere Klemmplatten 75 ausgebildet sein (siehe z. B. Fig. 10 b) und c). Das die Ladungssicherung umfassende Förderfahrzeug 79; 68 ist vorzugsweise im Bereich seiner Aufnahmearme - z. B. im Gegensatz zu üblichen Staplergabeln - beispielsweise über Rollen mit einem abstützenden Bodenkontakt ausgeführt und erfordert daher keine zusätzlich raumgreifende Ausgestaltung mit entsprechendem Gegengewicht

In einer vorteilhaften Ausführung erfolgt der Transport P.9 zumindest auf einem Transportabschnitt zwischen dem Auslagern P.8 am Wareneingangslager 09 und dem Auspacken P.10 durch ein fahrerloses Transportfahrzeug 60; 68, der in einer ersten Ausführungsvariante durch ein berührungslos geführtes Transportmittel 68, z. B. einen Mehrfachförderer 68, z. B. Doppelförderer 68, gebildet sein kann. Dieser kann zusätzlich eine oder mehrere Einrichtungen 75 zur Lagesicherung umfassen kann (siehe z. B. Fig. 10 c). Der Mehrfachförderer 68 ist vorzugsweise im Bereich seiner Aufnahmearme - z. B. im Gegensatz zu üblichen Staplergabeln - beispielsweise über Rollen mit einem abstützenden Bodenkontakt ausgeführt und erfordert daher keine raumgreifende Ausgestaltung mit entsprechendem Gegengewicht. In zweiter Ausführungsvariante ist das fahrerloses Transportfahrzeug 60 als ein mechanisch geführtes fahrerloses Transportfahrzeug 60 gebildet, welches sich beispielsweise entlang einer Führung zwischen einer oder mehreren Übergabepositionen am Wareneingangslager 09 und einer oder mehreren Übergabepositionen von sich stromabwärts im Prozess P anschließender Aggregate 19; 11 bewegen.

Transportpfade 22; 28; 34; 38; 39; 42; 43; 44; 46; 47; 48; 49; 54; 61; 64; 116; 117 oder deren Abschnitte, die in einer Ausführung für den Transport (P.6; P.9 P.12; P.13; P.14; P.17: P.18; P.19; P.21; P.22; P.23; P.30 mit einem fahrerlosen Transportfahrzeug 60; 65; 68; 79 befahren werden oder werden sollen bzw. ausgebildet sind, umfassen Leitmittel, durch welche die entsprechenden Bewegungspfade oder-gassen definiert sind. Diese können in der Ausführung mechanisch geführter Transportfahrzeuge 60; 65; 68; 79 durch mechanische Führungen, z. B. Schienen, und im Fall von berührungslos geführten Transportfahrzeugen 60; 65; 68; 79 durch berührungslose Sensorik, z. B. in elekromagnetischer Weise (z. B. optisch oder magnetisch) oder in akustischer Weise (z. B. Ultraschall) wahrnehmbare Orientierungshilfen entlang der betreffenden Transportpfade, insbesondere in Verbindung mit in den Mitteln der zugeordneten Transportmittelsteuerung hinterlegten Fahrrouten und/oder Streckenabschnitten, sein.

Die im Sinne von Bearbeitungsstationen vorliegenden Bearbeitungsaggregate 11; 12; 13; 14; 16; 17; 18, umfassen z. B. jeweils wenigstens ein Bearbeitungswerkzeug 81; 82; 83; 84; 86; 87; 88, z. B. die beispielsweise vorgesehene Druckmaschine 11 wenigstens ein Druckwerk 81, die ggf. vorgesehene Beschichtungsmaschine 12 wenigstens eine Beschichtungseinrichtung 82, z. B. ein Lackierwerk oder Heißprägewerk, die beispielsweise vorgesehene Stanzvorrichtung 13 ein ein Stanzwerkzeug umfassendes Stanz- und/oder Rillwerk 83, die beispielsweise vorgesehene Falzvorrichtung 14 ein Falzwerk 84 mit z. B. ggf. einer Klebevorrichtung 86 einer Klebeeinrichtung 16, die beispielsweise vorgesehene Klebeeinrichtung 17 zum Kleben S.4' von z. B. Fenstern eine Klebevorrichtung 87 und/oder eine ggf. vorgesehene Ausbrechvorrichtung 18 ein Ausbrechwerkzeug 88. Für zwei aufeinander Produktionen von Aufträgen A(n) mit sich in der Oberflächengestaltung, der Textur und/oder der Form unterscheidenden Produkten 03 sind die Bearbeitungswerkzeuge 81; 82; 83; 84; 86; 87; 88 eines oder mehrerer der zu verwendenden Bearbeitungsaggregate 11; 12; 13; 14; 16; 17; 18 auf die neue Produktion zu rüsten und/oder einzurichten. Dies können beispielsweise ein Druckformwechsel, ein Wechsel eines Beschichtungssujets, ein Wechsel einer Stanz- und/oder Prägeform, ein Positionieren eines Falzmessers und/oder eines Leimkopfes und/oder ein Austausch oder eine Anpassung eines Ausbrechstempels sein.

Dieses Rüstens / Einrichtens von Bearbeitungsaggregaten 11; 12; 13; 14; 16; 17; 18 erfolgt z. B. während einer Produktionsunterbrechung. Ggf. kann parallel zum Rüsten auf anderen Bearbeitungsaggregaten 11; 12; 13; 14; 16; 17; 18 einiger oder der selben Bearbeitungsstufen S.q eine andere Produktion laufen.

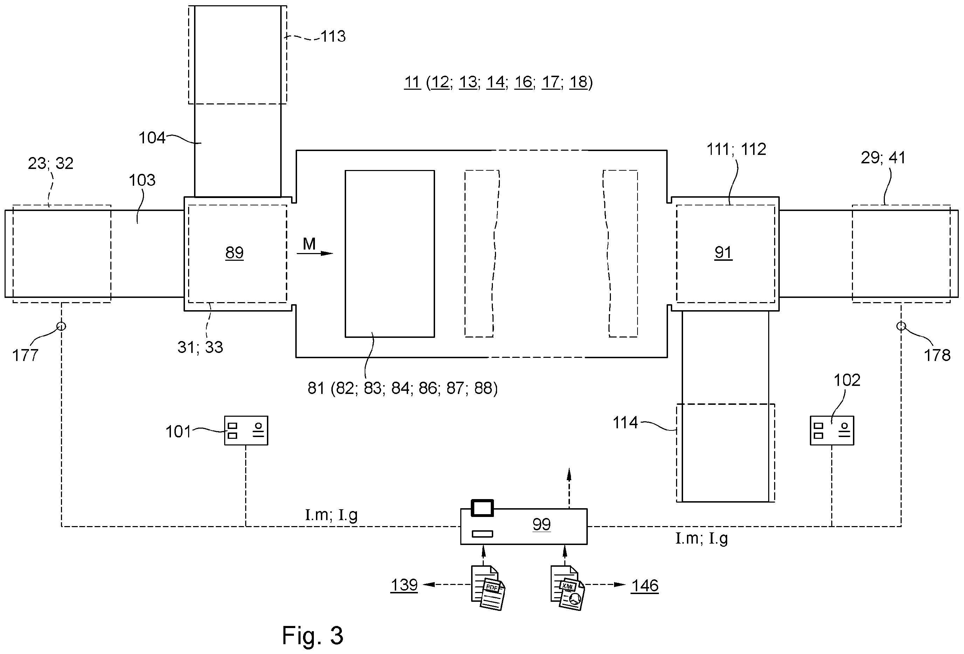

In einer besonders zu bevorzugenden Ausführung der Anlage 01 ist zumindest eine der Bearbeitungsstufen S.q bzw. zumindest eines der Bearbeitungsaggregate 11; 12; 13; 14; 16; 17; 18, insbesondere ein Aggregat 11; 12 für einen Stoffauftrag S.1; S.1 , insbesondere zum Bedrucken S.1, und/oder ein (z. B. erstes) - Aggregat 13 zur mechanischen Bearbeitung S.2, wenigstens eingangsseitig mit Mitteln und/oder einer Vorrichtung zur automatischen und/oder unterbrechungsfreien Materialzufuhr 89, z. B. einem unterbrechungsfreien Stapelanleger 89, während eines sog. Stapelwechsels oder besser Stapelnachschubes und bevorzugt ausgangsseitig mit Mitteln und/oder einer Vorrichtung zur automatischen und/oder unterbrechungsfreien Materialabfuhr 91, z. B. einem unterbrechungsfreien Stapelausleger 91 während eines ausgangsseitigen Stapelwechsels bzw. einer Stapelentnahme (siehe z. B. Fig. 3). Hierdurch wird ein unterbrechungsfreies Abarbeiten eines Auftrages A(n) durch das betreffende Aggregat 11; 12; 13; 14; 16; 17; 18, insbesondere das Aggregat 11; 12 zum Stoffauftrag S.1; S.1' und/oder das z. B. nachfolgende Aggregat 13 zur mechanischen Bearbeitung S.2 möglich, dessen Umfang durch die Materialabschnitte 02.0; 02.1; 02.2 einer Mehrzahl von Gebinden 04.0; 04.1; 04.2 gebildet ist bzw. wird.

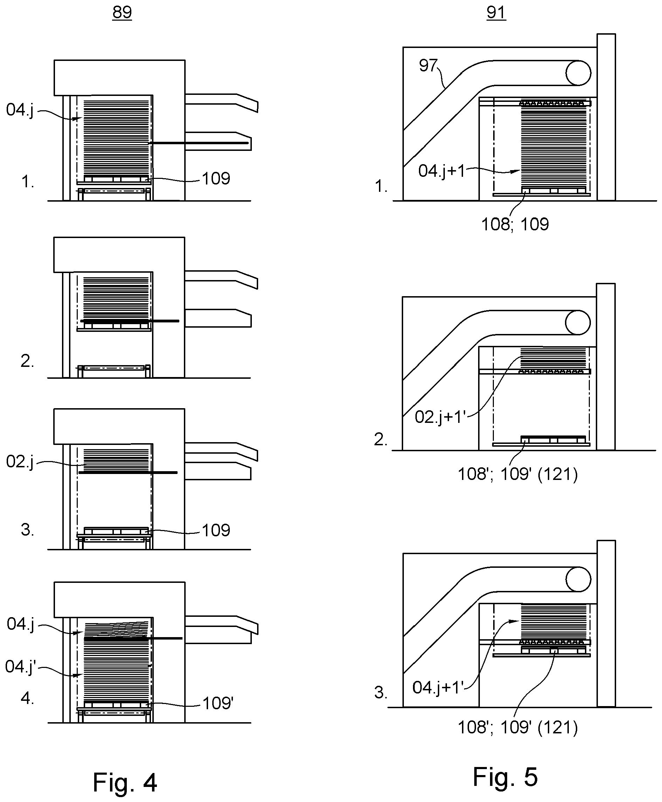

In der bevorzugten Ausführungsvariante der Anlage 01, in welcher mindestens einem der Bearbeitungsaggregate 11; 12; 13; 14; 16; 17; 18 das Material in Form von als Stapel 04.j ausgebildeten Gebinde 04.j von platten- oder bogenförmigen Materialabschnitten 02.j unterbrechungsfrei zuführbar ist, weist die hierbei z. B. als Stapelanleger 89 ausgebildete Vorrichtung 89 beispielsweise eine nicht im Einzelnen dargestellte Hubeinrichtung mit einer vertikal durch einen Antrieb verfahrbaren Trageinrichtung 92, z. B. einem Hubboden 92, auf, durch welche ein in Anlageposition 31; 33 befindlicher Stapel 04.j während der von oben weg durch entsprechende Fördereinrichtungen, z.- B. Greifeinrichtungen, erfolgenden Materialentnahme nach oben nachförderbar ist, sodass die Entnahmehöhe des obersten der Materialabschnitte 02.j stets erhalten bleibt (siehe z. B. Fig. 4, Schritt 1. und 2.). Weiter umfasst die Vorrichtung 89 eine zweite Hubeinrichtung mit einer vertikal durch einen Antrieb verfahrbaren Trageinrichtung 93, z. B. einer sog. Gabel 93 oder einem sog. Rechen 93, welcher in einer ersten Arbeitshöhe horizontal zwischen die Trageinrichtung 92 der ersten Hubeinrichtung und zumindest einen oberen Teil, bevorzugt jedoch zwischen die Trageinrichtung 92 der ersten Hubeinrichtung und das untere Ende des von der Trageinrichtung 92 getragenen Stapels 04.j verbringbar ist. Durch diese zweite Hubeinrichtung ist der durch die Trageinrichtung 93 aufgenommene restliche Teilstapel oder insbesondere restliche Stapel 04.j während der von oben weg durch entsprechende Fördereinrichtungen, z.- B. Greifeinrichtungen, erfolgenden Materialentnahme nach oben nachförderbar, sodass die Entnahmehöhe des obersten der Materialabschnitte 02.j weiterhin erhalten bleibt (siehe z. B. Fig. 4, Schritt 3.). Die Trageinrichtung 92 der ersten Hubeinrichtung kann dann in ihre untere Aufnahmeposition zurück verfahren werden, sodass sie - während die Materialzufuhr über den Reststapel weiter gewährleistet ist - einen nächsten Stapel 04.j+1 aufnehmen kann. Nachdem ein neuer Stapel 04.j' in die Anlageposition 31; 31 auf die Trageinrichtung 92 der ersten Hubeinrichtung verbracht worden ist, kann diese vertikal verfahren werden bis das obere Ende des Stapel 04.j' das untere Ende des restlichen Stapels Stapel 04.j erreicht hat. Schließlich kann die zweite Trageinrichtung 93 beispielsweise durch horizontales bewegen wieder aus dem Stapel entfernt werden und zurück in die Höhe für die niedriger gelegene erste Arbeitshöhe verbracht werden.

Die Mittel zur automatischen und/oder unterbrechungsfreien Materialzufuhr 89 umfassen somit in bevorzugter Ausführung zumindest die zweite Hubeinrichtung mit der vertikal verfahrbaren Trageinrichtung 93 und deren vertikalem Antrieb. Damit die Stapel 04.j störungsfrei von der Trageinrichtung 93 übernommen werden können, sind deren Gestalt und/oder Anordnung sowie diejenige des Systemtransporthilfsmittels 108, insbesondere im Bereich dessen Tragfläche 131, funktional derart korrespondierend zueinander ausgestaltet, dass eine zerstörungsfreie Übernahme eines Stapels 04.j durch die Trageinrichtung 93 möglich ist. Beispielsweise sind die Abstände und die Tiefe der Aussparungen 126 und die Abstände und die Höhe der Zinken (Tragelemente) derart aufeinander abgestimmt, dass letztere von der Seite her bei aufliegendem Stapel 04.j in die Aussparungen 126 einführbar sind, ohne die unterste Lage des Stapels 04.j zu beschädigen.

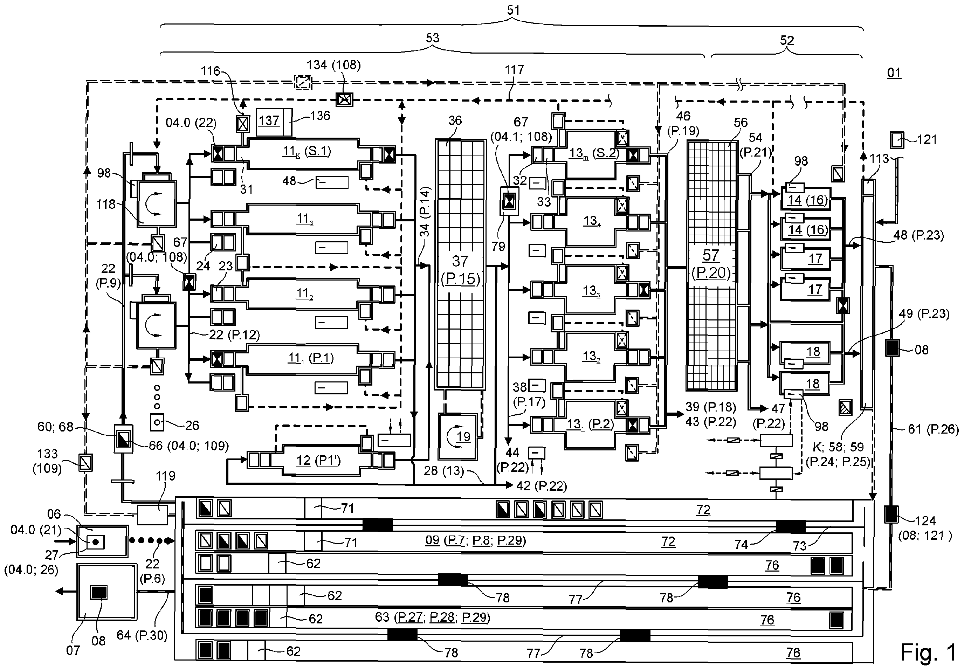

In der bevorzugten Ausführungsvariante der Anlage 01, in welcher von mindestens einem der Bearbeitungsaggregate 11; 12; 13; 14; 16; 17; 18 das bearbeitete Material in Form von als Stapel 04.j ausgebildeten Gebinde 04.j+1 von platten- oder bogenförmigen Materialabschnitten 02.j unterbrechungsfrei abführbar ist, weist die hierbei z. B. als Stapelausleger 91 ausgebildete Vorrichtung 91 beispielsweise eine nicht im Einzelnen dargestellte Hubeinrichtung mit einer vertikal durch einen Antrieb verfahrbaren Trageinrichtung 94, z. B. einem Hubboden 94, auf, durch welche ein in Auslageposition 111; 112 durch die bearbeiteten Materialabschnitte 02.j+1 zu bildende Stapel 04.j+1 während der von oben her durch eine entsprechende Fördereinrichtung 97, z. B. einen Greifeinrichtungen umfassenden Umlaufförderer 97, erfolgenden Materialablage nach unten wegförderbar ist, sodass die Ablagehöhe des obersten der Materialabschnitte 02.j+1 stets erhalten bleibt (siehe z. B. Fig. 5, 1., 2.). Weiter umfasst die Vorrichtung 91 eine zweite Hubeinrichtung mit einer vertikal durch einen Antrieb verfahrbaren Trageinrichtung 96, z. B. einem sog. Brett 96 oder bevorzugt einem sog. Rollo 93, welches in einer ersten Arbeitshöhe horizontal zwischen zumindest einen oberen Teil des bereits gebildeten Stapels 04.j+1 und die Fördereinrichtung 97, vorzugsweise jedoch zwischen die oberste Lage des bis dahin bereits gebildeten Stapels 04.j+1 und die Fördereinrichtung 97 verbringbar ist. Durch diese zweite Hubeinrichtung wird in deren Arbeitszustand durch Aufnahme der folgenden Materialabschnitte 02.j+1' ein neu zu bildender Stapel 04.j+1' getragen während die Trageinrichtung 94 der zuvor gebildete Stapel 04.j+1 darunter entfern werden kann. So ist während der Entnahme des einen Stapels 04.j+1 die Aufnahme der bearbeiteten Materialabschnitte 02.j+1' in einem neuen Stapel 02.j+1' weiter gewährleistet Nachdem der vorherige Stapel 04.j+1 aus der Auslageposition 111;

112 entnommen wurde, kann die Trageinrichtung 94 der ersten Hubeinrichtung wieder vertikal verfahren werden bis sie das untere Ende des neuen Stapels 04.j+1' erreicht hat und dieses stützt. Schließlich kann die zweite Trageinrichtung 96 beispielsweise durch horizontales bewegen wieder aus dem Stapel 04.j+1 entfernt werden und zurück in die Höhe für die höhergelegene erste Arbeitslage verbracht werden.

Grundsätzlich können die Gebinde 04.j; 04.j+1 für sich als Transporteinheiten 04.j; 04.j+1 den Bearbeitungsstufen S.j bzw. Aggregaten 11; 12; 13; 14; 16; 17; 18 zu- bzw. von diesen abgeführt werden. In hier dargestellter und vorteilhaften Ausführung werden diese jedoch auf bereits o. g. oder hiervon verschiedenen Transporthilfsmittel 26; 108; 109 als Transporteinheiten 27; 66; 67 den Bearbeitungsaggregaten 11; 12; 13; 14; 16; 17; 18 zumindest der Bearbeitungsstufe des Bedruckens S.1 und/oder des ersten mechanischen Bearbeitens S.2, zugeführt und/oder von dieser bzw. diesen abgeführt. In besonders bevorzugter Ausführung werden die Gebinde 04.j; 04.j+1 den betreffenden Bearbeitungsaggregaten 11; 12; 13; 14; 16; 17; 18, insbesondere zumindest der Bearbeitungsstufe des Bedruckens S.1 und/oder des ersten mechanischen Bearbeitens S.2, in oder auf Transporthilfsmitteln 108, z. B. in Behältnissen oder auf bevorzugt als Paletten 108 ausgebildeten Trägern 108, zugeführt und/oder von diesen abgeführt, welche von denjenigen Transporthilfsmitteln 26 bei der Anlieferung am Wareneingang 06 und von in einer Ausführungsvariante ggf. im Wareneingangslager 09 für die Einlagerung verwendeten weiteren Transporthilfsmitteln 109 und von in einer Ausführungsvariante ggf. am Warenausgang 07 für die Warenabgabe mit den Produkten 03 Transporteinheiten 124 bildenden Transporthilfsmitteln 121 verschieden sind und/oder welche als Systemtransporthilfsmittel 108 lediglich in der Anlage 01 zirkulieren. Hierzu ist im Transportpfad 22 zwischen der Anlieferung am Wareneingang 06 und dem Bearbeitungsaggregat 11; 12; 13; 14; 16; 17; 18 der ersten über das Systemtransporthilfsmittel 108 zu versorgende Bearbeitungsstufe S.j wenigstens ein als Handhabungsaggregat 118; 119, z. B. eine Wende- und/oder Konditioniervorrichtung 118; 119, ausgebildetes Aggregat 118; 119 vorgesehen, durch welches oder mithilfe dessen der zuzuführende Stapel 04.j auf ein derartiges Systemtransporthilfsmittel 108 verbringbar ist.

Das Systemtransporthilfsmittel 108 zur eingangsseitigen Versorgung der mindestens einen Bearbeitungsstufe S.j, z. B. zur Versorgung der mindestens einen Druckmaschine 11 und dem mindestens einen ersten mechanischen Bearbeitungsaggregat 13, ist im Bereich seiner Auflagefläche für die zu bearbeitenden Materialabschnitte 02.j mit Trageelementen der z. B. gabel- oder rechenartig ausgebildeten Trageinrichtung 93 der Vorrichtung zur unterbrechungsfreien Zufuhr 89 derart korrespondierenden Ausnehmungen 126 versehen, sodass die Trageinrichtung 93 mit ihren Trageelementen zur Übernahme eines Stapels 04.j zwischen Stegen 127 des Systemtransporthilfsmittels 108 - ohne zunächst über die durch die Oberseite der Stege 127 gebildete Tragebene einer für die Aufnahme des Stapels 04.j vorgesehenen Tragfläche 131 hinauszuragen - und einem aufliegenden Stapel 04.j eingeführt werden kann. Die Ausnehmungen 126 sind z. B. als rillenartige Vertiefungen 126 oder Aussparungen 126 (d. h. Spalte) in der durch die Tragebene bereitgestellten Tragfläche 131 ausgeführt. Die rillenartigen Aussparungen 126 verlaufen mit ihrer Längsrichtung bevorzugt parallel zu einer kürzeren der beiden Seitenlängen 1108; b108 der für die Aufnahme von Stapeln 04.j vorgesehenen Tragfläche 131 des Systemtransporthilfsmittels 108 und/oder in die Materialentnahmerichtung M der im Betrieb an der Vorlageposition 31; 33 positionierten Transporteinheit 67 bzw. 67.j. Die Transporteinheit 67.j kann dabei durch das Systemtransporthilfsmittel 108 und einen von diesem getragenen Stapel 04.0; 04.1; 04.j unbearbeiteten, einfach bearbeiteten oder jfach bearbeiteten Materials 02.0; 02.1; 02.j gebildet sein. Bevorzugt ist eine Vielzahl, z. B. mindestens 8, derartiger Ausnehmungen 126 über die für die Auflage der Materialabschnitte 02.j vorgesehene Breite parallel nebeneinander verlaufend vorgesehen. Beispielsweise sind je 0,25 m der für die Auflage der Materialabschnitte 02.j vorgesehene Breite b108 wenigstens eine Ausnehmung 126 und ein Steg 127 vorgesehen. Eine Mehrzahl der Stege 127 und/oder Ausnehmungen 126 weisen eine Breite von z. B. jeweils höchstens 100 mm auf.

Die Ausnehmungen 126 verlaufen auf zumindest einer Seite bis in die Stirnseite des Systemtransporthilfsmittels 108, sodass die korrespondierenden Trageelemente, z. B. Zargen der beispielweise gabel- oder rechenartig ausgebildeten Trageinrichtung 93 der Vorrichtung zur automatischen und/oder unterbrechungsfreien Materialzufuhr 89 von dieser Seite des Systemtransporthilfsmittels 108 her eintauchen kann. Auf der gegenüber liegende Stirnseite können die Ausnehmungen 126 offen oder geschlossen ausgeführt sein.

Im Sockelbereich des z. B. als Systempalette 108 ausgeführten Transporthilfsmittels 108 weist dieses wenigstens zwei Füße 128 auf, auf welchen das Transporthilfsmittels 108 auf einen Untergrund aufsetzbar ist und zwischen denen eine Aussparung 129 vorgesehen ist, in welche wenigstens ein Tragelement eines Transportmittels 79, z. B. ein Zinken eines Flurförderfahrzeuges 79, eingreifen kann um das Transporthilfsmittel 108 aufzunehmen. Beispielsweise ist auf jeder der vier Seiten eines Sockelbereichs, z. B. Unterbau 123, wenigstens eine derartige Aussparung 129 vorgesehen. Vorteilhaft ist zwischen zwei endseitig einer selben Seite vorgesehenen Füße 128 ein dritter Fuß 128 vorgesehen, welcher beidseitig durch je eine Aussparung 129 von den endseitigen Füßen 128 beabstandet ist.

Das Systemtransporthilfsmittel 108, zumindest jedoch eine die Stege 126 und Ausnehmungen 127 umfassender Tragboden 122, z. B. eine ein- oder mehrteilige Deckplatte 122 des Systemtransporthilfsmittels 108 für die unterbrechungsfreie Materialzufuhr, ist bevorzugt aus Kunststoff, insbesondere aus PET ausgebildet.

In einer Ausführung der Anlage 01 bzw. des Produktionsprozesses P wird der dem Bearbeitungsaggregat 11; 12; 13; 14; 16; 17; 18 der ersten über das Systemtransporthilfsmittel 108 zu versorgenden Bearbeitungsstufe S.j zuzuführende Stapel 04.j auf dem Transporthilfsmittel 26 zugeführt, auf welchem es im Wareneingang 06 angeliefert wurde. Im beispielsweise als Umsetz- und/oder Wendevorrichtung 118, insbesondere als Stapelwender 118, ausgebildeten Handhabungsaggregat 118 wird der Stapel 04.j von seinem vorherigen, d. h. ursprünglichen Transporthilfsmittel 26 befreit und auf das Systemtransporthilfsmittel 108 verbracht. In einer vorteilhaften Ausführung kann während des Verlagerns - ggf. unter Beaufschlagung mit einem Luftstrom und/oder eines Rüttelns - ein Ausrichten der platten- oder bogenartigen Materialabschnitte 02.j erfolgen. Im Stapelwender 118 kann dann das ursprüngliche Transporthilfsmittel 26 entnommen und durch das Systemtransporthilfsmittel 108 ersetzt, und die so gebildete, den Stapel 04.0 umfassende Transporteinheit 67 (67.0) direkt für den weiteren Prozess zur Verfügung gestellt oder aber für ein vorläufiges Lagern dem Wareneingangslager 06 zugeführt werden. Das mithilfe des Handhabungsaggregates 118 vorgenommene Umpalettieren P.11 kann direkt im Bereich des Warereingangs 06 oder für den ersten Fall auch zwischen Lager 06 und der ersten zu versorgenden Bearbeitungsstufe S.j vorgesehen sein.

In besonders für größere Anlagen 01 bevorzugter Ausführung erfolgt das Umpalettieren P.11 des angelieferten Gebindes 04.0 mittels dieses Handhabungsaggregates 118 jedoch nicht direkt von dem Transporthilfsmittel 26, auf welchem es im Wareneingang 06 angeliefert wurde, auf das genannte, zur unterbrechungsfreien Materialzufuhr ausgebildete Systemtransporthilfsmittel 108, sondern über einen vorgelagerten Prozessschritt P.31, nämlich ein Umpalettieren P.31, z. B. ein Umsetzen P.31 des Gebindes 04.0 oder Aufsetzen der das Gebindes 04.0 umfassenden Transporteinheit 27 auf ein normiertes Transporthilfsmittel 109, d. h. ein Transporthilfsmittel 109 definierter Abmessungen, im Folgenden auch als Normtransporthilfsmittel 109 bezeichnet. Dieses bildet zusammen mit dem Gebinde 04.0 und ggf. dem Transporthilfsmittel 26 eine z. B. zum Handhabungsaggregat 118 zu befördernde und/oder zunächst im Wareneingangslager 06 einzulagernde Transporteinheit 66.

Das Normtransporthilfsmittel 109 kann beispielsweise als eine weitere, lediglich in der Anlage 01 zirkulierende Palette 109, z. B. Systempalette 109, oder als eine ggf. international bzgl. der Abmessungen normierte Palette 109, z. B. Normpalette 109 wie beispielsweise eine sog. 'Europoolpalette' oder eine sog. ‚Industriepallette', vorgesehen sein. Insbesondere in der Ausführung als weitere Systempalette 109 kann diese in zumindest den Abmessungen seiner Tragfläche 132 derjenigen der erstgenannten Systempalette 108 entsprechen. Jedoch kann sie mit einer im Hinblick auf die Oberflächenstruktur und/oder das eingesetzte Material und/oder die als zulässig angegebenen Toleranzen weniger aufwändig gestaltet sein. Beispielsweise kann die Tragfläche 132 aus z. B. in Richtung der größeren der beiden Seitenlängen l109; b109 verlaufenden Deckbrettern ausgebildet sein. In anderer Ausführung kann sie - z. B. als Spritzgussteil - aus Kunststoff ausgebildet sein, jedoch ohne die Vielzahl von zumindest einseitig offenen, in Richtung der kürzeren Seite verlaufenden mit den Tragelementen der Vorrichtung 89 korrespondierenden Vertiefungen in der Tragfläche 132.

Das Um- oder Aufsetzen P.31 auf das Transporthilfsmittel 109 definierter Abmessungen erfolgt z. B. direkt im Wareneingang 06 bei der Annahme oder im Transportpfad 22 zwischen Wareneingang 06 und dem Wareneingangslager 09 mittels beispielsweise eines hierzu ausgebildeten Aggregates 119, z. B. Handhabungsaggregates 119. Dieses kann als Auf- und/oder Umsetzstation 119 ausgebildeten Handhabungsaggregates 119. Im Fall des Aufsetzens der das Gebindes 04.0 umfassenden Transporteinheit 27 auf das Transporthilfsmittel 109 erfolgt das anschließende Transportieren und/oder Lagern des Gebindes 04.0 auf dem ursprünglichen und dem weiteren Transporthilfsmittel 109. Beim späteren Umpalettieren mithilfe des Handhabungsaggregates 118 werden dann beide Transporthilfsmittel 26; 109 entfernt und durch das zur unterbrechungsfreien Materialzufuhr ausgebildete Systemtransporthilfsmittel 108 ersetzt.

Im Transportweg 22 vom Wareneingang 06 zu dem das Umpalettieren P.11 auf die Transporthilfsmittel 108 für die unterbrechungsfreien Materialzufuhr bewerkstelligenden bzw. unterstützenden Handhabungsaggregat 118 (siehe z. B. in Fig. 1 den mit angedeuteten Transportpfade) kann ein weiteres, z. B. als Konditioniervorrichtung ausgebildetes Aggregat, beispielsweise ein Auspackaggregat, vorgesehen sein, durch welches bzw. mithilfe dessen ein Auspacken P.10 des Gebindes 04.0 bewerkstelligt wird. In der hier vorliegenden Ausführung erfolgt das Auspacken P.10 beim Umpaletieren P.11 und/oder mithilfe des das Umpalettieren P.11 auf die Transporthilfsmittel 108 für die unterbrechungsfreien Materialzufuhr bewerkstelligenden bzw. unterstützenden Handhabungsaggregates 118.

Im Handhabungsaggregat 118 wird der Stapel 04.j in dieser Ausführung nun von seinem vorherigen, d. h. zumindest dem Normtransporthilfsmittel 109 und ggf. dem noch nicht entfernten ursprünglichen Transporthilfsmittel 26 befreit und auf das Systemtransporthilfsmittel 108 verbracht.

Die ggf. erst am Handhabungsaggregat 118 entfernten ursprünglichen Transporthilfsmittel 26 werden z. B. von dort über einen nicht näher bezeichneten Transportweg - beispielsweise zur Entsorgung - aus der Anlage 01 ausgeschleust (siehe z. B. in Fig. 1 den mit nichtausgefüllten Kreisen angedeuteten Transportpfad).

Für den Fall, dass o. g. Normtransporthilfsmittel 109 für das Einlagern im Wareneingangslager 06 und/oder für den Transport zum Handhabungsaggregat 118 eingesetzt werden, können diese einzeln oder bevorzugt zu mehreren in beispielsweise einem Stapel 133 zusammen gefasst von einer Rücklaufposition am Handhabungsaggregat 118 stromaufwärts (was den Materialstrom betrifft) zur Auf- und/oder Umsetzstation 119 zurück und/oder stromabwärts zu einer Auslage- oder Vorlageposition 111; 112; 114 eines im Prozess P nachfolgenden Bearbeitungsaggregates 11; 12; 13; 14; 16; 17; 18, z. B. eines Bearbeitungsaggregate 11; 12; 13; 14; 16; 17; 18 der ersten, zweiten oder der Weiterverarbeitungsstufe S.1; S.1'; S.2; S3; S4; S.4'; S.5, gefördert werden (siehe z. B. in Fig. 1 die mit der unterbrochenen Doppellinie angedeuteten Transportpfade).

Für den Fall, dass die Materialabschnitte 02.j des ein- oder mehrfach bearbeiteten Gebindes 04.j ausgangsseitig auf einem Transporthilfsmittel 26; 109; 108; 124 aufgenommen werden sollen, können an das betreffende Bearbeitungsaggregates 11; 12; 13; 14; 16; 17; 18 ausgangsseitig, insbesondere z. B. zumindest an dessen Auslageposition 111; 112, Transporthilfsmittel 26; 109; 108; 124 verbracht sein bzw. werden.

Diese können in einem einfachsten Fall der Anlage 01 in einer ersten Variante durch Transporthilfsmittel 26 gebildet sein, welche ursprünglich bei der Anlieferung Gebinde 04.0 aufgenommen haben und nach der Entnahme der Materialabschnitte 02.j zu deren Bearbeitung leer an die betreffende Auslageposition 111; 112 verbracht wurde, oder in einer zweiten Variante durch Transporthilfsmittel 124 gebildet sein, welche auch stromabwärts am Warenausgang 07 zur Aufnahme fertiger Produktgebinde 08 vorgesehen sind.

In einer vorteilhaften Ausführung der Anlage 01 mit die Gebinde 04.0 vor dem Einlagern P.7 in das Wareneingangslager 06 und/oder vor dem ersten Bearbeiten mittel- oder unmittelbar aufnehmenden Normtransporthilfsmitteln 109 können diese Normtransporthilfsmitteln 109 nach dem Entleeren, welches z. B. am ggf. vorgesehenen Handhabungsaggregat 118 durch Umpalettieren P.11 oder durch Materialentnahme eingangsseitig eines ersten Bearbeitungsaggregates 11; 12; 13; 14; 16; 17; 18 erfolgt sein kann, an die betreffende Auslageposition 111; 112 des ersten oder eines stromabwärtigen Bearbeitungsaggregates 11; 12; 13; 14; 16; 17; 18 verbracht werden.

In der hier dargestellten und besonders vorteilhaften Ausführung der Anlage 01 erfolgt ein zumindest einmaliges Umpalettieren P.11; P.31 der Materialabschnitte 02.0 des angelieferten Stapels 04.0 auf ein Systemtransporthilfsmittel 108 für eine unterbrechungsfreie Materialzufuhr an zumindest einer der Bearbeitungsstufen S.j bzw. Bearbeitungsaggregate 11; 12; 13; 14; 16; 17; 18. Ausgangsseitig kann diesem zur unterbrechungsfreien Materialzufuhr ausgebildeten Bearbeitungsaggregat 11; 12; 13; 14; 16; 17; 18 grundsätzlich in o.g. Weise ein ursprüngliches Transporthilfsmittel 26, ein Normtransporthilfsmittel 109 oder ein auch für den Warenausgang 07 verwendbares Transporthilfsmittel 124 zugeführt werden bzw. sein.

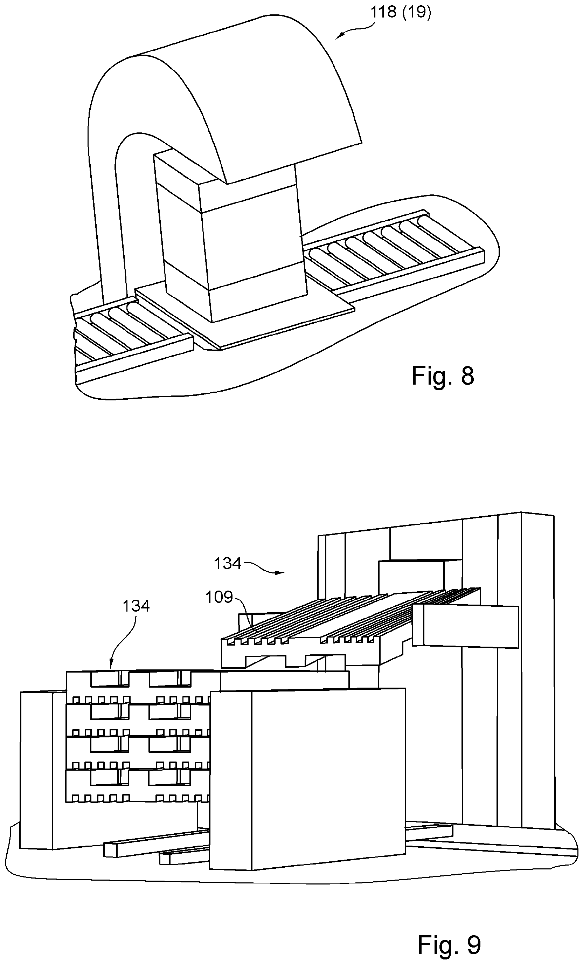

In einer zu bevorzugenden Weiterbildung der Anlage 01 bzw. Produktion P, ist stromabwärts der wenigstens einen Bearbeitungsstufe S.j mit dem mindestens einen zur unterbrechungsfreien Materialzufuhr ausgebildeten Bearbeitungsaggregat 11; 12; 13; 14; 16; 17; 18, z. B. einer Druckmaschine 11, eine weitere Bearbeitungsstufe S.j mit mindestens einem zur unterbrechungsfreien Materialzufuhr ausgebildeten Bearbeitungsaggregat 11; 12; 13; 14; 16; 17; 18, z. B. eine Stanzvorrichtung 13, vorgesehen. Ausgangsseitig des Bearbeitungsaggregates 11; 12; 13; 14; 16; 17; 18 der ersten zur unterbrechungsfreien Materialzufuhr ausgebildeten Bearbeitungsstufe S.j (insbesondere S.1) wird dann ein für die unterbrechungsfreie Materialzufuhr ausgebildetes Systemtransporthilfsmittel 108 zugeführt. Diese am Ausgang benötigten leeren Systemtransporthilfsmittel 108 können beispielsweise grundsätzlich von der Eingangsseite des selben Aggregates 11; 12; 13; 14; 16; 17; 18 oder bevorzugt - beispielsweise über eine Zwischenlagerung - eines stromabwärtigen Aggregates 11; 12; 13; 14; 16; 17; 18 stammen (siehe z. B. in Fig. 1 die durch unterbrochene starke Linie angedeuteten Transportpfade). Im Bereich des ersten, mit Gebinden 04.j auf Systemtransportmitteln 108 zu versorgenden Bearbeitungsaggregat 11; 12; 13; 14; 16; 17; 18 werden die im Eingangsbereich frei werdenden Systemtransportmittel 108 bevorzugt - zumindest zum größten Teil - zurück zum Handhabungsaggregat 118; 119 gefördert. Dies geschieht im Leerzustand z. B. einzeln oder bevorzugt zu mehreren beispielsweise in einem Gebinde 134, z. B. einem Stapel 134, zusammen gefasst von z. B. einer Sammel- und/oder Rückgabestation 136 zum Handhabungsaggregat 118. Das Sammeln und/oder Rückführen kann in einem in Fig. 9 nur grob angedeuteten Sammel- und/oder Transportgestell erfolgen. Um für das beispielsweise als Stapelwender 118 ausgebildete Handhabungsaggregat 118 bereits eine geeignete Orientierung der leeren Systemtransporthilfsmittel 108 zu erhalten, kann auf dem Transportweg, z. B. in einem Zugriffsbereich der Sammel- und/oder Rückgabestation 136, ein Wendeaggregat 137 als Handhabungsaggregat 137 zum Wenden von Transporthilfsmitteln 108, insbesondere von Systemtransporthilfsmitteln 108, vorgesehen sein.

Die über eine oder über mehrere Bearbeitungsstufen hinweg zirkulierenden Systemtransporthilfsmittel 108 können - zumindest zum Teil - im Leerzustand ebenfalls einzeln oder bevorzugt zu mehreren beispielsweise in einem entsprechenden, nicht dargestellten Gebinde, z. B. einem Stapel, zusammen gefasst von z. B. einer stromabwärtigen Sammel- und/oder Rückgabestation zum Ausgang eines stromaufwärtigen Bearbeitungsaggregat 11; 12; 13; 14; 16; 17; 18 zurückgeführt werden . Das Sammeln und/oder Rückführen können in einem nicht dargestellten Sammel- und/oder Transportgestell erfolgen, wobei für diesen Zweck ein Wenden entfallen kann.

Sollen derartige Systemtransporthilfsmittel 108 jedoch bis zum Stapelwender 118 zurückgeführt werden, kann auf dem Transportweg, z. B. in einem Zugriffsbereich der Sammel- und/oder Rückgabestation, ebenfalls ein Wendeaggregat als Handhabungsaggregat zum Wenden von Transporthilfsmitteln, insbesondere von Systemtransporthilfsmitteln, vorgesehen sein.

In der Ausführung als Stapelwender 118 ist das Handhabungsaggregat 118 dazu ausgeführt, einen in ihn im aufrechten Zustand eingebrachten Stapel 04.j um eine horizontale Achse um mehr als 90° zu verschwenken. Dabei kann der Rahmen des Stapelwenders 118 so ausgeführt sein, sodass die (imaginäre) Schwenkachse durch das Stapelprofil oder neben diesem vorbei verläuft. Vorzugsweise umfasst der verschwenkbare Teil des Stapelwenders 118 eine mit einer Mantelseite des Stapels 04.j zusammen wirkende Anschlagsfläche, insbesondere zwei mit zwei benachbarten Mantelseiten des Stapels 04.j über Eck zusammen wirkende Anschlagsflächen. Der verschwenkbare Teil oder zumindest eine der Anschlagflächen kann in Weiterbildung mit einem Mechanismus für ein Rütteln und/oder mit einem Mechanismus für ein Beblasen mit Luft ausgeführt sein.

Im Vorbeschriebenen und Nachfolgenden kann selbstverständlich für die z.T. allgemeiner gehaltene Formulierung "Transporthilfsmittels" 26; 108; 109 teilweise oder durchwegs der speziellere, auf die "Palette" bezogene Ausdruck an dessen Stelle treten.

Das Umpalettieren P.11 erfolgt beispielsweise indem zunächst die das Gebinde 04.0 und das ursprüngliche Transporthilfsmittel 26 oder/und das Normtransporthilfsmittel 109 umfassende Transporteinheit 66; 67 in den Stapelwender 118 verbracht wird, dieser um einen Winkel größer 90° verschwenkt wird, das ursprüngliche Transporthilfsmittel 26 oder/und das Normtransporthilfsmittel 109 entfernt wird, das freie Stapelende nun mit der Systemtransporthilfsmittel 108 versehen wird und schließlich der Stapel 04.0 bzw. die neu gebildete, diesen umfassende Transporteinheit 67 wieder in ihre aufrechte Lage zurück verschwenkt wird. Während dieses Zyklus' kann - z. B. vor dem Bestücken mit dem Systemtransporthilfsmittel 108 - beim genannten oder einem davon verschiedenen Verschwenkwinkel von mindestens 20° und weniger als 160° ein Rütteln und/oder Beblasen erfolgen.

Ist keine Auspackstation als eigenes Aggregat vorgesehen, so kann ein Auspacken P.10 während des Umpalettierens P.11 und/oder im Stapelwender 118 erfolgen. Hierzu wird z. B. in oben dargelegtem Zyklus nach dem Einbringen des Stapels 04.0 bzw. der den Stapel 04.0 umfassenden Transporteinheit 27; 66 zunächst die Verpackung, z. B. eine Schutzfolie und/oder ein Schutz aus Packpapier oder Pappe, entfernt.

In einer vorteilhaften Ausführung der Produktionsanlage 01 ist mehreren räumlich voneinander beabstandeten, an Konditionierung und/oder Bearbeitung der Materialabschnitte 02.j bzw. Gebinde 04.j beteiligten Aggregaten 11; 12; 13; 14; 16; 17; 18; 118; 119 und/oder eine als Teilmenge (insbesondere einer selben Stufe S.q) der verfügbaren Aggregate 11; 12; 13; 14; 16; 17; 18; 118; 119 der Anlage 01 als Gruppe vor Ort, d. h. dezentral in der Anlage 01 und/oder z. B. mit Sicht auf das zugeordnete Aggregat 11; 12; 13; 14; 16; 17; 18; 118; 119, eine in Fig. 1 jeweils insgesamt mit dem Bezugszeichen 98 angedeutete - insbesondere von einem übergeordneten Planungs- und/oder Steuersystem 139 verschiedene und/oder räumlich beabstandete - Steuereinrichtung 98 (99, 101, 102) zugeordnet, über welche das Aggregat 11; 12; 13; 14; 16; 17; 18; 118; 119 gesteuert und/oder bedient wird. Diese kann ein oder mehreren untereinander signaltechnisch verbundene Steuermittel, z. B. eine Maschinensteuerung und ggf. einen oder mehrere weitere Steuerrechner oder Steuerschaltungen, sowie eine oder mehrere Bedienerschnittstellen 99; 101; 102, z. B. einen Leitstand 99 und ggf. ein eingangs- und/oder ausgangsseitiges Bedienelement 101; 102, über welche das jeweils zugeordnete Aggregat 11; 12; 13; 14; 16; 17; 18; 118; 119 bzw. die Aggregate 11; 12; 13; 14; 16; 17; 18; 118; 119 der jeweiligen Gruppe durch das Bedienpersonal vor Ort steuer- und/oder bedienbar ist. Als Aggregat soll auch ein Mehrfachaggregat 14, 16 verstanden sein, wie es in einer o. g. Ausführungsvariante für ein ein Falzvorrichtung 14 und eine Leimeinrichtung 16 integrierendes Aggregat 14, 16 darstellt, und in welchem die integrierten Aggregate 14; 16 nicht unabhängig voneinander mit entsprechenden Materialabschnitten 02.j (bzw. Werkstücken 02.j) zu versorgen sind. Eine Gruppe von Aggregaten 11; 12; 13; 14; 16; 17; 18; 118; 119 kann beispielsweise durch Aggregate 11; 12; 13; 14; 16; 17; 18; 118; 119 eines selben Bearbeitungstyps, d. h. einer selben Bearbeitungsstufe S.j gegeben sein, welche von einer gemeinsamen Steuereinrichtung 98 (99, 101, 102), insbesondere einem selben Leitstand 99 her steuer- und/oder bedienbar sind. Damit können die einzelnen Aggregat 11; 12; 13; 14; 16; 17; 18; 118; 119, insbesondere die Bearbeitungsaggregate 11; 12; 13; 14; 16; 17; 18; 118; 119, vor Ort und grundsätzlich unabhängig voneinander als eigenständige Maschinen bedient und betrieben werden.

Grundsätzlich zwar unabhängig von, jedoch bevorzugt zusammen mit o. g. Vorrichtung 89 zur unterbrechungsfreien Materialzufuhr und/oder der Vorrichtung 91 zur unterbrechungsfreien Materialabfuhr ist eingangsseitig eines oder mehrerer der Bearbeitungsaggregate 11; 12; 13; 14; 16; 17; 18, insbesondere zumindest der als Druckmaschine(n) 11 und/oder der als erste mechanische Bearbeitungsaggregat(e)13 (z. B. Stanzvorrichtung(en) 13) ausgebildete(n) Bearbeitungsaggregat(en) 11; 12; 13; 14; 16; 17; 18, eine oben bereits erwähnte, dem Bearbeitungsaggregat 11; 12; 13; 14; 16; 17; 18 im Bereich des Einganges zugeordnete Fördereinrichtung 103, z. B. eine Rollenbahn 103, vorgesehen (siehe z. B. Fig. 3). Durch diese wird das an der Vorlageposition 23; 32 angelieferte Gebinde 04.0; 04.1 bzw. eine das Gebinde 04.0; 04.1 umfassende Transporteinheit 27; 66; 67 oder ein an einer z. B. durch die Steuereinrichtung 98 des Aggregates 11; 12; 13; 14; 16; 17; 18 verwalteten, z. B. zwischen Vorlageposition 23; 32 und Anlageposition 31; 33 vorgesehenen, Pufferposition bereits vorgehaltenes Gebinde 04.0; 04.1 bzw. eine das Gebinde 04.0; 04.1 umfassende Transporteinheit 27; 66; 67, übernommen und - z. B. wenn die Anlageposition 31; 33 aufnahmebereit ist - in diese eingebracht. Die Fördereinrichtung 103 wird bevorzugt über bzw. durch die dem Aggregat 11; 12; 13; 14; 16; 17; 18 und dem betreffenden Bearbeitungsschritt P.x zugeordnete Steuereinrichtung 98 gesteuert. Für den Fall, dass die Gebinde 04.j auf oben genannten Transporthilfsmitteln 26; 108; 109, insbesondere Systemtransporthilfsmitteln 108; 109, zugeführt werden, kann zusätzlich bevorzugt eine Fördereinrichtung 104, z. B. Rollenbahn 104, zur Abfuhr der vollständig oder ggf. lediglich teilweise gelehrten Transporthilfsmittel 26; 108; 109 vorgesehen sein. Auch diese Fördereinrichtung 104 bzw. der durch diese dargestellte innere Transportpfad bis zu einer Abnahmeposition 113 für die Transporthilfsmitteln 26; 108; 109 ist vorzugsweise die aggregatseitige Steuereinrichtung 98 gesteuert und verwaltet.

Grundsätzlich unabhängig von, jedoch bevorzugt zusammen mit o. g. Vorrichtung 89 zur unterbrechungsfreien Materialzufuhr und/oder Vorrichtung 91 unterbrechungsfreien Materialabfuhr ist ausgangsseitig eines oder mehrerer der Bearbeitungsaggregate 11; 12; 13; 14; 16; 17; 18, insbesondere zumindest der als Druckmaschine(n) und/oder als erste mechanische Bearbeitungsaggregate 13 (z. B. Stanzvorrichtung(en) 13) ausgebildete(n) Bearbeitungsaggregat(en) 11; 12; 13; 14; 16; 17; 18, eine dem Bearbeitungsaggregat 11; 12; 13; 14; 16; 17; 18 im Bereich des Ausganges zugeordnete Fördereinrichtung 106, z. B. Rollenbahn 106, vorgesehen (siehe z. B. Fig. 3). Durch diese wird das an der Auslageposition 111; 112 ausgelegte Gebinde 04.1; 04.2 bzw. eine das Gebinde 04.1; 04.2 umfassende Transporteinheit 27; 66; 67 übernommen und - z. B. wenn die Abgabeposition 29; 41 aufnahmebereit ist - an die Abgabeposition 29; 41 oder aber ggf. an eine z. B. durch die Steuereinrichtung 98 des Aggregates 11; 12; 13; 14; 16; 17; 18 verwaltete, z. B. zwischen Auslageposition 111; 112 und Abgabeposition 29; 41 vorgesehene, Pufferposition gefördert. Die Fördereinrichtung 106 wird bevorzugt über bzw. durch die dem Aggregat 11; 12; 13; 14; 16; 17; 18 und dem betreffenden Bearbeitungsschritt P.x zugeordnete Steuereinrichtung 98 gesteuert. Für den Fall, dass die Gebinde 04.j auf oben genannten Transporthilfsmitteln 26; 108; 109, insbesondere Systemtransporthilfsmitteln 108; 109, ausgelegt und abgeführt werden, kann zusätzlich bevorzugt eine Fördereinrichtung 107, z. B. Rollenbahn 107, zur Zufuhr von leeren Transporthilfsmitteln 26; 108; 109 zur Auslageposition 11; 112 hin vorgesehen sein. Auch diese Fördereinrichtung 107 bzw. der durch diese abgebildete innere Transportpfad von einer Vorlageposition 114 zur Auslageposition 111; 112 ist vorzugsweise durch bzw. über die aggregatseitige Steuereinrichtung 98 gesteuert und verwaltet.

Die jeweilige Abnahmeposition 113 und eine Vorlageposition 114 für die leeren Transporthilfsmittel 26; 108; 109 können durch einen inneren, d. h. einen durch das Aggregat 11; 12; 13; 14; 16; 17; 18 verwalteten und/oder gesteuerten Transportpfad, oder ggf. durch einen äußeren, d. h. einen nicht durch das Aggregat 11; 12; 13; 14; 16; 17; 18 verwalteten und/oder gesteuerten Transportpfad miteinander verbunden sein. Auf diesem können beispielsweise leere Transporthilfsmittel 108 zum Ausgang und/oder Gebinde 04.j vom Ausgang für eine nochmalige Bearbeitung zum Eingang des Aggregat 11; 12; 13; 14; 16; 17; 18 verbracht werden. Zusätzlich oder stattdessen kann die Abnahmeposition 113 für die leeren Transporthilfsmittel 26; 108; 109 über einen Transportpfad 116; 117 mit einer im Materialstrom stromaufwärts gelegenen Aggregat 11; 12; 13; 118; 119, z. B. einem ggf. vorgeordneten Bearbeitungsaggregat 11; 12; 13 oder bevorzugt einem Handhabungsaggregat 118; 119 zu dessen Belieferung mit leeren Transporthilfsmitteln 108; 109 verbunden sein. In einer zu bevorzugenden Ausführung ist zumindest ein Transportpfad 116 zum Transport leerer Systemtransporthilfsmittel 108; 109 von der Abnahmeposition 113 des im Produktionsprozess ersten mit Mitteln zur unterbrechungsfreien Materialzufuhr ausgebildeten Bearbeitungsaggregat 11; 12; 13; 14; 16; 17; 18 zu einer Vorlageposition eines stromaufwärts diesem Bearbeitungsaggregat 11; 12; 13; 14; 16; 17; 18 vorgeordneten, für ein Umsetzen ausgebildeten Handhabungsaggregates 118; 119 vorgesehen. Auf diesem Transportpfad 116, welcher in Fig. 1 schematisch lediglich für das oberste Aggregat $11_k$ angedeutet ist, ist bevorzugt o. g. Wendeaggregat 137 und/oder o. g. Sammel- und/oder Rückgabestation 136 vorgesehen. Zusätzlich ist bevorzugt wenigstens ein Transportpfad 117 zum Transport leerer Systemtransporthilfsmittel 108; 109 von einer Abnahmeposition 113 eines stromabwärtigen Bearbeitungsaggregate 11; 12; 13; 14; 16; 17; 18 oder der Packstufe K zu einer ausgangsseitigen Vorlageposition 114 eines stromaufwärts gelegenen Bearbeitungsaggregates 11; 12; 13; 14; 16; 17; 18 vorgesehen.

Im Bereich der Packstufe K können die Produkte 03 in den Produktgebinden 08 auf Transporthilfsmittel 121, z. B. als Warenausgangspaletten 121 verbracht sein bzw. werden, die später am Warenausgang 07 die Anlage 01 zusammen mit den Produktgebinden 08 als Transporteinheiten 124 verlassen. Das für den Warenausgang 07 vorgesehene Transporthilfsmittel 121 unterliegt beispielsweise einem Standard und kann als eine international bzgl. der Abmessungen standardisierte Palette 124, z. B. eine sog. 'Europoolpalette' oder eine sog. 'Industriepallette', vorgesehen sein. Für das Standardtransporthilfsmittel 121 kann das zum Normtransporthilfsmittel 109 ausgeführte anzuwenden sein.

So können beispielsweise in der Anlage 01 mindesten drei Patellentypen gehandhabt bzw. zu handhaben sein, wobei beispielsweise Formatpaletten 27 nach dem Entladen auszuschleusen sind, wenigstens ein Typ Systempalette 108; 109 in der Anlage 01 (zumindest zwischen Wareneingangslager 01 und Packstufe K) zirkuliert, und eine Standardpalette 121 die Anlage 01 verlässt. In einer bevorzugten Weiterbildung sind zwei Typen Systempaletten 108; 109 vorgesehen, eine für die Stecken vom Wareneingang 06 oder zumindest vom Eingang des Lager 09 bis zu einem Umsetzen vor einem Bearbeitungsschritt P.x mit unterbrechungsfreier Materialzufuhr, und ein zweiter, z. B. für eine unterbrechungsfreie Materialzufuhr geeignete Systempalette 109 für den oder einen Teil des Bearbeitungsabschnitt 53 bis mindestens zum Eingang eines letzten Bearbeitungsschrittes P.x mit unterbrechungsfreier Materialzufuhr, spätestens zur Packstufe K.

Um - z. B. trotz dezentraler und autonomer Maschinen - die Produktion P von Aufträgen A(n) in der Anlage 01 übergeordnet zu planen und effizient durchführen zu können, ist eine dem Gesamtprozess übergeordnete Produktion- und Ressourcenplanung 139 vorgesehen, bei welcher u. a einerseits die angenommenen und durchzuführenden Aufträge A(n) erfasst und charakterisiert werden ("Auftragsbeschreibung") und andererseits eine Planung für das Einlasten der für die anstehenden Aufträge A(n) erforderlichen Bearbeitungsschritte P.x an den verfügbaren Aggregaten 11; 12; 13; 14; 16; 17; 18 ("Ablauf- und Ressourcenplanung").

Die Produktion- und Ressourcenplanung könnte zwar grundsätzlich rein manuell erfolgen, ist jedoch bevorzugt als datenverarbeitungsgestütztes Planungs- und/oder Steuersystem 139, z. B. als ein Produktionsplanungs- und Prozesssteuerungssystem 139, vorgesehen, in welchem u. a die durchzuführenden Aufträge A(n) angelegt und charakterisiert werden ("Auftragsbeschreibung") und in welchem anderseits die Belegung der verfügbaren Ressourcen, insbesondere der in der Anlage 01 vorgehaltenen Bearbeitungsaggregate 11; 12; 13; 14; 16; 17; 18, geplant und verwaltet wird ("Ressourcenplanung"). Dies kann grundsätzlich auf beliebigem Wege realisiert sein, z. B. manuell durch Erstellen entsprechender Listen und/oder Tabellen in beispielsweise einer DV-Einrichtung des Planungs- und/oder Steuersystem 139, durch Eingaben in Feldern eines menügeführten, im Planungs- und/oder Steuersystem 139 implementieren Anwendungsprogrammes, bis hin zu einer teilautomatisierten Planung mithilfe einer im Planungs- und/oder Steuersystem 139 implementierten Planungssoftware.

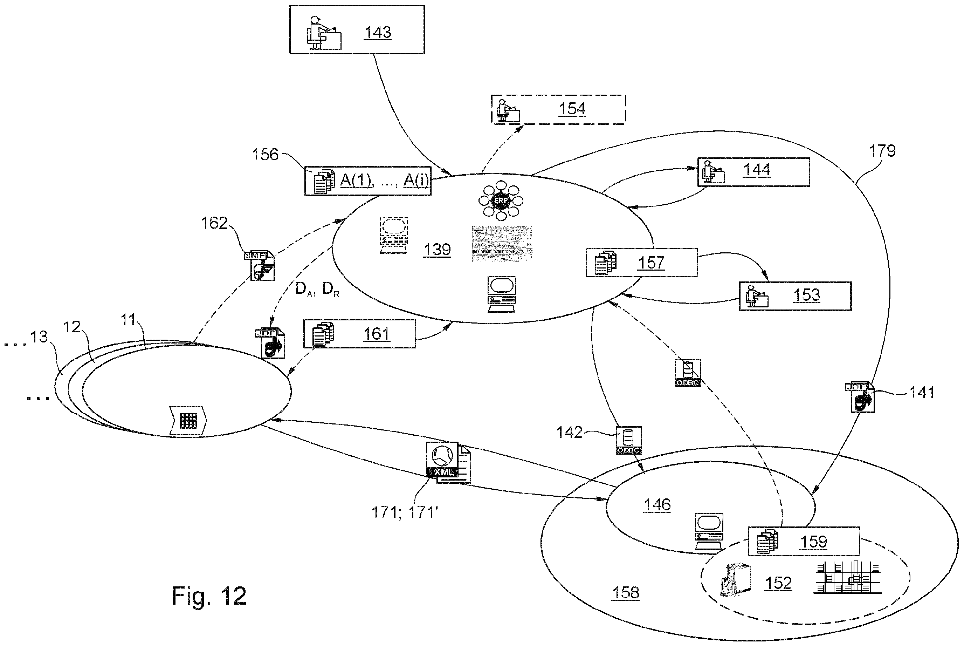

Das Planungs- und/oder Steuersystem 139 ist als Datenverarbeitungssystem mit einem in einer einteiligen oder mehrteilig verteilten Datenverarbeitungseinrichtung implementierten Datenverarbeitungsprogramm aus einem oder mehreren verknüpften Programmmodulen mit wenigstens einer Bedienerschnittstelle ausgebildet, über welche - beispielsweise in einer Auftragsannahme 143 (siehe z. B. Fig. 12) - Neuaufträge A(n) beispielsweise softwareunterstützt unter Verwendung einer eindeutigen Bezeichnung $a_n$ angelegt und, z. B. zumindest was die erforderlichen Bearbeitungsschritte P.x betrifft, beschrieben werden bzw. werden können, und/oder über welche - beispielsweise in der Produktionsplanung 144 durch eine Bedienperson (z. B. einer Produktionsleitung 153) - die Ablauf- und Ressourcenplanung, z. B. zumindest was die Einlastung auf die verfügbaren Aggregate 11; 12; 13; 14; 16; 17; 18 betrifft, vorzugsweise softwareunterstützt vorgenommen werden bzw. werden können. Des Weiteren ist das Planungs- und/oder Steuersystem 139 bevorzugt dazu ausgebildet, Angaben aus der Auftragsbeschreibung und Daten bzw. Ergebnisse aus der Ablauf- und Ressourcenplanung in einer ihr zugeordneten oder mit diesem verbundenen Speicherstruktur als strukturierte Daten $D_A$; $D_R$ in einem definierten Format, insbesondere sowohl was die Art (z. B. die physikalische Ausprägung und Organisation der Signalübertragung) der Datenübertragung als auch was die Strukturierung und/oder Formulierung der Inhalte (z. B. die Beschreibungssprache) betrifft, bereitzustellen.

In einer besonders bevorzugten Ausführung der Anlage 01 umfasst diese neben der zumindest datenverarbeitungstechnisch unterstützten Produktion- und Ressourcenplanung 139 ein System zur Steuerung des Materialflusses mit einer Materialflusssteuerung 146, durch welche zumindest ein einen oder mehrere Prozessschritte P.6; P.9, P.12; P.13; P.14; P.19; P.21; P.22; P.23 P.26; P.30 umfassender Transportprozess von Materialgebinden 04.j zwischen einer der Bearbeitungsstufen S.i und einer für das herzustellende Produkt 03 nachfolgenden Bearbeitungsstufen S.i+1 koordiniert wird. Vorteilhaft wird durch die Materialflusssteuerung 146 der Materialfluss zwischen zumindest dem Ausgang der ersten der Bearbeitungsstufen S.1 und dem Eingang in eine dritte oder gar die letzte der mindestens zwei, z. B. mindestens drei Bearbeitungsstufen S.a, insbesondere jedoch zwischen einer der ersten der Bearbeitungsstufen S.1 vorgeordneten Konditionierstufe (z. B. einem Handhabungsaggregat 118; 119) und zumindest dem Eingang in die letzte der Bearbeitungsstufen S.a oder einer Packstufe K oder gar einer Lagerung in einem Fertiglager 63, oder einem vorgeordneten Wareneingangslager 09 und zumindest dem Eingang in die letzte der Bearbeitungsstufen S.a oder einer Packstufe K oder gar einer Lagerung in einem Fertiglager 63 oder aber gar zwischen einem Wareneingang 06 und zumindest dem Eingang in die letzte der Bearbeitungsstufen S.a oder einer Packstufe K oder gar einer Lagerung in einem Fertiglager 63, koordiniert und/oder gesteuert. Die Steuerung durch das Materialflusssteuerung 146 ist bevorzugt im Sinne einer Vorgabe eines Transportauftrages, d. h. einer Transportbewegung zwischen einer Anfangs- (Start) und Endposition (Ziel), nicht jedoch als Bewegungssteuerung selbst zu begreifen.

Unabhängig vom o. g. Weg der Gewinnung über rein manuelle Eingabe bis hin zur teilautomatisierten Generierung liegen somit im Planungs- und/oder Steuersystem 139 aus der durchgeführten Planung stammende Informationen $D_A$ zu den geplanten Aufträgen A(n), z. B. die jeweilige Auftragsbeschreibung mit zumindest der eindeutigen Bezeichnung $a_n$ und den erforderlichen Arbeitsschritten, und Informationen $D_R$ zur Ablauf- und Ressourcenplanung, d. h. zur Einlastung der Arbeitsschritte an den Bearbeitungsaggregaten 11; 12; 13; 14; 16; 17; 18, vor, welche in strukturierter und maschinenlesbarer Form - z. B. über einen Signalpfad oder mobilen Datenträger und ggf. über eine oder mehrere entsprechend eingerichtete Kommunikationsschnittstellen - an einen Adressaten, insbesondere an zumindest die Materialflusssteuerung 146 als Adressaten, übermittelbar bzw. von diesem einsehbar sind, wo sie unter Anwendung der für die Datenübertragung und die Beschreibungssprache vorliegenden Formatvorgaben lesbar und/oder auswertbar sind. Derartige Informationen $D_A$; $D_R$ zu den geplanten Aufträgen A(n) und/oder zur Ablauf- und Ressourcenplanung können auch einer oder mehreren der den Aggregaten 11; 12; 13; 14; 16; 17; 18; 118; 119 und/oder Gruppen derartiger Aggregate 11; 12; 13; 14; 16; 17; 18; 118; 119 zugeordneten Steuereinrichtungen 98 als Adressaten 98 übermittelt und/oder zur Verfügung gestellt sein bzw. werden. Das Bedienpersonal kann dann vor Ort zur Abarbeitung des Auftrages die entsprechende "Produktion", d. h. die Daten zur Abarbeitung des betreffenden Bearbeitungsschrittes P.x für den spezifischen Auftrag A(n) aus den vom Produktion- und Ressourcenplanung 139 bereitgestellten Informationen "laden".

Die Informationen $D_A$; $D_R$ sind bevorzugt in Form strukturierter Daten $D_A$; $D_R$ angelegt und stellen z. B. einerseits als die Auftragsbeschreibung abbildende Auftragsdaten $D_A$ und andererseits als die Ablauf- und Ressourcenplanung abbildende Arbeitsplandaten $D_R$ jeweilige Plandaten $D_A$; $D_R$ für den bevorstehenden Produktionsprozess P bzw. die anstehenden Produktionsprozesse P dar. Auftragsdaten $D_A$ und Arbeitsplandaten $D_R$ können grundsätzlich in einem Informationspaket gemeinsam oder aber auch als voneinander getrennte Informationspakete bereitgestellt sein bzw. werden, die z. B. jedoch zumindest über die eindeutigen Bezeichnungen $a_n$ der Aufträge A(n) einander zugeordnet oder zuordenbar sind.

Grundsätzlich können die strukturierten Daten $D_A$; $D_R$ in jeder beliebigen Form als Informationen bzw. Informationspakete definiert abbildende Signale bzw. Signalfolgen über beispielsweise entsprechend ausgebildete, leitungsgebundene oder drahtlose Signalverbindungen 138; 181, z. B. Signalleitungen, übertragen sein bzw. werden. Bevorzugt ist zur Datenübertragung jedoch eine Netzwerkverbindung 138; 181 eines Netzwerkes grundsätzlich beliebiger Topologie, z. B. eine Busverbindung 138; 181, zwischen dem Planungs- und/oder Steuersystem 139 und dem Adressaten bzw. Nutzer o. g. Daten $D_A$; $D_R$, z. B. der Materialflusssteuerung 146 und/oder den Steuereinheiten 98, vorgesehen, über welche die Datenübertragung, insbesondere ein Datenaustausch, definiert über das dem Netzwerk zugrunde liegende Protokoll erfolgt. Ggf. kann das zugrundeliegende Netzwerk heterogen ausgeführt sein, wobei für diesen Fall entsprechende Schnittstellen und/oder Koppler vorliegen.

Die Daten $D_A$; $D_R$ selbst können grundsätzlich in beliebiger Struktur bereitgestellt und übertragen sein bzw. werden. So können sie in einer einfachen Ausführung in Form einer band- oder schlauchartigen Informationsfolge (z. B. eine Folge von Zeichen und/oder Zeichenketten), dem das verabredete Signalmuster und die Beschreibungssprache zugrunde liegt, bereitgestellt und übermittelt sein bzw. werden.

In bevorzugter Ausführung werden die Daten $D_A$; $D_R$ jedoch als Inhalte einer oder mehrerer Dateien 141; 142 oder als Zugriff 142; 141 auf die Daten umfassende Medien bereitgestellt und/oder übermittelt. Als Datei 141; 142 kann diese Information $D_A$; $D_R$ in bekannter Weise über die entsprechende Signalverbindung 138 zwischen dem Planungs- und/oder Steuersystem 139 und dem Adressaten bzw. Nutzer 146; 98 übermittelt und/oder ausgetauscht werden. Unter der Bereitstellung und Übertragung der Daten $D_A$; $D_R$ soll hier neben der Übertragung einer diese Daten $D_A$; $D_R$ enthaltene Datei 141; 142 gleichermaßen auch eine Bereitstellung einer derartigen Datei 141; 142 durch das Planungs- und/oder Steuersystem 139 auf einen Fileserver als auch ein Zugriff 142; 141 auf derartige Daten $D_A$; $D_R$ durch den dann als "Nutzer" dieser Daten $D_A$; $D_R$ zu verallgemeinernden "Adressaten" verstanden sein.

In vorteilhafter Ausführung ist die Datei 141; 142 in Form eines offenen Dateiformates, insbesondere eines offenen Textformates ausgebildet. Bevorzugt liegt die Datei 141; 142 als ein in der Auszeichnungssprache XML oder einer hieraus durch Erweiterung und/oder Weiterentwicklung hervorgehenden Auszeichnungssprache abgefasste Textdatei 141; 142, z. B. als sog. XML-Dokument 141; 142, vor.

Die genannten und vorgehaltenen Plandaten $D_A$; $D_R$ können - z. B. solange die Schritte und/oder Teilschritte noch nicht begonnen sind - durch die Produktionsplanung 144 änderbar sein.

In der bevorzugten Ausführung der Anlage 01 als Verpackungsroh- und/oder Bedruckstoffe ver- und/oder bearbeitende und/oder einer Verpackungs- und/oder Druckerzeugnisse 03 produzierende Produktionsanlage 01 ist durch das Planungs- und/oder Steuersystem 139 bevorzugt zumindest eine o. g., Auftragsdaten $D_A$ und/oder Arbeitsplandaten $D_R$ umfassende Datei 141; 142 im sog. Job Definition Format (JDF-Format, z. B. zumindest in der Version 1.4 aufwärts) bereitstellbar und/oder dem Nutzer zu übermitteln oder zugänglich zu machen. Das JDF-Format stellt hierbei ein offenes Dateiformat dar, das eine standardisierte Sprache zur Beschreibung von Prozessen in der Grafischen und Druckindustrie bereitstellt und auf der XML-Auszeichnungssprache basiert. Die Spezifikation des Formates ist durch das Konsortium der CIP4 erstellt und wird fortgeschrieben. International Cooperation for the Integration of Processes in Prepress, Press and Postpress (CIP4).

Für Produktionsanlagen 01 zur mehrfachen, insbesondere mehrstufigen Bearbeitung aus anderen Branchenbereichen kann ein entsprechender Standard im Einzelfall verabredet sein bzw. werden oder aber wie im o. g. Fall bereits vorliegen und nutzbar sein.

Für die durch das Planungs- und/oder Steuersystem 139 bereitzustellenden Plandaten $D_A$; $D_R$ sind die Mindestanforderungen an die bereitzustellenden Angaben und/oder Werte und ggf. deren exakte Syntax und/oder Semantik in einer sog. Schnittstellenbeschreibung zu definieren. Insbesondere sind - beispielsweise definiert durch die Schnittstellenbeschreibung - als in den Auftragsdaten $D_A$ bereitzustellende Angaben zumindest die eindeutige Bezeichnung $a_n$ des Auftrages A(n) sowie die für den Auftrag geplanten Bearbeitungsschritte P.x vorgesehen. Vorzugsweise können noch Angaben zum zu bearbeitenden Material und/oder den zu verarbeitenden Materialeinheiten 02.0, und beispielsweise zusätzlich Angaben zum Kunden vorgesehen sein. Als in den Arbeitsplandaten $D_R$ bereitzustellenden Angaben ist z. B. die Abfolge einer Einlastung von Bearbeitungsschritten P.x unterschiedlicher Aufträge A(n) an Bearbeitungsaggregaten 11; 12; 13; 14; 16; 17; 18 mit Bezug auf den spezifischen Auftrag, z. B. die Bezeichnung $a_n$, vorgesehen. Vorzugsweise können noch Angaben zur Verfügbarkeit einzelner Aggregate 11; 12; 13; 14; 16; 17; 18 und ggf. zusätzlich spezifische Angaben zu Aggregaten 11; 12; 13; 14; 16; 17; 18 vorgesehen sein.

Das Planungs- und/oder Steuersystem 139 ist somit dazu eingerichtet, dass in und/oder mittels dem Planungs- und/oder Steuersystem 139 Aufträge A(n) angelegt und hinsichtlich der erforderlichen Bearbeitungsschritte P.x beschrieben werden können sowie ein Plan für die Einlastung der hierzu notwendigen Bearbeitungsschritte P.x erstellt werden kann. Dabei soll es insbesondere dazu ausgebildet sein, maschinenlesbare Informationen $D_A$ zum Auftrag A(n) bevorzugt in Form strukturierter Daten $D_A$, z. B. als die Auftragsbeschreibung abbildende Auftragsdaten $D_A$ bereitzustellen. Diese Bereitstellung kann hier beispielsweise in einem sog. JDF-Jobticket, einer Art elektronischen "Auftragstasche", erfolgen. Insbesondere soll es auch dazu ausgebildet sein, dem Produktionsplaner die Möglichkeit zu geben, die anstehenden Aufträge A(n) auf die vorhandenen Ressourcen, d. h. die Aggregate, zu verteilen und diese Informationen $D_R$ zum Arbeitsplan bevorzugt in Form strukturierter Daten $D_R$, z. B. als die Ablauf- und Ressourcenplanung abbildende Arbeitsplandaten $D_A$ bereitzustellen. Die Bereitstellung der Auftragsdaten $D_A$ und/oder der Arbeitsplandaten $D_R$ kann jeweils über die Übermittlung oder ein Abrufen (z. B. von einem Dateiserver) entsprechender Dateien 141 (142) oder über den Zugriff 142 (141) auf die betreffenden Daten $D_A$; $D_R$ in Datensätzen einer als Datei 166 oder bevorzugt als Datenbank 166 ausgebildeten Datenquelle 166 erfolgen. In einer exemplarisch dargestellten Ausführung erfolgt die Bereitstellung der Auftragsdaten $D_A$ für einen Nutzer bzw. Adressaten 146; 98, insbesondere an die Materialflusssteuerung 146, über eine o. g. Datei 141 und die Bereitstellung der Arbeitsplandaten $D_R$ durch Zugriff 142 der Materialflusssteuerung 146 über ein entsprechendes Datenbankinterface auf die Daten einer die Arbeitsplandaten $D_R$ beinhaltenden, z. B. im Planungs- und/oder Steuersystem 139 integrierten Datenbank 166. Beide Wege, also über eine Datei 141 (142) oder einen Zugriff 142 (141) auf abgelegte Daten stellen jedoch eine Bereitstellung von Daten $D_A$; $D_R$ für die Materialflusssteuerung 146 aus dem übergeordneten Planungs- und/oder Steuersystem 139 dar.

In einer hier dargestellten vorteilhaften Ausführung umfasst das Planungs- und/oder Steuersystem 139 ein sog. Enterprise-Ressource-Planning-System, kurz ERP-System, welches die Beschreibung der vorgesehenen Bearbeitungsschritte P.x für einen geplanten Auftrag A(n) ermöglicht und ggf. eine jeweilige Aktualisierung eines aktuellen Status des Auftrages (n) nach jedem erfolgten Bearbeitungsschritt P.x ermöglicht. Das ERP kann in diesem Fall daraus Informationen darüber liefern, welcher Bearbeitungsschritt P.x als nächstes ansteht und ermöglicht es, sich über die Zustände der eingepflegten Aufträge A(n) zu informieren. Zudem können im ERP-System die einzelnen Produktionsläufe auf den zur Verfügung stehenden Bearbeitungsaggregaten 11; 12; 13; 14; 16; 17; 18 (Ressourcen) geplant werden und auf Basis der Rückmeldungen von diesen Aggregaten 11; 12; 13; 14; 16; 17; 18 angezeigt werden, ob die Abarbeitung nach Plan oder mit Abweichungen erfolgt. Vom Planungs- und/oder Steuersystem 139, insbesondere des ERP-Systems, her kann auch ein Berichtswesen an die Unternehmensleitung 154 möglich und/oder vorgesehen sein (siehe z. B. Fig. 12). Hierbei sind beispielsweise Daten zu den aktuell vorliegenden Aufträgen in einem Auftragsbestand 156 und/oder Übersichten über Betriebsdaten und/oder Verbrauchsmaterialien in entsprechenden Zusammenstellungen und beispielsweise ein z. B. die Arbeitsplandaten $D_R$ enthaltender Produktionsplan 157 einsehbar. Vom Planungs- und/oder Steuersystem 139, insbesondere des ERP-Systems, her können auch Prozesswerte 161 wie z. B. Voreinstellwerte 161 über einen entsprechenden Signalpfad an die Bearbeitungsaggregate 11; 12; 13; 14; 16; 17; 18 übermittelt werden. Auch o.g. Auftragsdaten $D_A$ und/oder Arbeitsplandaten $D_R$ können über entsprechende Signalpfade an die Bearbeitungsaggregate 11; 12; 13; 14; 16; 17; 18 übermittelt werden. Umgekehrt können Prozessdaten 162 als Rückmeldungen von einem oder mehreren Bearbeitungsaggregaten 11; 12; 13; 14; 16; 17; 18 über entsprechende Signalpfade an das Planungs- und/oder Steuersystem 139, insbesondere das ERP-System, rückgemeldet werden. In o. g. vorteilhafter Ausführung der Anlage 01 zur Herstellung von Verpackungs- und/oder Druckprodukten kann die Rückmeldung im JMF-Format (Job-Message-Format) erfolgen, welches ein zum o. g. JDF-Format kompatibles Format für Rückmeldungen und ein Tracking darstellt.

Geplant über und/oder überwacht durch das übergeordnete Planungs- und/oder Steuersystem 139 erfolgt nun die Produktions- und Prozesssteuerung zur Herstellung des spezifischen Produktes 03 entlang einer entsprechenden Prozesskette 147 mit den für die Herstellung des Produktes 03 erforderlichen Prozessschritten P.x; P.y (siehe z. B.

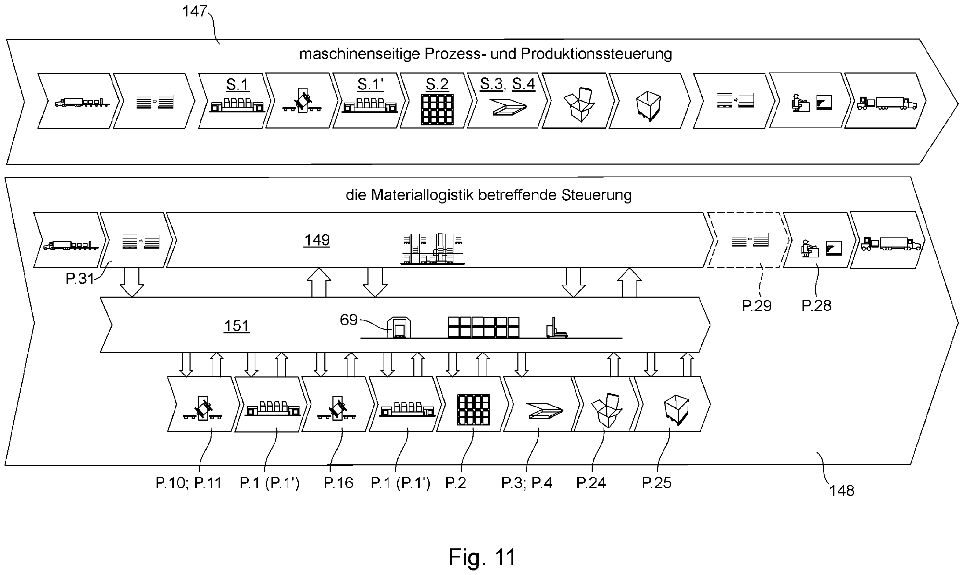

Fig. 11). Parallel hierzu ist eine Vielzahl von Handhabungsschritten P.y, insbesondere eine Vielzahl von Transporten P.6; P.9, P.12; P.13; P.14; P.19; P.21; P.22; P.23 P.26; P.30 zwischen z. B. Wareneingang 06, Lagern 09; 37; 57; 63 und Aggregaten 11; 12; 13; 14; 16; 17; 18; 19; 118; 119 und/oder eine Vielzahl von Ein- oder Auslagerungen P.7; P8; P.27; P.28 und/oder von Zwischenlagern P.15; P.20 vonnöten, welche z. B. in Fig. 11 insgesamt durch die Zusammenfassung in einer für die Logistik stehenden Prozesskette 148 angedeutet sind. In der die Materiallogistik betreffenden Prozesskette 148 verlaufen parallel beispielsweise Einlager-, Auslager- und/oder Umlagerprozesse in einem das Wareneingangs- und/oder -ausgangslager 09; 63 betreffenden Prozessstrang 149 und die o. g. Transporte P.6; P.9, P.12; P.13; P.14; P.19; P.21; P.22; P.23 P.26; P.30 in einem die jeweiligen Transportprozesse der Gebinde 04.j betreffenden, mit den erforderlichen Bearbeitungs- und Handhabungsschritten P.1; P.1'; P.2; P.3; P.4; (P.4') P.5; P.11; P.11; P.24; P.25 aus der Prozesskette 147 interagierenden Prozessstrang 151.

Wie bereits oben angedeutet, werden durch die Materialflusssteuerung 146 Transportprozesse von Materialgebinden 04.j zwischen zumindest einer der Bearbeitungsstufen S.i und einer für das herzustellende Produkt 03 nachfolgenden Bearbeitungsstufen S.i+1 koordiniert und/oder gesteuert. Die Einbindung von Transportprozessen zwischen Aggregaten 11; 12; 13; 14; 16; 17; 18; 19; 118; 119 der Anlage 01 in die Materialflusssteuerung 146 ist grundsätzlich bis hin zur Einbindung sämtlicher Transportstrecken 22; 28; 34; 39; 54; 61; 64; 116; 117 und ggf. vorliegende diesbezügliche Teilstrecken skalierbar, sodass die folgenden Ausführungen - wenn nicht explizit abweichend hiervon formuliert - allgemein die in die Materialflusssteuerung 146 eingebundenen Transportstrecken 22; 28; 34; 39; 54; 61; 64; 116; 117 und die hiervon betroffenen Aggregate 11; 12; 13; 14; 16; 17; 18; 19; 118; 119 in der entsprechenden Ausbaustufe betrifft.

Ein in die Materialflusssteuerung integrierten Teil der Anlage umfasst beispielsweise zumindest eine oder mehrere Druckmaschinen 11 und mindestens einen oder mehrere Bearbeitungsaggregate 11; 12; 13; 14; 16; 17; 18 zumindest eines weiteren Typs, z. B. eine oder mehrere Stanzvorrichtungen. Ein in die Materialflusssteuerung 146 integrierten Teil der Anlage umfasst z. B. zumindest den der Druckmaschine 11 eingangsseitig direkt vorgeordneten und ausgangsseitig direkt nachgeordneten Transportpfad zu einem stromabwärtigen weiteren Aggregat und/oder zu einem Pufferlager. Es können jedoch auch ein oder mehrere weitere Aggregate 11; 12; 13; 14; 16; 17; 18; 19; 118; 119 sowie ein oder mehrere Transportstrecken 22; 28; 34; 39; 54; 61; 64; 116; 117 - z. B. entsprechend der dargelegten Ausbaustufen - eingebunden sein.

Innerhalb der zur mehrfachen und/oder mehrstufigen Produktion ausgebildeten Produktionsanlage 01 übernimmt somit für die eingebundenen Transportstrecken 22; 28; 34; 39; 54; 61; 64; 116; 117 die Materialflusssteuerung 146 - wenn z. B. entsprechend aktiviert - die Koordination und/oder Steuerung der erforderlichen Transporte P.6; P.9; P.12; P.13; P.14; P.19; P.21; P.22; P.23 P.26; P.30 und, falls integriert, Prozesse des Ein- und/oder Auslagerns.

Hierbei ist unter dem Koordinieren und Steuern der Transportprozesse durch die Materialflusssteuerung 146 zumindest die übergeordnete Steuerung, also die Veranlassung der Transportbewegungen und ggf. deren Protokollierung und/oder Überwachung, zu verstehen. Die konkrete Bewegungssteuerung der hierfür durch die Materialflusssteuerung 146 angesprochenen Transportmittel 65; 68; 69; 74; 78; 79 bzw. Gruppe oder Kette von Transportmitteln 65; 68; 69; 79 entsprechend des erfolgten Transportauftrages $T_M$ erfolgt durch jeweilige Steuermittel einer Transportmittelsteuerung, deren z. B. als Steuerschaltungen oder als Steuerprogramme ausgebildete Steuerkreise sämtlich oder zum Teil ggf. ebenfalls Teil der zentralen Materialflusssteuerung 146 oder aber dezentral vorgesehen sein können.

In der Ausführung von als fahrerlose Transportfahrzeuge 65; 68; 79 ausgebildeten Transportmittel 60; 65; 68; 79 können diese sämtlich oder zum Teil als mechanisch auf einer jeweiligen Transportstrecke geführte, insbesondere schienengebundene Transportfahrzeuge 60; 65; 68; 79 eines mechanisch auf eine auf mechanischer Führung beruhenden Transportsystems oder sämtlich oder zum Teil als berührungslos, d. h. ohne mechanische Führung, entlang einer Transportstrecke geführtes Transportfahrzeug 60; 65; 68; 79 eines entsprechend eingerichteten Systems (FTS) ausgeführt sein. In beiden Fällen wird der Transportauftrag $T_M$ von der Materialflusssteuerung 146 an die für die Bewegungssteuerung des Transportmittels 60; 65; 68; 79 verantwortliche Transportmittelsteuerung gerichtet. Ein fahrerloses Transportfahrzeug 65; 68; 79 ist dabei über die Transportmittelsteuerung signaltechnisch mit einer Materialflusssteuerung 146 verbunden, wobei letztere bevorzugt über die Transportmittelsteuerung mittelbar mit wenigstens einem weiteren, mechanisch von dem erstgenannten Transportmittel 65; 68; 69; 74; 79 unabhängig betreibbaren Transportmittel 65; 68; 79 in Signalverbindung steht.

Für den Fall von als berührungslos geführten fahrerlose Transportfahrzeuge 65; 68; 79 ausgebildeten Transportmitteln 65; 68; 79 umfassen die Steuermittel, d. h. die Transportmittelsteuerung, z. B. eine die Transportaufträge $T_M$ entgegen nehmende übergeordnete Steuereinheit, z. B. einen Fahrzeugleitrechner, und jeweils den Transportmitteln 65; 68; 79 zugeordnete Steuereinheiten, z. B. Fahrzeugrechner, welche die von der übergeordneten Steuereinheit entgegen genommenen, den gesamten Transportprozess oder Teilprozesse betreffende Befehle umsetzt. Der Transportauftrag $T_M$ wird hierbei dann z. B. an die übergeordneten Steuereinheit gerichtet, welche das Transportfahrzeuge 65; 68; 79 ggf.

auswählt und den Transportauftrag $T_M$ - insgesamt oder bevorzugt sukzessive in Teilstrecken aufbereitet - an die Steuereinheit des betreffenden Transportfahrzeuges ausgibt.

Der an die Transportsteuerung einer Kette oder Gruppe von Transportmitteln 65; 68; 79 gerichtete Transportauftrag $T_M$ umfasst beispielsweise zumindest die Abholposition und die Lieferposition für das zu transportierende Gebinde 04.j, welche jeweils eine eindeutig in der Anlage 01 definierte Position, z. B. aus den Positionen 21; 23; 24; 29; 31; 32; 33; 36; 41; 56; 62; 71; 111; 112, darstellt. Für den Fall von als fahrerlose Transportfahrzeuge 65; 68; 79 ausgebildeten Transportmitteln 65; 68; 79 erfolgt die Übermittlung des Transportauftrages $T_M$ von der Materialflusssteuerung 146 zur Fahrzeugsteuerung bevorzugt über eine kabellose Signalverbindung.

Das Koordinieren und/oder Steuern der Transportprozesse innerhalb der zur mehrfachen und/oder mehrstufigen Produktion ausgebildeten Produktionsanlage 01 durch die Materialflusssteuerung 146 - beispielsweise für voneinander verschiedene Produkte 03 mit unterschiedlicher Fertigungstiefe - geschieht auf Basis von Angaben aus o. g. Auftragsdaten $D_A$, z. B. der Aufstellung der für das herzustellende Produkt 03 bzw. den spezifischen Auftrag (A(n) erforderlichen Bearbeitungsschritte P.x, und/oder auf Basis von Angaben aus o. g. Arbeitsplandaten $D_R$, z. B. aus dort hinterlegter Einlastungsoder Maschinenbelegungspläne (d. h. einer Aufstellung darüber, welches Produkt wann auf welcher Produktionsressource, z. B. welchem Aggregat 11; 12; 13; 14; 16; 17; 18; 19; 118; 119, bearbeitet oder konditioniert werden soll), und/oder auf Basis des aktuellen Status des zum spezifischen Produkt 03 zu verarbeitenden Gebindes 04.j und/oder auf Basis von Angaben zu den den verfügbaren Ressourcen, d. h. der verfügbaren Aggregate 11; 12; 13; 14; 16; 17; 18; 19; 118; 119 und/oder Transportmittel 68; 69; 74; 78; 79 und/oder Lagerund/oder Pufferpositionen 24; 36; 42; 56; 62; 71, und/oder auf Basis von als Regeln und/oder Randbedingungen R für den Materialfluss hinterlegten Expertenwissens.

Die Materialflusssteuerung 146 ist hierzu beispielsweise als ein in einer Datenverarbeitungseinrichtung implementiertes Datenverarbeitungsmittel, z. B. Datenverarbeitungsprogramm, mit entsprechend ausgebildeten Auswerte- und Rechenalgorithmen oder als Datenverarbeitungseinrichtung ausgeführt, die programmtechnisch zum o. g. Koordinieren und/oder Steuern der Transportprozesse bzw. zum o. g. Generierung der Transportaufträge mit entsprechenden Datenverarbeitungsmittel eingerichtet ist.

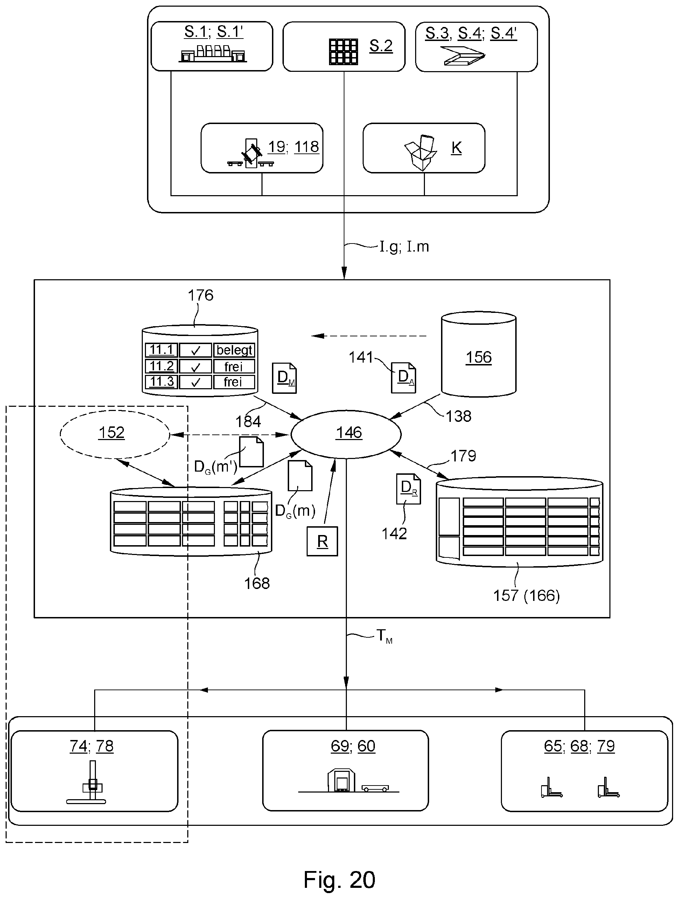

Die für das Koordinieren und/oder Steuern erforderlichen Angaben aus den Auftragsdaten $D_A$ und/oder Arbeitsplandaten $D_R$ erhält die Materialflusssteuerung 146 als Informationen $D_A$; $D_R$ auf einem o. g. Wege über einen Signalpfad oder mobilen Datenträger, beispielsweise durch Übermittlung wenigstens einer und/oder Zugriff auf wenigstens eine die Informationen $D_A$; $D_R$ enthaltenden o. g. Datei 141 (142) und/oder Datenbankzugriff 142 (141). Beispielsweise erhält die Materialflusssteuerung 146 über die Signalverbindung 138, z. B. eine Netzwerkverbindung 138, zumindest die Angaben zu den Auftragsdaten $D_A$ über eine Textdatei 141; 142, insbesondere ein o. g. XML-Dokument 141; 142, aus dem Planungs- und/oder Steuersystem 139 bzw. dem ggf. dort vorliegenden Auftragsbestand 156. Die Angaben zu den Arbeitsplandaten $D_R$ kann sie ebenfalls aus einer Textdatei 142, insbesondere einem o. g. XML-Dokument 142, oder aber bevorzugt durch einen Zugriff 142 auf eine o. g. Datenbank 166, insbesondere z. B. die Daten eines Produktionsplanes 157, erhalten (siehe z. B. Fig. 12, Fig. 20). Dieser Zugriff 142 kann entweder über die selbe oder eine vergleichbare Signalverbindung 138 zum Planungs- und/oder Steuersystem 139 oder aber über eine davon verschiedene Signalverbindung 179 erfolgen.

In einer vorteilhaften Ausführung der Anlage 01 bzw. des Produktionsprozesses P ist die Materialflusssteuerung 146 z. B. als Modul 146 von einem Materiallogistiksystem 158 umfasst, in welchem auch ein mit dem Materiallogistiksystem 158 mittel- oder unmittelbar in Signalverbindung stehendes Lagerverwaltungssystem 152 für die Verwaltung des Wareneingangs- und/oder Warenausgangslager 09; 63 vorgesehen ist. Das Lagerverwaltungssystem 152 übernimmt beispielsweise zumindest die Bestandsverwaltung der im Lager 09 verfügbaren Rohmaterialgebinde 04.0 bzw. der die Rohmaterialgebinde 04.0 umfassenden Transporteinheiten 21; 66 und/oder die Bestandsverwaltung der im Lager 63 eingelagerten Produktgebinde 08 bzw. von die Produktgebinde 08 in oder auf Transporthilfsmitteln 121 umfassenden Transporteinheiten 124. In dieser Ausführung wird der Lagerbestand 159 des Wareneingangs- und/oder des Warenausgangslagers 09; 63 durch das Materiallogistiksystem 158 geführt und ist beispielsweise einem Zugriff durch das Planungs- und/oder Steuersystem 139 zugänglich (siehe z. B. Fig. 12). Das Lagerverwaltungssystem 152 "weiß" über den Bestand und die Lagerorte Bescheid und gibt die für ein Ein- oder Auslagern notwendigen Transportaufträge innerhalb des Lagers 09; 63 an die angeschlossenen Transportmittel 74; 78. In einer alternativen Ausführung kann das Lagerverwaltungssystem 152 auch als Modul von der Materialflusssteuerung 146 umfasst sein.

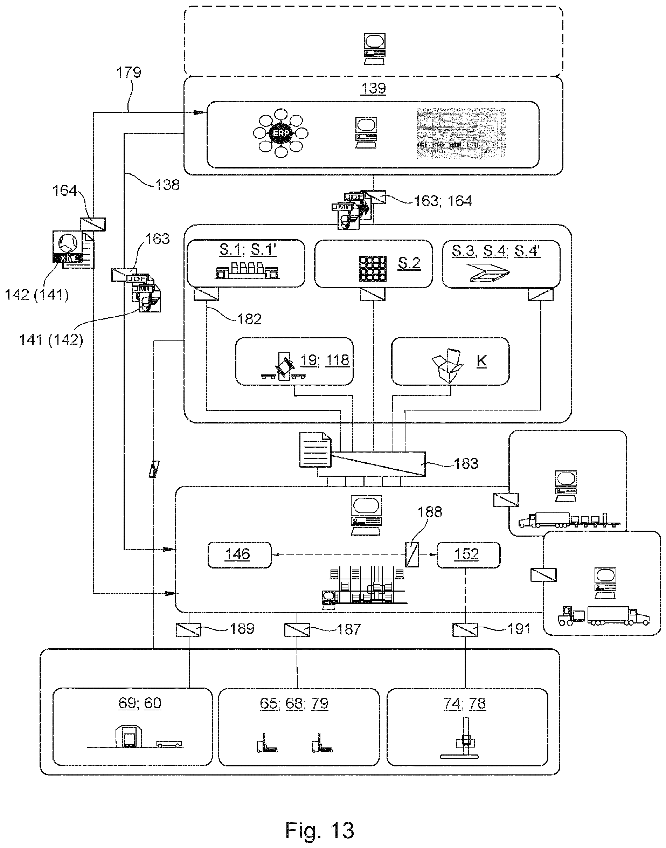

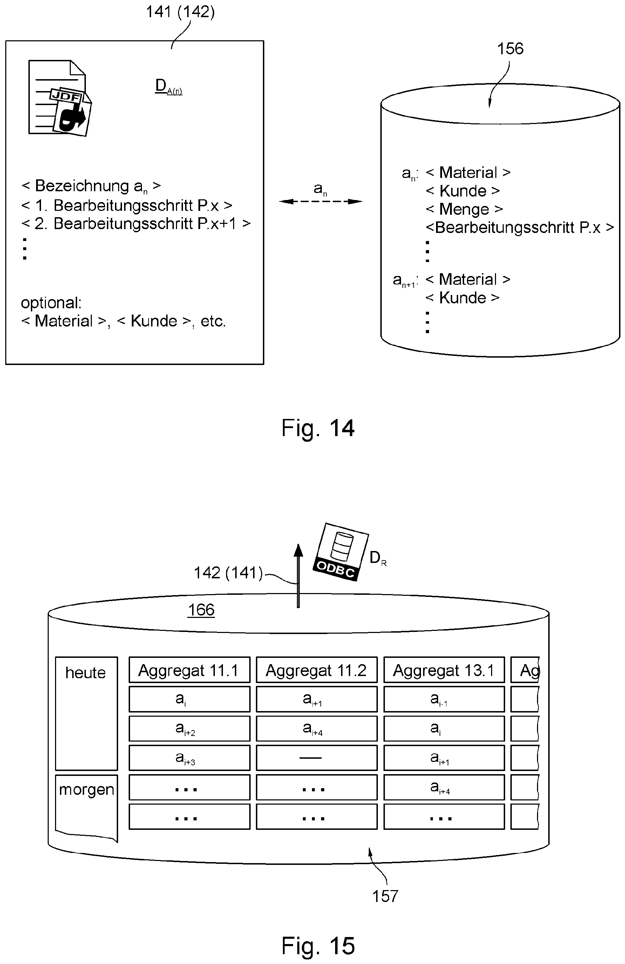

Wie bereits oben dargelegt, wird der Transfer der relevanten Informationen $D_A$ zu den geplanten Aufträgen A(n) und der relevanten Informationen $D_R$ zur Ablauf- und Ressourcenplanung in die Materialflusssteuerung 146 beispielsweise jeweils über eine oder mehrere Dateien 141; 142 und/oder über beispielsweise einen jeweiligen Zugriff auf die Daten einer im Planungs- und/oder Steuersystem 139 vorgesehenen Datenbank 166 oder aber beispielsweise in gemischter Form, was z. B. die Informationen $D_A$ zu den geplanten Aufträgen A(n) betrifft über eine Datei 141 (siehe z. B. Fig. 12, Fig. 13 und Fig. 14) und was die Informationen $D_R$ zur Ablauf- und Ressourcenplanung betrifft beispielsweise über einen Datenbankzugriff, realisiert (siehe z. B. Fig. 12, Fig. 13 und Fig. 15). Der Transfer der Daten in Dateiform erfolgt z. B. über eine Schnittstelle 163, z. B. ein XML-Interface 163. Der Zugriff auf die Datenbank 166 beispielsweise entlang z. B. der davon verschiedenen Signalverbindung 179 über eine als Datenbank-Interface 164, insbesondere ODBC-Schnittstelle, ausgebildete Schnittstelle 164 (siehe z. B. Fig. 13). Die Steuereinrichtungen 98 von Bearbeitungsaggregaten 11; 12; 13; 14; 16; 17; 18; 19 können Informationen $D_A$; $D_R$ zu den Aufträgen A(n) und/oder zur Ablauf- und Ressourcenplanung ebenfalls über eine oder mehrere der genannten Schnittstellen 163; 164 erhalten.

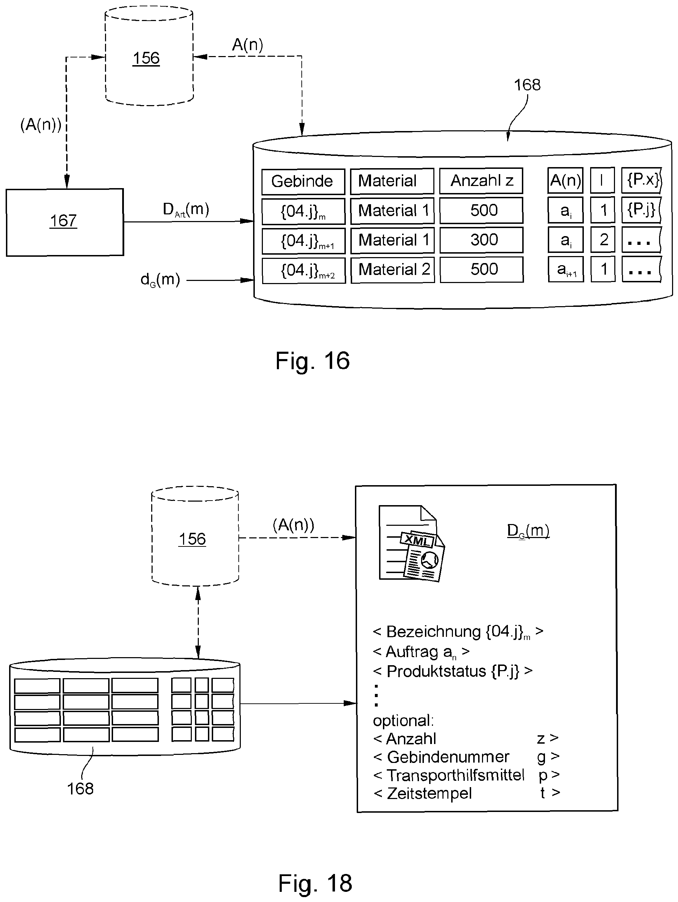

Spätestens mit Eintritt eines Gebindes 04.j in den in die Materialflusssteuerung 139 eingebundenen und/oder durch diese hinsichtlich des Materialflusses koordinierten Teil der Anlage 01 erfährt ein Gebinde 04.j (ggf. über "den Umweg" eines ihm eindeutig zugewiesenen Transporthilfsmittels 26; 108; 108 und/oder einer ihm eindeutig zugewiesenen Transporteinheit 27; 66; 67) durch Zuweisung einer eindeutigen Bezeichnung $\{04.j\}_m$, die ggf. eine eindeutige Beschreibung oder bevorzugt eine Kennung als z. B. sog. Gebinde-ID $\{04.j\}_m$ sein kann, eine Individualisierung. Dieses individuelle Gebinde $04.j_m$ wird unter seiner eindeutigen Beschreibung und/oder Bezeichnung $\{04.j\}_m$, bevorzugt zusammen mit das Gebinde $04.j_m$ betreffenden Artikeldaten $D_{Art}(m)$, erfasst und strukturiert in einer Datenstruktur 169 einer datenverarbeitungsbasierten Materialverwaltung 168, z. B. einem datenbankbasierten Materialverwaltungssystem 168, abgelegt (siehe z. B. Fig. 16). Dies kann als Eintrag von Daten $d_{Art}(m)$ in eine Datenstruktur 169, z. B. eines Gebindedaten umfassenden Datensatzes $d_G(m)$ in einer in der Materialverwaltung 168 geführten Datei 169 bzw. einem Dateisystem 169 oder vorzugsweise durch Generieren und Füllen eines das spezifische Gebinde $04.j_m$ betreffenden Datensatzes $d_G(m)$ in einer in der Materialverwaltung 168 implementierten Datenbank 169, erfolgen.

Als das Gebinde $04.j_m$ charakterisierende Artikeldaten $D_{Art}(m)$ und/oder als in den Datensatz $d_{Art}(m)$ der Datenstruktur 169 übernommene Gebindedaten können zumindest Angaben zum Material, beispielsweise eine die Materialeinheiten $02.j_m$ identifizierende Kennung und/oder Angaben zu Art und/oder Zustand und/oder Format der Materialeinheiten $02.j_m$, und/oder Angaben zu Anzahl z der im Gebinde $04.j_m$ enthaltenen Materialeinheiten $02.j_m$ umfasst sein. Im Fall einer Kennung können das Gebinde $04.j_m$ im weiteren charakterisierende Artikeldaten $D_{Art}(m)$ ggf. auch aus Daten einer vorausgehenden Materialbestellung importiert sein bzw. werden. Wird das Gebinde $04.j_m$ als Teil einer Transporteinheit 27; 66; 67 mit einem Transporthilfsmittel 26; 108; 108 und/oder zusammen mit weiteren Gebinden 04.j erfasst, so können auch Angaben p zum Transporthilfsmittel 26; 108; 108, z. B. zum Typ des Transporthilfsmittel 26; 108; 108 und/oder eine eindeutige Kennung des individuellen Transporthilfsmittels 26; 108; 108, und/oder zur Relativlage zu weiteren durch das Transporthilfsmittel 26; 108; 108 aufgenommenen Gebinden 04.j abgelegt sein bzw. werden. Das Erfassen selbst kann durch entsprechend eingerichtete und signaltechnisch mit der Materialverwaltung 168 verbundene Erfassungsmittel 167 erfolgen. Das Erfassungsmittel 167 kann als Bedienerschnittstelle 167 zur Eingabe entsprechender Daten und/oder zur Anwahl eines beispielsweise aus der vorausgegangenen Materialbestellung bereits generierten und/oder bei der Anlieferung mitgeführten Datensatzes $d_G(m)$ und/oder als ein mit einer vom Gebinde $04.j_m$ mitgeführten Codierung, z. B. einem Bar- oder 2D-Code, zusammenwirkendes Lesegerät 167, z. B. ein Scanner 167, oder aber einer Kombination aus dem Genanntem ausgeführt sein. Das Erfassen kann beispielsweise direkt am Wareneingang 06 oder z. B. spätestens mit Eintritt in das Wareneingangslager 09 erfolgen.

In der Materialverwaltung 168 erfolgt für jedes durch eindeutige Bezeichnung $\{04.j\}_m$ individualisiertes Gebinde $04.j_m$ bevorzugt auch dessen Verfolgung in der Anlage 01. Hierzu ist in der Materialverwaltung 168, insbesondere im entsprechenden Datensatz $d_G(m)$, für das jeweilige Gebinde $04.j_m$ eine Angabe, z. B. ein Verweis, zum aktuellen Aufenthaltsort umfasst. Bevorzugt sind dies vordefinierte Positionen in der Anlage, welche z. B. durch o. g. Eintrittsposition 21, Lagerpositionen 36; 56; 62; 71, Vorlagepositionen 23; 32; 31; 33, Auslegepositionen 111; 112, Abgabepositionen 29; 41 und/oder Pufferpositionen 24; 36; 56 gegeben sein können. Die sich während eines Transportes auf der betreffenden Strecke stetig ändernden Positionen werden beispielsweise nicht mitgeführt sondern z. B. lediglich durch eine den aktuellen Transport betreffende Statusangabe gekennzeichnet.

Die Materialverwaltung 168 kann als eigenständiges, lediglich signaltechnisch über entsprechende Schnittstellen mit der Materialflusssteuerung 146 und/oder ggf. einem Lagerverwaltungssystems 152 mittel- oder unmittelbar verbundenes System, beispielsweise als Anwendungssoftware auf einem eigenen oder einem Datenverarbeitungsmittel des Materialflusssystem1 146 oder des Lagerverwaltungssystems 152, als Modul, z. B. Programmmodul, von der Materialflusssteuerung 146 umfasst sein, oder für den Fall eines integrierten und/oder zusammen wirkenden Lagerverwaltungssystems 152 von diesem, z. B. einer entsprechend ausgeführten Anwendungssoftware, umfasst sein.

Spätestens mit Eintritt eines spezifischen Gebindes $04.j_m$ in die erste der in die Materialflusssteuerung 139 eingebundenen Bearbeitungsaggregate 11; 12; 13; 14; 16; 17; 18; 19 erfährt dieses (ggf. über "den Umweg" eines ihm eindeutig zugewiesenen Transporthilfsmittels 26; 108; 108 und/oder einer ihm eindeutig zugewiesenen Transporteinheit 27; 66; 67) - sowohl faktisch als auch nominell - eine Zuordnung zu einem spezifischen Auftrag A(n) (z. B. Fig. 16, Fig. 18). Die nominelle Zuordnung kann auch schon direkt bei o.g. Erfassung des Gebinde $04.j_m$ für die Materialverwaltung 168 oder beispielsweise bei Abruf aus dem Wareneingangslager 09 für die Verwendung in dem betreffenden anstehenden Auftrag A(n) vorgenommen werden und/oder erfolgen. Die Zuordnung zum Auftrag A(n) wird vorzugsweise - beispielsweise durch Eintrag in die das Gebinde $04.j_m$ betreffende Zeile bzw. den das Gebinde $04.j_m$ betreffenden Datensatz - in der Materialverwaltung 168, insbesondere in der das Gebinde $04.j_m$ betreffende Zeile bzw. dem das Gebinde $04.j_m$ betreffenden Datensatz, vorgehalten. Die Zuordnung kann manuell über eine Bedienerschnittstelle zur Eingabe entsprechender Daten und/oder zur Anwahl eines beispielsweise aus der vorausgegangenen Materialbestellung bereits generierten Auftrages A(n) oder automatisch durch Zuordnung eines erfassten Gebinde $04.j_m$ zu dem einer auftragsspezifische Bestellung zugrunde liegenden Auftrag A(n). Für den Fall, dass die Zuordnung erst mit Abruf oder gar erst dem Eintritt in die erste der in die Materialflusssteuerung 139 eingebundenen Bearbeitungsaggregate 11; 12; 13; 14; 16; 17; 18; 19 erfolgt, erfolgt die Zuordnung zu dem betreffenden Auftrag A(n) und der Eintrag beispielsweise durch die Materialflusssteuerung 139 selbst auf der Basis der dort vorliegenden Plandaten $D_A$; $D_R$. Wird ein spezifischer Auftrag A(n) durch Materialeinheiten $02.j_m$ mehrerer Gebinde $04.j_m$ gebildet, so kann zusätzlich zur Zuordnung zum Auftrag (n) noch eine denselben Auftrag A(n) betreffende Gebindenummer g zugeordnet sein (z. B. Fig. 16).

Ein durch die Materialflusssteuerung 146 umfasstes oder mit dieser signaltechnisch verbundenen und zusammen wirkendes System zur Verfolgung und/oder Steuerung des Materialflusses umfasst nun eine Speicherstruktur 169, z. B. die o. g. oder eine entsprechend ausgebildete Datei 169 oder Datenbank 169, mit definierten Speicherorten, an welchen gebindespezifische Datensätze $d_G(m)$ mit gebindespezifischen Informationen $D_G(m)$, umfassend zumindest aktuell zugewiesene eindeutige Bezeichnung $\{04.j\}_m$, eine den Bezug zu einem spezifischen Auftrag A(n) eindeutig herstellende Angabe und eine den aktuellen Produktstatus $\{P.x\}$ der Materialeinheiten $02.j_m$ des unter der Bezeichnung $\{04.j\}_m$ geführten Gebindes $04.j_m$ repräsentierende Angabe sowie ggf. eine die Anzahl z der Materialeinheiten $02.j_m$ betreffende Angabe, hinterlegt und/oder hinterlegbar sind. Darüber hinaus können Angaben zur Gebindenummer g und/oder Informationen p zu einem das Gebinde $04.j_m$ aktuell tragenden Transportmittel p und/oder eine Angabe zur letzten Änderung der die Informationen $D_G(m)$ betreffenden Angaben hinterlegt und/oder hinterlegbar sein.

Die Gesamtheit der hier als gebindespezifische Informationen $D_G(m)$ zusammen gefassten Angaben kann zwar grundsätzlich mit den im betreffenden Datensatz $d_G(m)$ enthaltenen, das spezifische Gebinde $04.j_m$ betreffenden Angaben lediglich eine Schnittmenge bilden, entspricht vorteilhaft jedoch der Gesamtheit oder bevorzugt einer Teilmenge der im korrespondierenden und/oder betreffenden Datensatz $d_G(m)$ der Datenstruktur 169 enthaltenen Angaben. Diese Informationen $D_G(m)$ können im Folgenden auch als Satz $D_G(m)$ gebindespezifischer Angaben bezeichnet werden. Beispielsweise können in der Datenstruktur 169 detailliertere Angaben zu Material und/oder Lieferanten vorliegen.

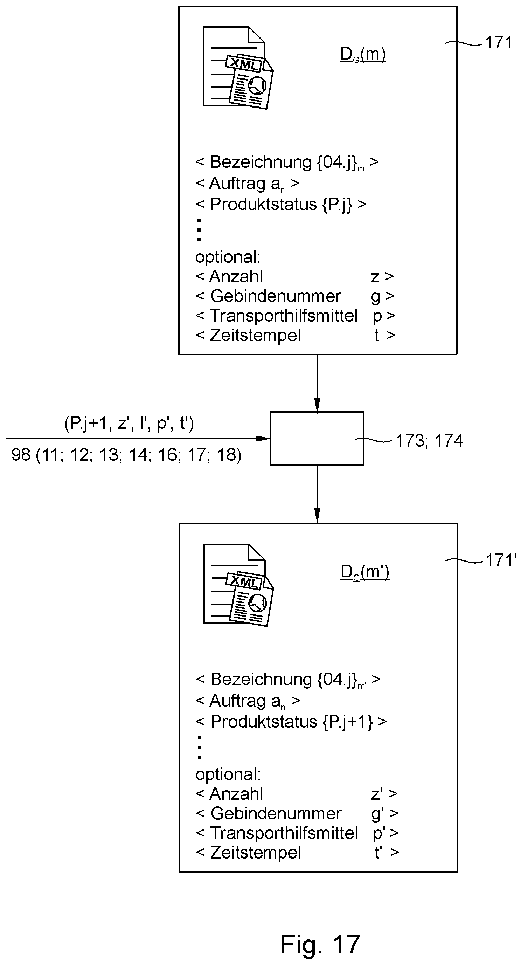

Des Weiteren umfasst das System zur Materialflusssteuerung und/oder das System zur Verfolgung und/oder Steuerung des Materialflusses ein Datenverarbeitungsmittel 173; 174, beispielsweise eine Programmroutine 173; 174, welches in logischer Signalverbindung zu mindestens einem informationsbehaftete Signale bzw. Signalfolge I.g liefernden Signalgeber wenigstens einer Steuereinrichtung 98 (99; 101; 102) zumindest eines der, insbesondere zumindest einer Druckmaschine 11 und eines nachfolgenden, z. B. als Stanzvorrichtung 13 ausgebildeten Bearbeitungsaggregates 11; 12; 13; 14; 16; 17; 18, bevorzugt sämtlicher in die Materialflusssteuerung 146 eingebundenen und/oder an das System zur Verfolgung und/oder Steuerung des Materialflusses angeschlossenen Bearbeitungsaggregate 11; 12; 13; 14; 16; 17; 18 bzw. Gruppen von Bearbeitungsaggregaten 11; 12; 13; 14; 16; 17; 18 sowie zu der die Informationen $D_G(m)$ in entsprechenden Datensätzen $d_G(m)$ führenden Speicherstruktur 169 steht. Das Datenverarbeitungsmittel 173; 174 und die logischer Signalverbindung zu dem mindestens einen informationsbehaftete Signale bzw. Signalfolge I.g liefernden Signalgeber der Steuereinrichtung 98 (99; 101; 102) sowie zu einer die Datensätze $d_G(m)$ und/oder Informationen $D_G(m)$ in der Speicherstruktur 169 verwaltenden Software sind dazu eingerichtet, dass infolge eines bzw. einer in der Steuereinrichtung 98 generierten, informationsbehafteten Signals bzw. Signalfolge I.g der betroffene Datensatz $d_G(m)$ und/oder die gebindespezifische Information $D_G(m)$ im Sinne der durch das Signal bzw. die Signalfolge I.g übermittelte Information änderbar ist bzw. geändert wird oder aber unter Berücksichtigung der durch das Signal bzw. die Signalfolge I.g übermittelten Information in einen neuen Datensatz $d_G(m')$ und/oder in eine neue gebindespezifischen Information $D_G(m)$ mit beispielsweise einer neuen eindeutigen Bezeichnung $\{04.j\}_{m'}$ überführt wird (siehe z. B. Fig. 17).

Der der Steuereinrichtung 98 (99; 101; 102) und/oder dem Aggregat 11; 12; 13; 14; 16; 17; 18 zugeordnete Signalgeber kann grundsätzlich eine die Information betreffende Sensorik sein, wobei das Signal bzw. die Signalfolge durch den am Ausgang vorliegenden Zustand gegeben ist, ein die Information betreffendes und durch bedienpersonal betätigbares Schaltmittel sein, wobei das Signal bzw. die Signalfolge durch den am Ausgang des Schaltmittels vorliegenden Zustand gegeben ist, eine die Information betreffende Befehlseingabe an einer entsprechenden Bedienerschnittstelle sein, oder auch ein in der Steuereinrichtung integrierter oder mit dieser verbundener Auswerte- und/oder Berechnungsalgorithmus sein, dessen Ergebnis das informationsbehaftete Signal bzw. die Signalfolge liefert. Im Einzelnen kann diese beispielsweise eine die Anwesenheit eines Gebindes 04.j bzw. einer Transporteinheit prüfende Sensorik, ein durch das Personal erforderliches Quittieren oder ein aus der Steuereinrichtung 98 des betreffenden Aggregates 11; 12; 13; 14; 16; 17; 18 einen den Produktionslauf betreffende Information sein. Ein derartiger Signalgeber ist - insbesondere zumindest logisch - lediglich diesem Aggregat 11; 12; 13 und/oder der betreffenden Steuereinrichtung 98 vor Ort zugeordnet

Als ein eine informationsbehaftete Information betreffendes Signal bzw. Signalfolge ist ein Signal bzw. eine Signalfolge zu verstehen, welches bzw. welche aufgrund der eindeutigen Herkunft und/oder Definition seiner bzw. ihrer Bedeutung eine eindeutige und hinsichtlich der adressierten Bedeutung vollständige Information liefert.

Eine durch das Signal bzw. die Signalfolge I.g übermittelten Information kann beispielsweise eine Änderung im Produktstatus {P.x} der Materialeinheiten $02.j_m$ des zumindest bislang unter der Bezeichnung ${04.j}_m$ geführten Gebindes $04.j_m$ betreffen und in erster Ausführung eine Änderung des bestehenden Datensatzes $d_G(m)$ und/oder der gebindespezifischen Information $D_G(m)$ im Hinblick auf die die Statusänderung repräsentierenden Angabe aktualisieren oder aber in anderer, zu bevorzugenden Ausführung die Anlage eines neuen Datensatz $d_G(m')$ bzw. einer neue gebindespezifischen Information $D_G(m')$ unter Aufnahme des aktuellen Produktstatus (P.x') und vorzugsweise einer Übernahme anderer, unveränderter Angaben aus dem bisherigen Datensatz $d_G(m)$ bzw. der bisherigen Information $D_G(m)$ in den neuen Gebindedatensatz $d_G(m')$ bzw. die neue gebindespezifische Information $D_G(m')$.

Als den Produktstatus {P.x} betreffende Angabe kann grundsätzlich jede beliebige, den Bearbeitungsstatus beschreibende Angabe dienen, sofern sie eindeutig mit der jeweiligen Angabe in den die Auftragsbeschreibung abbildende Auftragsdaten $D_A$ korreliert ist. In hier dargestellter Variante ist stellvertretend für den Produktstatus der zuletzt durchlaufenden Bearbeitungsschritt P.x eingebunden. Dies kann beispielsweise in Klartext ein "Bedrucken" oder für den Fall eines mehrfachen oder beidseitigen Bedruckens ein "1.Bedrucken", ein "Stanzen" usw. sein.

Zusätzlich oder stattdessen kann eine durch ein Signal bzw. eine Signalfolge I.g übermittelten Information eine Anzahl z der im aktuellen oder aktualisierten Produktstatus {P.x} vorliegenden Materialeinheiten $02.j_m$; $02.j_{m'}$ des zumindest bislang unter der Bezeichnung ${04.j}_m$ bzw. neuerdings unter der Bezeichnung ${04.j}_{m'}$ geführten Gebindes $04.j_m$; $04.j_{m'}$ betreffen und in erster Ausführung eine Änderung des bestehenden Datensatzes $d_G(m)$ und/oder der gebindespezifischen Information $D_G(m)$ im Hinblick auf die die Anzahl z repräsentierenden Angabe aktualisieren oder aber in anderer, zu bevorzugenden Ausführung die Anlage eines neuen Datensatz $d_G(m')$ bzw. einer neue Information $D_G(m')$ unter Aufnahme der aktuellen Anzahl z' und des ggf. hiermit verbundenen aktuellen Produktstatus (P.x') und vorzugsweise unter einer Übernahme anderer, unveränderter Angaben aus dem bisherigen Datensatz $d_G(m)$ bzw. der bisherigen Information $D_G(m)$ in den neuen Datensatz $d_G(m')$ bzw. die neue Information $D_G(m')$. Die Änderung der Anzahl z ist insbesondere für Bearbeitungsvorgänge von Bedeutung, in welchen beispielsweise gleich ausgeschleuster Ausschuss (z. B. Makulatur) entsteht und/oder in welchen planmäßig die Gebindegröße wechselt.

Zusätzlich oder stattdessen kann eine durch ein Signal bzw. eine Signalfolge I.g übermittelten Information eine Angabe zur Position 21; 23; 24; 29; 31; 32; 33; 36; 41; 56; 62; 71; 111; 112 des zumindest bislang unter der Bezeichnung ${04.j}_m$ bzw. neuerdings unter der Bezeichnung ${04.j}_{m'}$ geführten Gebindes $04.j_m$; $04.j_{m'}$ betreffen und in erster, für den Fall der Positionsänderung bevorzugten Ausführung eine Änderung des bestehenden Datensatzes $d_G(m)$ und/oder ggf. der gebindespezifischen Information $D_G(m)$ im Hinblick auf die Position aktualisieren oder ggf. aber in alternativer Ausführung die Anlage eines neuen Datensatz $d_G(m')$ bzw. einer neuen Information $D_G(m')$ unter Aufnahme der aktuellen Position und unter einer Übernahme anderer, unveränderter Angaben aus dem bisherigen Datensatz $d_G(m)$ bzw. der bisherigen Information $D_G(m)$ in den neuen Datensatz $d_G(m')$ bzw. die neue Information $D_G(m')$.

Zusätzlich kann mit jeder Änderung, z. B. mit jeder Änderung des Datensatzes $d_G(m)$ und/oder der gebindespezifischen Information $D_G(m)$ oder mit jeder Neuanlage eines Datensatzes $d_G(m')$ und/oder einer gebindespezifischen Information $D_G(m')$ eine Angabe t zu Datum und/oder Zeit, z. B. ein Zeitstempel t, der letzten Änderung bzw. Neuanlage mitgeführt sein bzw. werden. Dies kann beispielsweise von großem Vorteil sein, wenn produktionsbedingte Ruhezeiten oder haltbarkeitsbeschränkende Umstände vorliegen. Derartige Bedingungen können als sog. Expertenwissen in Form von Regeln und/oder Randbedingungen R im Materialflusssystem 146 oder einem hiermit signaltechnisch verbundenen Speicher- und/oder Rechenmittel vorgehalten sein.

In der Ausführung mit Fortschreibung des Datensatzes $d_G(m)$ und/oder der gebindespezifischen Information $D_G(m)$ wird bei Änderung des z. B. den Bearbeitungsstatus darstellenden Produktstatus {P.x} und/oder bei sich ändernder Anzahl z das entsprechend veränderte Gebinde $04.j_m$ unter einer selben Bezeichnung ${04.j}_m$ weitergeführt, was für wenig komplexe Anlagen 01 und/oder Produktionen P möglich und ggf. hinsichtlich einer einfachen Verfolgung und Zuordnung einzelner physikalisch vorliegender Gebinde $04.j_m$ vorteilhaft sein kann. Im Hinblick auf komplexe, zur mehrfachen und/oder mehrstufigen Produktion ausgebildeten Anlagen 01 und/oder komplexere Produktionsprozesse P, in welchen beispielsweise Gebinde 04.j auch aufgeteilt oder zusammengefasst werden können sollen, ist die Ausführung mit Neuanlage von besonderem Vorteil, indem mit jedem im System zur Verfolgung und/oder Steuerung des Materialflusses und/oder der Materialflusssteuerung 169 eingebundenen Bearbeitungsschritt P.x ein neues imaginäres Gebinde $04.j_m$; $04.jm'$ durch Anlage eines neuen Datensatzes $d_G(m')$, z. B. Gebindedatensatzes $d_G(m')$, und/oder durch Anlage einer neuen gebindespezifischen Information $D_G(m')$, z. B. Gebindeinformation $D_G(m')$, mit einer neuen, unverwechselbaren Gebindebezeichnung $\{04.j\}_{m'}$ generiert wird. Dies gilt dann auch für den Fall, dass sich lediglich der Produktstatus $\{P.x\}$ und ggf. der mitgeführte Zeitstempel t ändert. In dieser Ausführung ist das System ohne große Schwierigkeiten auf größere Anlagen 01 skalierbar und/oder auf unterschiedlichste Anwendungen übertragbar.

Die vom Signalgeber des betreffenden Aggregates 11; 12; 13; 14; 16; 17; 18 bereitgestellten Signale bzw. Signalfolgen I.g können dabei entweder als einfache I/O-Signale I, bevorzugt jedoch zu strukturierten Daten I.g eines definierten Formates, insbesondere sowohl was die Art (z. B. die physikalische Ausprägung und Organisation der Signalübertragung) der Datenübertragung als auch was die Strukturierung und/oder Formulierung der Inhalte (z. B. die Beschreibungssprache) betrifft, aufbereitet über eine entsprechende, das Format unterstützende Signalverbindung 179, z. B. eine Netzwerkverbindung 179 eines Netzwerkes grundsätzlich beliebiger Topologie, z. B. eine Busverbindung, dem Datenverarbeitungsmittel 173; 174 zugeleitet und von diesem ausgewertet und weiterverarbeitet werden, und schließlich eine entsprechende Änderung und/oder Neuanlage des Datensatzes $d_G(m)$; $d_G(m')$ in der Datenstruktur 169 durch Zugriff 172, z. B. zumindest Schreibzugriff 172 und/oder eine entsprechende Änderung der beispielsweise in einer gebindespezifischen Datei 171 vorgehaltenen Gebindeinformation $D_G(m)$; $D_G(m')$ und/oder eine Neuanlage einer entsprechenden gebindespezifischen Datei 171' bewirken.

In einer einfachsten Ausführung kann die Information als einfaches I/O-Signal übermittelt werden, welches beispielsweise als Ausgangssignal einer ein Gebinde 04.j im Eingangs- oder Ausgangsbereich an einer definierten Position erkennenden Sensorik, z. B. eines Sensors 177; 178, - direkt oder über die Steuereinrichtung 98 - dem Datenverarbeitungsmittel 173; 174 zugeleitet und von diesem ausgewertet und weiterverarbeitet. Aus einem derartigen Signal I.g kann dann beispielsweise eine Information bestimmten Inhaltes abgeleitet werden, beispielsweise, dass das Gebinde 04.j+1, welches aus dem zuvor an die betreffende Aggregat 11; 12; 13; 14; 16; 17; 18 angelieferten Gebindes 04.j nach Bearbeitung erzeugt wurde, nun den neuen Produktstatus $\{P.y+1\}$ haben muss.

In anderen Ausführung werden die durch die Signale bzw. Signalfolgen I.g repräsentierten Informationen in Form einer band- oder schlauchartigen Informationsfolge (z. B. eine Folge von Zeichen und/oder Zeichenketten), dem das verabredete Signalmuster und die Beschreibungssprache zugrunde liegt, bereitgestellt und an das Datenverarbeitungsmittel 173 übermittelt, der seinerseits in einem entsprechenden Zugriff 172 auf die Daten des Datensatzes $d_G(m)$ die o. g. Änderung oder geänderte Neuanlage des Datensatzes $d_G(m)$; $d_G(m')$ auf der Basis der durch das Signal bzw. bzw. die Signalfolge I.g übermittelten Information(en) bewirkt. Das Datenverarbeitungsmittel 173 kann beispielsweise als Teil einer der Datenstruktur 169 zugeordneten Verwaltungssoftware vorgesehen sein.

In bevorzugter Ausführung - insbesondere zumindest für Informationen zu Produktstatus $\{P.x\}$ und/oder zum Auftrag (A(n) und/oder zur Anzahl z - erfolgt jedoch keine direkte Signalübertragung der einzelnen informationsbehafteten Signale bzw. Signalfolgen I.g vom Signalgeber über das Datenverarbeitungsmittel 173; 174 zur Materialverwaltung 168, sondern eine Übermittlung einer mehrere Angaben, z. B. mindestens die Bezeichnung, eine Angabe zum Auftrag und eine Angabe zum Produktstatus, umfassenden Gebindeinformation $D_G(m)$; $D_G(m')$ in Form einer Datei 171. Das System umfasst dabei Datenverarbeitungsmittel, durch welche eine die Gebindeinformation $D_G(m)$; $D_G(m')$ umfassende Datei 171 des betreffenden Formates unter Anwendung des Datenverarbeitungsmittels 174 in ihrem Inhalt änderbar und/oder, ggf. unter Übernahme von Daten aus einer bestehenden Datei 171, neu erzeugbar ist. Derartige Datenverarbeitungsmittel können bevorzugt jeweils vor Ort in der jeweiligen Steuereinrichtung 98 der eingebundenen Aggregate vorgesehen oder ersatzweise - z.-B. für den Fall, dass vor Ort keine hierzu geeignete Datenverarbeitungseinrichtung vorgesehen ist - zentral von der Materialverwaltung 168 und/oder vom Materialflusssteuerung 164 mitumfasst sein. Im zweiten Fall können dann auch ohne eigene "Intelligenz" ausgeführte Aggregate eingebunden werden bzw. sein, wobei vor Ort lediglich ein informationsbehaftete Signale bzw. Signalfolgen I.g bereitstellender Signalgeber, beispielsweise o.g. Sensoren 177; 178 und/oder einfache bedeutungsbehaftete Schaltmittel und/oder Befehlseingaben, vorgesehen sein müssen. Auch können in einem diesbezüglich gemischten System Kombinationen hieraus vorgesehen sein, wobei für eines oder mehrere, z. B. eigene Intelligenz aufweisende Aggregate 11; 12; 13; 14; 16; 17; 18 die Datei 171 vor Ort geändert oder erzeugt und übermittelt, und für eines oder mehrere, z. B. ohne eigene Intelligenz ausgeführte Aggregate 11; 12; 13; 14; 16; 17; 18 die Änderung oder Erzeugung der Datei 171; 171' zentral erfolgt, also eine aggregatseitige Erzeugung emuliert wird. Alternativ hierzu kann in einem diesbezüglich gemischten System für Aggregate 11; 12; 13; 14; 16; 17; 18, durch die keine derartige Datei 171 vor Ort erzeugbar ist oder erzeugt wird, ein direkter Zugriff 171 in oben beschriebener Art über ein entsprechend eingerichtetes Datenverarbeitungsmittel 173 vorgesehen sein.

In einer die Änderung und/oder Erzeugung von Dateien 171; 171' umfassenden Ausführung können die Dateien 171; 171' an einem definierten Speicherort, beispielsweise in einer Ablagestruktur eines Fileservers, selbst als Dateisystem 169 die Datenstruktur 169 ausbilden, auf deren Inhalte andere Systeme aus der dem Materialflusssteuerung 164 und/oder der Materialverwaltung 168 und/oder dem Materiallogistiksystem 158 zugreifen bzw. zugreifen können.

Bei den Dateien 171; 171' und deren Übertragung handelt es sich vorrangig um ein definiertes und strukturiertes Medium, durch welches die Gebindeinformation $D_G(m)$; $D_G(m')$ in einem definierten, und bevorzugt standardisierten Format zwischen einzelnen Komponenten des Systems, beispielsweise zwischen den Steuereinrichtungen 98 der eingebundenen Aggregate 11; 12; 13; 14; 16; 17; 18 und der diese Daten konsumierenden Systemkomponenten, z. B. der Materialflusssteuerung 164 und/oder der Materialverwaltung 168 und/oder dem Materiallogistiksystem 158 übermittelbar sind.

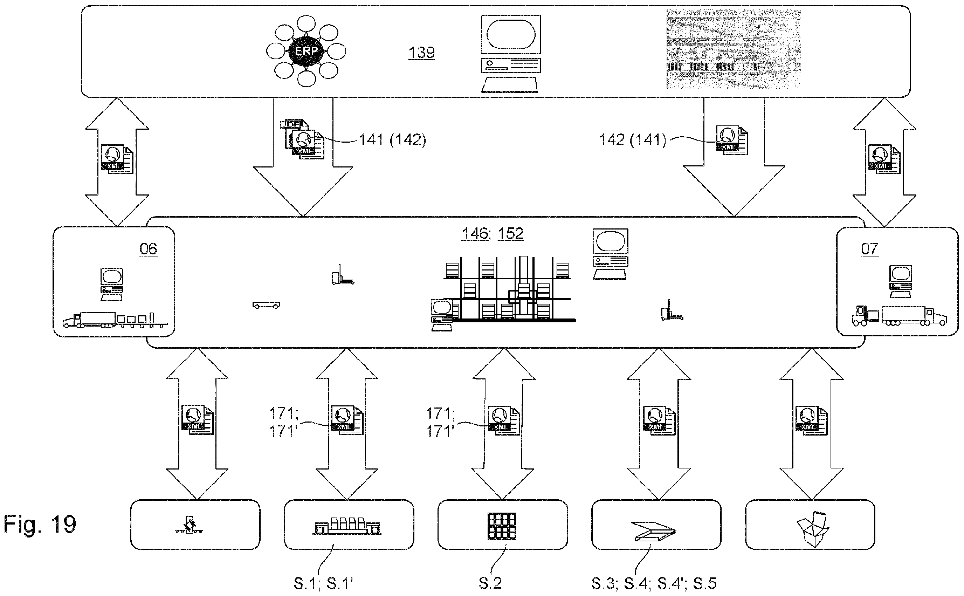

In einer vorteilhaften Ausführung werden derartige Dateien 171; 171' in beiden Richtungen, d. h. sowohl vom Aggregate 11; 12; 13; 14; 16; 17; 18 zur Materialverwaltung 168 als auch von dieser zum Aggregat 11; 12; 13; 14; 16; 17; 18 ausgetauscht (siehe z. B. Fig. 19). Unter einer dem jeweiligen Aggregat 11; 12; 13; 14; 16; 17; 18, insbesondere einer Druckmaschine 11 bzw. einer Stanzvorrichtung 13, zugeordneten Steuereinrichtung 98 ist insbesondere eine Steuervorrichtung bzw. Steuerumgebung zu verstehendes, durch welches das betreffende Aggregat 11; 12; 13; 14; 16; 17; 18 grundsätzlich auch autonom von der übrigen Anlage 01 steuerbar ist bzw. wäre.

Beispielsweise kann eine bereits bestehende, in der Materialverwaltung 168 bzw. im System zentral abgelegte und die aktuellen Daten $D_G(m)$ enthaltende oder eine aus den aktuellen Daten $D_G(m)$ in der Materialverwaltung 168 gewonnene Datei 171 an ein das betroffene Gebinde $04.j_m$ bearbeitendes Aggregat 11; 12; 13; 14; 16; 17; 18 bzw. dessen Steuerung 98 übermittelt werden, wo sie durch die dort vorgesehenen Datenverarbeitungsmittel - z. B. unter Anwendung des Datenverarbeitungsmittels 134 entsprechend der durch die Signale bzw. Signalfolgen I.g repräsentierten Informationen - geändert bzw. aktualisiert oder neu angelegt wird. Dabei wird z. B. gleichzeitig eine neue eindeutige Bezeichnung $\{04.j\}_m$ für den neu gebildeten Stapel 04.j vergeben.

In bevorzugter Ausführung handelt es sich bei den Dateien 171; 171 und deren ggf. für deren Zwischenspeicherung relevanten Speicherort jedoch nicht um die eigentliche Datenstruktur, sondern lediglich um den Datentransfer über die das definiertes und strukturiertes Medium dieser Dateien 171; 171'. Nach dem Auslesen Daten erfolgt deren Verarbeitung und Speicherung als geänderte oder neue Datensätze $d_G(m)$; $d_G(m')$ entsprechend der übermittelten Informationen $D_G(m)$; $D_G(m')$ in der bevorzugt als Datenbank 169 ausgeführten Datenstruktur 169.

Grundsätzlich können die strukturierte Daten $D_G(m)$; $D_G(m')$ in jeder beliebigen Form als Informationen bzw. Informationspakete definiert abbildende Signale bzw. Signalfolgen über beispielsweise entsprechend ausgebildete, leitungsgebundene oder drahtlose Signalverbindungen 182, z. B. Signalleitungen, übertragen sein bzw. werden. Bevorzugt ist zur Datenübertragung jedoch eine Netzwerkverbindung 182 eines Netzwerkes grundsätzlich beliebiger Topologie, z. B. eine Busverbindung 182, zwischen dem Materialflusssteuerung 146 und dem Adressaten bzw. Nutzer o. g. Daten $D_G(m)$; $D_G(m')$, z. B. den Steuereinheiten 98, vorgesehen, über welche die Datenübertragung, insbesondere ein Datenaustausch, definiert über das dem Netzwerk zugrunde liegende Protokoll erfolgt. Ggf. kann das zugrundeliegende Netzwerk heterogen ausgeführt sein, wobei für diesen Fall entsprechende Schnittstellen und/oder Koppler vorliegen.

Für die von den Steuerungen 98 und/oder den Signalgebern an die Materialflusssteuerung 146 zu übermittelnden gebindespezifischen Daten $D_G(m)$; $D_G(m')$ sind die Mindestanforderungen an die durch die an den Aggregaten 11; 12; 13; 14; 16; 17; 18 bzw. deren Intelligenz bereitzustellenden Angaben und/oder Werte und ggf. deren exakte Syntax und/oder Semantik in einer sog. Schnittstellenbeschreibung zu definieren. Insbesondere sind - beispielsweise definiert durch die Schnittstellenbeschreibung - als in den gebindespezifischen Daten $D_G(m)$; $D_G(m')$ bereitzustellende Angaben zumindest die eindeutige Bezeichnung des betroffenen geänderten oder bevorzugt neuen Gebindes $\{04.j\}_m$; $\{04.j\}_{m+1}$, die eindeutige Bezeichnung $a_n$ des Auftrages A(n) sowie die o. g. Angabe zum Produktstatus {P.x}. Vorzugsweise können noch Angaben zu Anzahl z und/oder Gebindenummer g und/oder zum Transportmittel p und bevorzugt zu7m Zeitstempel t in der Definition der Schnittstellen vorabredet sein.

Die Informationen $D_G(m)$; $D_G(m')$ bzw. Daten $D_G(m)$; $D_G(m')$ werden in bevorzugter Ausführung in Form eines offenen Dateiformates, insbesondere eines offenen Textformates ausgebildet. Bevorzugt liegt die Datei 171; 171' als ein in der Auszeichnungssprache XML oder einer hieraus durch Erweiterung und/oder Weiterentwicklung hervorgehenden Auszeichnungssprache abgefasste Textdatei 171; 171', z. B. als sog. XML- oder XML-basiertes Dokument 171; 171', vor. Der Transfer der Daten in Dateiform erfolgt z. B. über eine Schnittstelle 163, z. B. ein XML-Interface 183

Wird nun beispielsweise ein Gebinde $04.j_m$ in einem bestimmten Aggregat 11; 12; 13; 14; 16; 17; 18 bearbeitet, so entsteht für das am Ausgang des Aggregat 11; 12; 13; 14; 16; 17; 18 gebildete oder zu bildende Gebinde $04.j_m+1$ (als $04.j_{m'}$) - beispielsweise veranlasst durch entsprechende Signale bzw. Signalfolgen I.g des dem Aggregat 11; 12; 13; 14; 16; 17; 18 zugeordneten Signalgebers - über direkten Schreibzugriff 172 oder bevorzugt über die Bildung, Übertragung und Auswertung einer entsprechenden Datei 171' in der Materialverwaltung 168 ein geänderterter oder bevorzugt neu angelegter Datensatz $d_G(m')$, welcher den aktualisierten Bearbeitungsstatus als Produktstatus {P.j+1} und ggf. eine neue Anzahl z' und ggf. einen neuen Zeitstempel t' ausweist.

Die dem betreffenden Aggregat 11; 12; 13; 14; 16; 17; 18 zugeordneten Signalgeber können als in der jeweiligen Steuereinrichtung 98 implementierte oder dieser zugeordnete Steuermittel ausgebildet sein, welche auf eine Betätigung eines zugeordneten Schaltmittels, z. B. eines Tasters oder Sensors 177; 178, oder auf eine Aktivierung eines zugeordneten Befehls in einer Eingabeeinrichtung oder auf einen Befehl aus der Maschinensteuerung des Aggregates 11; 12; 13; 14; 16; 17; 18 hin die der Bedeutung dieses Schaltmittels 177; 178 oder Befehls zugeordnete Aktion auslöst. Beispielsweise kann durch das Bedienpersonal über einen entsprechenden Befehl oder durch die Maschinensteuerung des Aggregates 11; 12; 13; 14; 16; 17; 18 spätestens nach Fertigstellung des am Ausgang vorliegenden bearbeiteten Gebindes 04.j+1 über die den Produktstatus {P.x} betreffende Signalfolge I.g unmittelbar oder mittelbar über die Datei 171' in o.g. Weise eine Aktualisierung des Produktstatus {P.x} in der Materialverwaltung 168 durch Änderung oder Neuanlage des betreffenden Datensatzes $d_G(m)$; $d_G(m')$ ausgelöst werden. Die Datei 171'wird hier beispielsweise durch das entsprechende Datenverarbeitungsmittel erstellt.

Im Ergebnis liegen der Materialverwaltung 168 - zumindest was den durch das System zur Verfolgung und/oder Steuerung des Materialflusses eingebundenen und/oder durch die Materialflusssteuerung 164 kontrollierten Bereich der Anlage 01 betrifft - für sämtliche über das System kontrollierten Gebinde 04.x ein Satz $D_G(m)$ von gebindespezifischen Angaben mit zumindest einer eindeutigen Bezeichnung {04.j}$_m$, einer Information zum aktuellen Produktstatus {P.x} und einem Verweis auf den zugeordneten Auftrag (n), sowie ggf. eine Gebindenummer g und/oder die Anzahl z der vom Gebinde umfassten Materialeinheiten 02.j$_m$ und/oder den Zeitpunkt der letzten Aktualisierung sowie bevorzugt eine Verweis zur aktuellen Position 21; 23; 24; 29; 31; 32; 33; 36; 41; 56; 62; 71; 111; 112, vor. Dieser Satz $D_G(m)$ von gebindespezifischen, z. B. die nach der Schnittstellendefinition als Mindestangaben geforderten, Angaben kann wie beschrieben als ein Datensatz $d_G(m)$ oder dessen Teilmenge in einer Speicherstruktur 169 und/oder als ein Satz von entsprechenden o. g. Angaben in einer als Datei $D_G(m)$ ausgebildeten Information $D_G(m)$ vorliegen. Unabhängig davon ob dieser Satz von für ein spezifisches Gebinde 04.j relevanten Angaben in der Datenstruktur 169 oder stattdessen aber oder zusätzlich als Datei $D_G(m)$ vorgehalten und in o. g. Weise durch Fortschreibung oder Änderung aktualisiert vorliegt, stellt dieser Satz $D_G(m)$ von Angaben bzw. Daten $D_G(m)$ eine stetig aktuelle Information über den Zustand des betreffenden Stapels 04.j in Art einer Stapelkarte dar, wie sie beispielsweise ansonsten gegenständlich in Form von Papier einen Stapel 04.j auf seinem Weg durch eine Anlage 01 begleitet. Im Unterschied hierzu wird der Satz $D_G(m)$ von Angaben hier jedoch elektronisch geführt und ist dadurch direkt für die Steuerung der Materialflüsse durch das Materialflusssteuerung 146 nutzbar. Dieser Satz $D_G(m)$ von Angaben bzw. Daten $D_G(m)$ kann lediglich im übertragenen Sinne als "elektronische Gebinde- oder Stapelkarte" in der als Datenbank 169 ausgeführten Datenstruktur 169 auf der Basis von durch die Signale bzw. Signalfolgen I.g übermittelten Informationen mitgeführt oder aber im tatsächlichen Sinne einer "elektronischen Gebindekarte", insbesondere "elektronischen Stapelkarte" in Form einer Datei 171; 171' geführt. Diese wird zwischen dem System zur Steuerung des Materialflusses, insbesondere der vom System umfassten Materialverwaltung oder der die Materialverwaltung umfassenden Materialflusssteuerung 146, und den mit entsprechender Intelligenz ausgestatteten Steuereinrichtungen 98 ausgetauscht.

In dieser bevorzugter Ausführung umfasst System zur Steuerung des Materialflusses beispielsweise ein Datenverarbeitungsmittel 184, beispielsweise eine Programmroutine 184, welches dazu ausgebildet ist, einen Satz spezifischer Informationen $D_G(m)$ aus einem Datensatze $d_G(m)$ der Speicherstruktur 169 in Form einer o. g. Datei 171, insbesondere Textdatei 171, bevorzugt einem XML-Format, bereitzustellen. Spätestens mit Eintritt eines spezifischen Gebindes 04.j$_m$ in die erste der in die Materialflusssteuerung 139 eingebundenen Bearbeitungsaggregate 11; 12; 13; 14; 16; 17; 18; 19 wird beispielsweise eine Datei 171 für das spezifische Gebinde 04.j in Art einer elektronischen Gebinde- bzw. Stapelkarte bereits gestellt und beispielsweise an einem definierten Speicherort abgelegt. Von dort kann - z. B. über die o. g. Signalverbindung 182 - diese Datei 171, z. B. parallel zum betroffenen Gebinde 04.j selbst, an das zur Bearbeitung folgende Bearbeitungsaggregat 11; 12; 13; 14; 16; 17; 18 übermittelt und nach Bearbeitung entsprechend geändert oder neu angelegt werden (siehe oben) und wieder an einen definierten Speicherort zurückübermittelt wird. Von dort kann beispielsweise ein Zugriff, ein Auswerten und ein Aktualisieren (Ändern oder Neuanlage) des Datensatzes $d_G(m)$; $d_G(m')$ durch beispielsweise entsprechende Datenverarbeitungsmittel 186, z. B. Programmroutine 186. Zumindest der für die Aktualisierung zuständige Teil der Datenverarbeitungsmittel 186 kann als Teil einer der Datenstruktur 169 zugeordneten Verwaltungssoftware vorgesehen sein.

Alternativ zum beidseitigen Austausch der gebindespezifischen Daten kann zwar eine Übermittlung gebindespezifischer, aktueller Daten $D_G(m')$ zur Materialflusssteuerung erfolgen, die zu aktualisierenden Daten $D_G(m)$ selbst jedoch - z. B. auf einem Schreib-Lese-Speicher (beispielsweise einem Transponder) durch das Gebinde bzw. durch das jeweils aktuelle Transporthilfsmittel mitgeführt sein.

In einer bevorzugten Ausführung des Systems zur Steuerung des Materialflusses umfasst dieses ein System zur Erfassung und/oder Verwaltung von Ressourcendaten oder ist mit einem derartigen System logisch und signaltechnisch verbunden. Bevorzugt ist dieses System zur Erfassung und/oder Verwaltung von Ressourcendaten zur Erfassung und/oder Verwaltung von Daten $D_M$, z. B. Ressourcendaten $D_M$, zum Status und/oder zur Verfügbarkeit der in der Anlage 01 vorgehaltener Ressourcen, insbesondere vorgehaltener Aggregate 11; 12; 13; 14; 16; 17; 18 und z. B. deren Vorlage- und/oder Abgabeposition 23; 32; 29; 41 ausgebildet. Dieses System umfasst eine Speicherstruktur 176, welche unter einer eindeutigen Bezeichnung zumindest der eingebundenen, in der Anlage 01 vorgehaltenen Aggregate 11; 12; 13; 14; 16; 17; 18; 19; 118; 119 zumindest eine Angabe zur grundsätzlichen Verfügbarkeit und/oder eine Angabe zum aktuellen Status (des Aggregates und/oder dessen Vorlage- und/oder Abgabeposition) führt. In einer vorteilhaften Ausführung kann eine den Status der Abgabeposition 29; 41 und/oder einer ggf. vorgesehenen eingangsseitigen, maschinenseitig verwalteten Pufferposition und/oder eine den Status der Vorlageposition 23; 32 und/oder einer ggf. vorgesehenen ausgangsseitigen, maschinenseitig verwalteten Pufferposition als frei oder besetzt ausweisende Angabe umfasst sein. Die Speicherstruktur 176 kann im Planungs- und/oder Steuersystem 139 vorgesehen sein, wobei ein Datenzugriff durch die Materialflusssteuerung 146 und/oder des Materiallogistiksystems 158 vorgesehen sein muss. In bevorzugter Ausführung ist der Materialflusssteuerung 146 und/oder dem Materiallogistiksystems 158 eine derartige Speicherstruktur 176 zugeordnet, welche beispielsweise die die Ressourcen, insbesondere Aggregate 11; 12; 13; 14; 16; 17; 18, betreffenden Daten $D_M$, z. B. die Daten zur Verfügbarkeit und/oder zum aktuellen Status (insbesondere Betriebsstatus wie z. B. "in Produktion", "bereit", "Standby") und/oder zum Status der Vorlageposition 23; 32 und/oder einer ggf. vorgesehenen eingangsseitigen, maschinenseitig verwalteten Pufferposition und/oder zum Status der Abgabeposition 29; 41 und/oder einer ggf. vorgesehenen ausgangsseitigen, maschinenseitig verwalteten Pufferposition, über die Signalverbindung 179 vom Planungs- und/oder Steuersystem 139 her oder aber über eine Signalverbindung (182) direkt von den den betreffenden Aggregaten 11; 12; 13; 14; 16; 17; 18 zugeordneten Steuereinrichtungen 98 her erhält. Die Übertragung dieser Daten von den Steuereinrichtungen 98 kann über Signalfolgen I.m und/oder über dieselben oder über vergleichbare Signalverbindungen (182) erfolgen, wie sie für die Übermittlung der die gebindespezifischen Informationen betreffenden Signalfolge I.g dargelegt sind. Diese ressourcenbezogenen Informationen $D_M$ bzw. Daten $D_M$ können somit ebenfalls wie oben dargelegt als band- oder schlauchartige Informationsfolge über entsprechende Signalpfade oder vorzugsweise in Form von Dateien, beispielsweise eines offenen Dateiformates, insbesondere eines offenen Textformates ausgebildet, bevorzugt ebenfalls sog. Dokument mit zugrundeliegenden XML-Format, vorliegen.

Wie angedeutet, erfolgt das Koordinieren und/oder Steuern der Transportprozesse und ggf. ein Verwaltung von Pufferpositionen 24; 36; 56 für den in die Materialflusssteuerung 146 eingebundenen Anlagenteil unter Verwendung von Daten aus einer Auftragsbeschreibung, d. h. von Angaben aus o. g. Auftragsdaten $D_A$, und/oder unter Verwendung von Daten aus einer Ressourcenplanung, d. h. von Angaben aus o. g. Arbeitsplandaten $D_R$, und/oder unter Verwendung von zumindest den Produktstatus {P.j} der spezifischen Gebinde 04.j betreffenden Gebindedaten $D_{Art}(j)$ und/oder unter Verwendung von zumindest den Status verfügbarer Aggregate 11; 12; 13; 14; 16; 17; 18; 19; 118; 119 betreffender Daten $D_M$. Zusätzlich kann das Koordinieren und/oder Steuern bevorzugt noch auf Basis von als Regeln R für den Materialfluss hinterlegten Expertenwissens beruhen. Diese Expertenwissen bzw. die dazugehörigen Regeln R sind stark anwendungsspezifisch und können im hier dargelegten Fall erforderliche Wartezeiten (z. B. zum Trocknen einer Druckfarbe oder Beschichtung) betreffen.

Es erfolgt also z. B. durch das Materialflusssteuerung 146 unter Verwendung von Daten aus einer Auftragsbeschreibung, d. h. von Angaben aus o. g. Auftragsdaten $D_A$, insbesondere auf Basis der geplanten Bearbeitungsschritte P.x, und unter Verwendung von Daten aus einer Ressourcenplanung, d. h. von Angaben aus o. g. Arbeitsplandaten $D_R$, insbesondere aus Angaben zur Ressourcenbelegung, und unter Verwendung von zumindest den Produktstatus {P.j} der spezifischen Gebinde 04.j betreffenden Gebindedaten $D_{Art}(j)$, insbesondere von Angaben zum aktuellen Zustand der zum Produkt 03 zu verarbeitenden Materialeinheiten 02.j, und/oder unter Verwendung von zumindest einen Status verfügbarer Aggregate 11; 12; 13; 14; 16; 17; 18; 19; 118; 119 betreffender Daten $D_M$. und bevorzugt auf Basis o. g. Regeln R eine Berechnung der erforderlichen Materialbewegungen, d. h. Transporte, sowie ggf. eine Verwaltung der Pufferpositionen 24; 36; 56 für den in die Materialflusssteuerung 146 eingebundenen Anlagenteil.

Im Gegensatz zu üblichen Lösungen ist dem System zur Steuerung des Materialflusses somit - zumindest was den eingebundenen Teil der Anlage 01 betrifft - zu jedem Zeitpunkt bekannt, wo sich welche Gebinde 04.$j_m$ welchen Bearbeitungsstatus {P.j} und welchen Auftrages A(n) befinden und welcher Bearbeitungsschritt P.j+1 an welchem Aggregat 11; 12; 13; 14; 16; 17; 18; 19; 118; 119 ggf. unter welchen Randbedingungen R planmäßig als nächstes erfolgen soll.

Grundsätzlich kann die Materialflusssteuerung 146 in einer vollautomatisierten Ausführung für die eingebundenen Transportstrecken 22; 28; 34; 39; 54; 61; 64; 116; 117 und die hiervon betroffenen Aggregate 11; 12; 13; 14; 16; 17; 18; 19; 118; 119 parallel zum beispielsweise im Planungs- und/oder Steuersystem 139 verfolgten Produktionsfortschritt die notwendigen Materialbewegungen bzw. hierfür erforderlichen Transporte P.6; P.9; P.12; P.13; P.14; P.19; P.21; P.22; P.23 P.26; P.30 weitgehen automatisiert und korreliert zum Arbeitsplan durchführen. Hierbei sind beispielsweise an Positionen 21; 23; 24; 29; 31; 32; 33; 36; 41; 56; 62; 71; 111; 112, durch welche eine Rückmeldung über eine erfolgte Übergabe oder Abholung erforderlich ist, eine entsprechende, mit dem System zur Steuerung des Materialflusses signaltechnisch verbundene Sensorik vorgesehen, wie sie beispielhaft durch die Sensoren 177; 178 angedeutet sind. Über die Signalverbindung 138; 179 zwischen dem übergeordneten Planungs- und/oder Steuersystem 139, welches ständig aktualisierte Rückmeldungen über den Stand und Fortschritt an den Aggregaten erhält, erfolgt hierbei beispielsweise eine ständige Information der Materialflusssteuerung 146 über die aktuelle Situation in der Anlage 01, sodass letzteres eigenständig die Belieferung und Abholung von Gebinden 04.j an den zugeordneten und überwachten Positionen 21; 23; 24; 29; 31; 32; 33; 36; 41; 56; 62; 71; 111; 112 planen und durchführen kann.

In einer z. B. im Hinblick auf die Sicherheit und/oder den geringeren Aufwand zu bevorzugenden Ausführung wird durch die Materialflusssteuerung zumindest ein Transport P.6; P.9, P.12; P.13; P.14; P.19; P.21; P.22; P.23 P.26; P.30 eines Gebindes 04.$j_m$ zum Aggregat 11; 12; 13; 14; 16; 17; 18; 19; 118; 119 oder vom Aggregat 11; 12; 13; 14; 16; 17; 18; 19; 118; 119 weg erst angestoßen, d. h. an ein durch dieses verwaltetes Transportmittel 68; 69; 74; 78; 79 als Transportauftrag $T_M$ gegeben, nachdem vom betroffenen Aggregat 11; 12; 13; 14; 16; 17; 18; 19; 118; 119 bzw. von dessen Steuereinheit 98 her eine Liefer- bzw. Abholanforderung erfolgt ist. Dabei kann die Berechnung dieses Transportes auch erst zu diesem Zeitpunkt oder bereits zuvor erfolgt sein. Diese Lieferanforderung und/oder die Abholanforderung kann beispielsweise als ein o. g. über eine Signalverbindung, beispielsweise die Signalverbindung 182, zur Materialflusssteuerung 146 erfolgen und vor Ort durch eine in der Maschinensteuerung implementierte Logik und/oder durch die Betätigung eines Schaltmittels durch das Bedienpersonal veranlasst sein. So kann beispielsweise zumindest eine erste Lieferung eines Gebindes 04.$j_m$ für einen konkreten Auftrag A(n) einer Bestätigung durch das Bedienpersonal bedürfen, während beispielsweise die folgenden Transporte für die Lieferung von Gebinden 04.aus demselben Auftrag A(n) beispielweise selbstständig über den Status der Vorlageposition, z. B. "frei" oder "belegt", und/oder über Signale aus der Maschinensteuerung veranlasst sein können. Die Abholung kann ebenfalls durch eine in der Maschinensteuerung implementierte Logik und/oder durch die Betätigung eines Schaltmittels durch das Bedienpersonal und/oder durch den Status der Abgabeposition 29; 41, z. B. "leer" oder "zur Abholung bereit", veranlasst sein.

Die Anforderung oder Bestätigung der Anforderung durch das Bedienpersonal erfordert hierbei jedoch keine Kenntnisse über die konkrete Bezeichnung der Gebinde oder gar deren Aufenthaltsort, sondern allenfalls die Eingabe oder lediglich Bestätigung eines Auftrages A(n) und ggf. eine Bestätigung der Lieferung eines weiteren, zum Auftrag A(n) zugehörigen Gebindes 04.$j_{m+1}$. Das Materialflusssystem 146 entscheidet auf o. g. Basis dann, welche Transporte wie ausgeführt werden sollen.

Dabei wird für das betreffende Gebindes 04.$j_m$ durch das Materialflusssystem 146 eine entsprechende Auslageranforderung und/oder ein entsprechender Transportauftrag $T_M$ an das von ihm angesprochene Lager 09 bzw. das gewählte Transportmittel 68; 69; 74; 78; 79 ausgegeben (siehe z. B. Fig. 20).

Die Ausgabe des Transportauftrages $T_M$ an das betreffende Transportmittel 60; 65; 68; 69; 74; 78; 79 erfolgt hierbei über eine - z. B. je nach Fall leitungsgebundene oder - ungebundene - Signalverbindung und eine Schnittstelle 187; 189; 191, die z. B. an den jeweiligen Typ Transportmittel 60; 65; 68; 69; 74; 78; 79 entsprechend angepasst sein kann. Wie erwähnt erfolgt die eigentliche, die Umsetzung des Transportauftrages $T_M$ betreffende Transportsteuerung durch die o. g., den betreffenden Transportmittel 60; 65; 68; 69; 74; 78; 79 zugeordneten Transportmittelsteuerungen, z. B. Steuerrechnern. Dabei sind die Transportmittel 60; 65; 68; 69; 74; 78; 79 sämtlicher in die Materialflusssteuerung integrierter Transportstrecken 22; 28; 34; 39; 54; 61; 64; 116; 117 mit ihren Transportmittelsteuerungen und ggf. zugeordneten Führungs- und/oder Orientierungshilfen bevorzugt als automatische Transportsysteme ausgebildet, welche nach Erhalt des Transportauftrages $T_M$ diesen selbstständig - ggf. nach einer vorausgehenden Bestätigung - umsetzen. Die gemäß oben genanntem bevorzugt als Transportfahrzeuge 65; 68; 79 ausgeführten Transportmittel 65; 68; 79 können hierbei bevorzugt fahrerlose Transportfahrzeuge 65; 68; 79 sein, und als Fahrzeuge, insbesondere Flurförderzeuge 65; 68; 79, eines "Fahrerlosen Transportsystems" (FTS) ausgebildet sein. Dabei wird die Schnittstelle 187, über welche von der Materialflusssteuerung 146 die Daten zum Transportauftrag $T_M$ übermittelt wird, zu einer mehrere der Transportfahrzeuge 65; 68; 79 steuernden Transportmittelsteuerung, beispielsweise einem Fahrzeugleitrechner, hin gebildet. In der Materialflusssteuerung 146 können zudem Mittel zur Visualisierung der Transportaufträge $T_M$ und/oder der aktuellen Standorte der Transportsysteme 68; 69; 79 vorgesehen sein. Zum beispielsweise als mechanisch geführtes Transportfahrzeug 60 oder Fördereinrichtung 65 ausgebildeten Transportmittel 60; 68 ist beispielsweise eine Schnittstelle 189 zu der dieses Transportmittel 60; 68 steuernden Transportmittelsteuerung vorgesehen. Schließlich ist in einer Ausführung des Systems zur Steuerung des Materialflusses von einer in die Materialflusssteuerung 146 integrierten oder mit dieser verbundenen Lagerverwaltung eine Schnittstelle 191 zu einer einem oder mehreren dem Lager 09; 63 zugeordneten Transportmitteln 74; 78 zugeordneten Transportmittelsteuerung vorgesehen.

Unter das zur Ausgabe des Transportauftrages $T_M$ Genannte soll auch eine Anweisung für eine Auslagerung aus dem Wareneingangslager 09 verstanden sein. Hierbei wird durch die Materialflusssteuerung 146 für den Fall einer integrierten Lagerverwaltung direkt der entsprechende Transportauftrages $T_M$ an die das betreffende Transportmittel 74; 78 des Lagers 09 gegeben oder aber dem Lagerverwaltungssystem 152 über eine Schnittstelle 188 eine entsprechende Auslageranforderung übermittelt.

Das oben genanntem System zur Steuerung des Materialflusses bzw. Verfahren zu seiner Anwendung kann beispielsweise - jedoch ohne die vorgenannten Ausführungen hierauf zu beschränken - wie im Folgenden dargelegt gehandhabt und/oder ausgeführt sein.

Beim Anlegen eines neuen Kundenauftrages wird die Produktbeschreibung mit Auflistung der auszuführenden Bearbeitungsschritte P.x erzeugt und hierbei die erforderlichen Auftragsdaten AD gewonnen. Diese können ggf. während der Abarbeitung geändert werden, wobei Änderungen in der Auflistung der auszuführenden Bearbeitungsschritte P.x nur auf nicht begonnene Arbeitsschritte Bearbeitungsschritte P.x auswirken. Eine Unterbrechung eines begonnen Bearbeitungsschrittes P.x für eine selbe Produktion P, d. h. ein Stopp der Anlieferung weiterer Gebinde 04.jm für diesen Auftrag A(n) ist z. B. möglich.

Die Produktionsplanung mit Auflistung der Aufträge A(n), die an einem Aggregat 11; 12; 13; 14; 16; 17; 18; 19; 118; 119 bearbeitet werden sollen, wird - z. B. mit einem Vorlauf von bis zu einigen Tagen - von der für die Produktionsplanung verantwortlichen Stelle erstellt. Änderungen in der Produktionsplanung sind auf Grund von Kundenanforderungen, Qualitätsproblemen oder Ausfall von Bearbeitungsstationen möglich, sind aber im Produktionsplanungssystem in den Produktionsplan einzuarbeiten und über den entsprechenden Signalpfad (siehe oben) der Materialflusssteuerung zu übermitteln. Auch hier kann eine Unterbrechung eines begonnen Bearbeitungsschrittes P.x für eine selbe Produktion P, d. h. ein Stop der Anlieferung weiterer Gebinde 04.jm für diesen Auftrag A(n) möglich sein.

Die Regeln R, die für die Steuerung der Materialflüsse beachtet werden müssen (Expertenwissen und/oder Randbedingungen), werden z. B. anwendungsspezifisch definiert. Manuelle Eingriffe entgegen einer Regel R durch einen Bediener können ggf. im Einzelfall möglich sein.

Um für einen anstehenden Auftrag A(n) oder gar für mehrere anstehenden Aufträge A(n) die hierfür benötigten Gebinde 04.j beispielsweise an einer Auspackstation und/oder einer Konditionier- und/oder Umsetzvorrichtung vorzubereiten, kann er, beispielsweise durch Eingabe oder Auswahl des Auftrages A(n) an einer dem Aggregat 118 zugeordneten und mit der Materialflusssteuerung 146 signaltechnisch verbundenen Bedienschnittstelle, die hierfür benötigten Gebinde 04.j anfordern - insbesondere, ohne sie im Einzelnen bezeichnen zu müssen. Daraufhin werden die entsprechenden Gebinde 04.j bzw. die die Gebinde umfassenden Transporteinheiten 27; 66; 67 durch die von der Materialflusssteuerung 146 beauftragte und/oder gesteuerte Auslagerung aus dem Lager 09 und den durch die Materialflusssteuerung 146 beauftragten Transport über die entsprechenden Transportmittel 68; 69; 74; 78; 79 ausgelagert und bereitgestellt.

Nach der Vorbereitung, d. h. dem Auspacken P.10 und ggf. Umsetzen P.11 auf ein System- oder Normtransporthilfsmittel 108; 109, werden die Gebinde 04.0 bzw. Transporteinheiten 27; 66; 67 zum ersten laut Produktionsplan 157 vorgesehenen Bearbeitungsaggregat 11; 12; 13; 14; 16; 17; 18; 19 (d. h. auf eine dortige Vorlage- oder eine vom Aggregat verwaltete und gesteuerte Pufferposition) transportiert. Die Ausführung des Transportes P.12 wird vorzugsweise durch die Abholanforderung vom Handhabungsaggregat 118; 119 über ein entsprechendes, durch die Steuereinrichtung 98 selbsttätig oder das Bedienpersonal am Schaltmittel ausgelöstes Signal I.m bzw. Signalfolge I.m durch die Materialflusssteuerung 146 veranlasst. Das Ziel des Transportes P.12 ergibt sich aus den Auftragsdaten $D_A$, z. B. dem ersten in den Auftragsdaten $D_A$ gelisteten Bearbeitungsschritt P.x, und z. B. daraus, auf welchem dem Bearbeitungsschritt P.x zugeordneten Bearbeitungsaggregat 11; 12; 13; 14; 16; 17; 18; 19; der betreffende Auftrag A(n) aktuell gelistet ist. Für jeden automatisierten Transport gilt hierbei beispielsweise, dass kein Transport ausgeführt wird, wenn das Ziel des Transportes nicht eindeutig bestimmt werden kann. In diesem Fall muss eine entsprechende Fehlermeldung generiert werden.

Beim Lastwechsel, d. h. bei einem durch ein Konditionieren oder ein Bearbeiten bedingtes Ändern eines bestehenden oder Generieren eines neuen Gebindedatensatzes $d_G(m')$ und/oder bevorzugt einer geänderten oder bevorzugt neuen Gebnindeinformation $D_G(m')$, insbesondere einer geänderten oder bevorzugt neuen elektronischen Gebindekarte $D_G(m')$, werden die unveränderten Angaben über das Gebinde 04.$j_m$ beibehalten bzw. übernommen. Die Weitergabe der Gebinde 04.j bzw. Transporteinheiten 27; 66; 67 und die Verwaltung im Bereich eines Bearbeitungsaggregates 11; 12; 13; 14; 16; 17; 18 ist in der Verantwortung der Steuerungseinheit 98 des entsprechenden Aggregates.

Für den Fall von auf Transporthilfsmitteln 26; 108; 109 transportierten Gebinden 04.j wird die betroffene Transporteinheit 27; 66; 67 innerhalb eines Bearbeitungsaggregates 11; 12; 13; 14; 16; 17; 18 "aufgelöst" (Palette wird leer) und die bearbeiteten Materialeinheiten 02.j+1 werden auf einer neuen Transporteinheit 27; 66; 67 zur Abholung bereit gestellt (eine neue Transporteinheit 27; 66; 67, d. h. eine neue eindeutige Kennung, erscheint beispielsweise als Transportmittelinfo p in den betreffenden Gebindedaten $d_G(m')$; $D_G(m')$). Die Referenz auf den Auftrag A(n) bleibt dabei erhalten, der Produktstatus {P.x} wird aktualisiert. Das Gebinde 04.j+1 bzw. die Transporteinheit 27; 66; 67 mit den bearbeiteten Materialeinheiten 02.j+1 wird an der Abgabeposition 29; 41 bereit gestellt und bevorzugt hierdurch über die Steuereinrichtung 98 selbsttätig oder ggf. durch das Bedienpersonal am Schaltmittel das den Abholauftrag repräsentierende Signal I.m bzw. Signalfolge I.m generiert und an die Materialflusssteuerung 146 übermittelt. Diese gibt dann den entsprechenden Transportauftrag an das betroffene Transportmittel 68; 69; 74; 78; 79.

Der nächste Bearbeitungsschritt P.j+1 und damit das nächste Ziel des Gebindes 04.j bzw. der Transporteinheit 27; 66; 67 ergibt sich wiederum zum einen aus den Auftragsdaten DA, z. B. dem nächstfolgenden in den Auftragsdaten DA gelisteten Bearbeitungsschritt P.j+1, und z. B. daraus, auf welchem dem nachfolgenden Bearbeitungsschritt P.j+1 zugeordneten Bearbeitungsaggregat 11; 12; 13; 14; 16; 17; 18; 19 der betreffende Auftrag A(n) aktuell gelistet ist. Wenn für den betreffenden Auftrag A(n) zu diesem Zeitpunkt noch kein Produktionslauf in dieser Liste aktuell geplant ist, oder wenn eine der vordefinierten Regeln R einen sofortigen Weitertransport verbietet, wird von der Materialflusssteuerung 146 ein Transport P.14; P.19 in ein Pufferlager 37; 57 generiert. Im Pufferlager 37; 57 werden die Gebinde 04.j möglichst sortenrein, d. h. nach Möglichkeit jeweils kumuliert zu Aufträgen A(n), gelagert. Eine derartige, ein Zwischenlagern P.15; P20 erzwingende Regel R kann z. B. sein: "nächster Bearbeitungsschritt P.j+1 für Gebinde 04.j eines Auftrages A(n) darf erst begonnen werden, wenn alle Gebinde 04.j bzw. Transporteinheiten 27; 66; 67 desselben Auftrages A(n) den vorhergehenden Bearbeitungsschritt P.j durchlaufen haben" oder "nach einem spezifischen Bearbeitungsschritt P.j muss das Gebinde 04.j erst eine definierte Mindestzeit ruhen, bevor es zum nächsten Bearbeitungsschritt P.j+1 gebracht werden darf" oder "nach einem spezifischen Bearbeitungsschritt P.j muss ein Bediener das Gebinde 04.j bzw. die Transporteinheit 27; 66; 67 erst freigeben, bevor es zum nächsten Bearbeitungsschritt P.j+1 gebracht werden darf".

Die Anlieferung z. B. vom aktuellen Bearbeitungsschritt P.j oder aus dem Pufferlager 37; 57 an das nächste Bearbeitungsstation Bearbeitungsaggregat 11; 12; 13; 14; 16; 17; 18; 19 erfolgt, sobald eine Anforderung (entsprechen oben Genanntem) vom nächsten vorgesehenen Bearbeitungsaggregat 11; 12; 13; 14; 16; 17; 18; 19 ansteht und eine ggf. anzuwendende Regel R nicht dagegen steht. Kann eine Anforderung nicht gleich bedient werden, bleibt sie stehen und wird abgearbeitet, sobald das zugeordnete Material, d. h. ein betreffendes Gebinde 04.j, verfügbar ist und/oder die in einer Regel R definierte Voraussetzung erfüllt ist.

Der Materialfluss zwischen den eingebundenen Bearbeitungsaggregaten 11; 12; 13; 14; 16; 17; 18; 19 und/oder zwischen den eingebundenen Bearbeitungsaggregaten 11; 12; 13; 14; 16; 17; 18; 19 und ggf. verfügbaren Pufferlagern 37; 57 wird durch die Materialflusssteuerung 147 bzw. die darin implementierte Logik realisiert. Nachdem der zuletzt durchlaufene Bearbeitungsschritt P.j eindeutig aus dem Produktstatus {P.j} hervor geht, kann das nächste anzustrebende Ziel aus z. B. dem nächsten Eintrag in der Liste der Bearbeitungsschritte P.x der Auftragsdaten D$_A$ und aus den Arbeitsplandaten D$_R$, d. h. einer Aufstellung von geplanten Produktionsläufen an den Bearbeitungsaggregaten 11; 12; 13; 14; 16; 17; 18; 19, insbesondere an für den nächsten Bearbeitungsschritt P.j+1 vorgesehenen Bearbeitungsaggregaten 11; 12; 13; 14; 16; 17; 18; 19, d. h. beispielsweise einem Maschinenbelegungsplan, ermittelt werden. Wenn ein sofortiger Transport nicht möglich ist, werden die betreffenden Gebinde 04.j bzw. Transporteinheiten 27; 66; 67 wie oben in einem Pufferlager 37; 57 zwischengelagert.

Abholaufträge von einem Bearbeitungsaggregat 11; 12; 13; 14; 16; 17; 18; 19 werden beispielsweise über die entsprechenden Signale bzw. Signalfolgen I.m durch sinngemäß die Meldung "Transporteinheit zur Abholung bereit" angestoßen, Materialanlieferungen beispielsweise durch sinngemäß die Meldung "Vorlageposition zur Anlieferung bereit". Für diese Meldungen sind bevorzugt die Bearbeitungsaggregate 11; 12; 13; 14; 16; 17; 18; 19 selbst, beispielsweise über ihre Steuereinrichtung 98 und ggf. die vorgesehene Sensorik (z. B. Sensoren 177; 178) verantwortlich.

Der Produktionsplan 157 legt im Wesentlichen die Reihenfolge der Aufträge A(n) fest, die eine Bearbeitungsstation durchlaufen sollen. Die geplanten Zeiten für die Produktbearbeitung spielen beispielsweise nur dann eine Rolle, wenn z. B. ein Bearbeitungsaggregat 11; 12; 13; 14; 16; 17; 18; 19 in bestimmten Zeiten nicht genutzt werden soll. Hierbei kann jedoch trotzdem bereits ein erstes Gebinde 04.x bzw. eine erste Transporteinheit 27; 66; 67 eines Auftrages A(n) angeliefert werden, welcher dort als nächstes bearbeitet werden soll. Sollen die Aufträge A(n) ein Bearbeitungsaggregat 11; 12; 13; 14; 16; 17; 18; 19 in einer von der Planung abweichenden Reihenfolge durchlaufen, so muss dies in der Produktionsplanung 144 durch entsprechende Änderungen im Produktionsplan 157 erfolgen und zumindest diese Änderung an die Materialflusssteuerung 146 übermittelt werden. Die Materialflusssteuerung 146 richtet sich bevorzugt streng nach den ihr vorliegenden Auftragsdaten D$_A$ aus der Produktbeschreibung, den Arbeitsplandaten D$_R$ aus der Produktionsplanung 144, den Produktstatus {P.j} der auftragsbezogenen Materialgebinde 04.j$_m$, den die Verfügbarkeit und/oder den Status der Aggregate 11; 12; 13; 14; 16; 17; 18; 19; 118; 119 und denn ggf. vorliegenden Regeln R.

Nach Durchlaufen aller in der Produktbeschreibung bzw. den Auftragsdaten D$_A$ für den betreffenden Auftrag A(n) aufgelisteter Bearbeitungsschritte P.x werden die die fertiggestellten Produkte 03 umfassenden Produktgebinde 08 z. B. verpackt und beispielsweise auf einem oder auf mehreren, insbesondere von Systemtransporthilfsmittel 108 verschiedenen, Transporthilfsmitteln 109; 121 für den Transport P.26 in das Warenausgangslager 63 bereit gestellt. Ein nachfolgendes Auslagern P.28 der Fertigware erfolgt wiederum auf Bedieneranforderung am Warenausgang 07.

Die oben genannten Aggregate 11; 12; 13; 14; 16; 17; 18; 19; 118; 119 sind gleichermaßen im Sinne von Stationen 11; 12; 13; 14; 16; 17; 18; 19; 118; 119 im mehrfachen Produktionsprozess P, die Bearbeitungsaggregate 11; 12; 13; 14; 16; 17; 18; 19 entsprechend als Bearbeitungsstationen 11; 12; 13; 14; 16; 17, 18; 19 zu begreifen.

Bezugszeichenliste

| | |
|---|---|
| 01 | Produktionsanlage |
| 02.j | Materialeinheit, Werkstück, Material- abschnitt, Abschnitt, nach j Bearbei- tungsstufen, mit j = 0, 1, 2, 3, ... s-1; $s \in \mathbb{N}$, $s \geq 2$, wobei s = Anzahl der für den Produk- tionsprozess vorgesehenen Bearbei- tungsstufen |
| 03 | Produkt, Verpackungs- und/oder Druckerzeugnis, Verpackungs- und/oder Druckprodukt |
| 04.j | Materialgebinde, Gebinde, Materialstapel, Stapel (Werkstücke 02.j) |
| 05 | - |
| 06 | Anlieferung, Materialeingang, Wareneingang |
| 07 | Produktausgang, Warenausgang |
| 08 | Produktgebinde (Produkte 03) |
| 09 | Lager, Wareneingangslager, Hochregallager |
| 10 | - |
| 11 | Aggregat, Bearbeitungsaggregat, Druckmaschine, Station, Bearbei- tungsstation (wobei $11_k$ k-tes Aggre- gat mit $k \in \mathbb{N}$ ) |
| 12 | Aggregat, Bearbeitungsaggregat, Beschichtungsmaschine, Station, Bearbeitungsstation |
| 13 | Aggregat, Bearbeitungsaggregat, Station, Bearbeitungsstation, Stanzvorrichtung, Schneidvorrichtung, Stanzautomat (wobei $13_l$ l-tes Aggre- gat mit $l \in \mathbb{N}$ ) |
| 14 | Aggregat, Bearbeitungsaggregat, Station, Bearbeitungsstation, Falzvorrichtung |
| 15 | - |
| 16 | Aggregat, Bearbeitungsaggregat, Station, Bearbeitungsstation, Klebeeinrichtung |
| 17 | Aggregat, Bearbeitungsaggregat, Station, Bearbeitungsstation, Klebeeinrichtung |
| 18 | Aggregat, Bearbeitungsaggregat, Station, Bearbeitungsstation, Ausbrechlinie, Ausbrechvorrichtung |
| 19 | Aggregat, Handhabungsaggregat, Wendevorrichtung, Stapelwender |
| 20 | - |
| 21 | Eintrittsposition, Position |
| 22 | Transportpfad, zweiter, Transportstrecke |
| 23 | Vorlageposition, Position |
| 24 | Pufferposition, Position |
| 25 | - |
| 26 | Transporthilfsmittel, Träger, Palette, Wareneingangs- / Formatpalette |
| 27 | Transporteinheit (26) |
| 28 | Transportpfad, zweiter, Transportstrecke, |
| 29 | Abgabeposition, Position |
| 30 | - |
| 31 | Arbeits-, Anlageposition, Vorlageposition, Position |
| 32 | Vorlageposition, Position |
| 33 | Arbeits-, Anlageposition, Vorlageposition, Position |
| 34 | Transportpfad, dritter, Transportstrecke |
| 35 | - |
| 36 | Pufferposition, Lagerposition, Position |
| 37 | Lager, Pufferlager |
| 38 | Transportpfad |
| 39 | Transportpfad, Transportstrecke |
| 40 | - |
| 41 | Abgabeposition, Position |
| 42 | Transportpfad, Transportstrecke |
| 43 | Transportpfad, Transportstrecke |
| 44 | Transportpfad, Transportstrecke |
| 45 | - |
| 46 | Transportpfad, Transportstrecke |
| 47 | Transportpfad, Transportstrecke |
| 48 | Transportpfad, Transportstrecke |
| 49 | Transportpfad, Transportstrecke |
| 50 | - |
| 51 | Bearbeitungsabschnitt, Hauptbearbeitungsabschnitt, Abschnitt |
| 52 | Weiterbe- und/oder-verarbeitungsabschnitt, Abschnitt |
| 53 | Abschnitt, Be- und/oder verarbeitungsabschnitt |
| 54 | Transportpfad, Transportstrecke |
| 55 | - |
| 56 | Pufferposition, Lagerposition |
| 57 | Lager, Pufferlager |
| 58 | Kommissionier- und/oder Packeinrichtung |
| 59 | Kommissionier- und/oder Packeinrichtung, Schrumpfeinrichtung |
| 60 | Handhabungsmittel, Transportmittel, Transportfahrzeug, fahrerlos und/oder mechanisch geführt |
| 61 | Transportpfad, Transportstrecke |
| 62 | Position, Lagerposition, Lagerplatz |
| 63 | Lager, Fertiglager, Ausgangslager |
| 64 | Transportpfad, Transportstrecke |
| 65 | Handhabungsmittel, Transportmittel, |

| | |
|---|---|
| | Transportfahrzeug, Flurförderfahrzeug, fahrerlos und/oder berührungslos geführt |
| 66 | Transporteinheit |
| 67 | Transporteinheit |
| 68 | Handhabungsmittel, Transportmittel, Transportfahrzeug, Flurförderfahrzeug, fahrerlos und/oder berührungslos geführt |
| 69 | Handhabungsmittel, Transportmittel, Fördereinrichtung, Rollenbahn |
| 70 | - |
| 71 | Lagerplatz, Lagerposition |
| 72 | Regalflucht |
| 73 | Verfahrspur, Verfahrweg |
| 74 | Handhabungsmittel, Transportmittel, Regalbediengerät |
| 75 | Einrichtung zur Ladungssicherung, Klemmelement, Klemmplatte |
| 76 | Regalflucht |
| 77 | Verfahrspur, Verfahrweg |
| 78 | Handhabungsmittel, Transportmittel, Regalbediengerät |
| 79 | Handhabungsmittel, Transportmittel, Transportfahrzeug, Flurförderfahrzeug, fahrerlos |
| 80 | - |
| 81 | Bearbeitungswerkzeug, Druckwerk |
| 82 | Bearbeitungswerkzeug, Beschichtungseinrichtung |
| 83 | Bearbeitungswerkzeug, Stanz- und/oder Rillwerk |
| 84 | Bearbeitungswerkzeug, Falzwerk |
| 85 | - |
| 86 | Bearbeitungswerkzeug, Klebevorrichtung |
| 87 | Bearbeitungswerkzeug, Klebevorrichtung |
| 88 | Bearbeitungswerkzeug, Ausbrechwerkzeug |
| 89 | Vorrichtung zur automatischen und/oder unterbrechungsfreien Materialzufuhr |
| 90 | - |
| 91 | Vorrichtung zur automatischen und/oder unterbrechungsfreien Materialabfuhr |
| 92 | Trageinrichtung, Hubboden |
| 93 | Trageinrichtung, Gabel, Rechen |
| 94 | Trageinrichtung, Hubboden |
| 95 | - |
| 96 | Trageinrichtung, Brett, Rollo |
| 97 | Fördereinrichtung, Umlaufförderer |
| 98 | Steuereinrichtung |
| 99 | Leitstand |
| 100 | - |
| 101 | Bedienelement, Bedienschnittstelle |
| 102 | Bedienelement, Bedienschnittstelle |

| | |
|---|---|
| 103 | Fördereinrichtung, Rollenbahn |
| 104 | Fördereinrichtung, Rollenbahn |
| 105 | - |
| 106 | Fördereinrichtung, Rollenbahn |
| 107 | Fördereinrichtung, Rollenbahn |
| 108 | Transporthilfsmittel, Träger, Palette, Systemtransporthilfsmittel, Systempalette |
| 109 | Transporthilfsmittel, Träger, Palette, Normtransporthilfsmittel, Normpalette Systempalette, weitere |
| 110 | - |
| 111 | Auslageposition |
| 112 | Auslageposition |
| 113 | Abnahmeposition |
| 114 | Vorlageposition |
| 115 | - |
| 116 | Transportpfad |
| 117 | Transportpfad |
| 118 | Aggregat, Handhabungsaggregat, Konditionier- und/oder Umsetzvorrichtung, Wendevorrichtung, Stapelwender |
| 119 | Aggregat, Handhabungsaggregat, Auf- und/oder Umsetzvorrichtung |
| 120 | - |
| 121 | Transporthilfsmittel, Träger, Palette, Warenausgangspalette |
| 122 | Tragboden, Deckplatte |
| 123 | Sockelbereich, Unterbau |
| 124 | Transporthilfsmittel |
| 125 | - |
| 126 | Ausnehmung, Aussparung |
| 127 | Steg |
| 128 | Fuß |
| 129 | Aussparung |
| 130 | |
| 131 | Tragfläche |
| 132 | Tragfläche |
| 133 | Stapel (109) |
| 134 | Gebinde, Stapel (108) |
| 135 | - |
| 136 | Sammel- und/oder Rückgabestation |
| 137 | Aggregat, Handhabungsaggregat, Wendeaggregat, Palettenwender |
| 138 | Signalverbindeng, Netzwerkverbindung, Busverbindung |
| 139 | Produktion- und Ressourcenplanung, Planungs- und/oder Steuersystem, Produktionsplanungs- und Prozesssteuerungssystem |
| 140 | - |
| 141 | Datei, Textdatei, XML-Dokument, Zugriff |
| 142 | Zugriff, Datei, Textdatei, XML-Dokument |
| 143 | Auftragsannahme |
| 144 | Produktionsplanung |

| | |
|---|---|
| 145 | . |
| 146 | Materialflusssteuerung |
| 147 | Prozesskette |
| 148 | Prozesskette |
| 149 | Prozessstrang |
| 150 | - |
| 151 | Prozessstrang |
| 152 | Lagerverwaltungssystem |
| 153 | Produktionsleitung |
| 154 | Unternehmensleitung |
| 155 | - |
| 156 | Auftragsbestand |
| 157 | Produktionsplan |
| 158 | Materiallogistiksystem |
| 159 | Lagerbestand |
| 160 | - |
| 161 | Prozesswerte, Voreinstellwerte |
| 162 | Prozessdaten |
| 163 | Schnittstelle, XML-Interface |
| 164 | Schnittstelle, ODBC-Schnittstelle |
| 165 | - |
| 166 | Datenquelle, Datei, Datenbank |
| 167 | Erfassungsmittel, Bedienerschnittstelle, |
| 168 | Materialverwaltung, Materialverwaltungssystem |
| 169 | Datei, Dateisystem, Datenbank, Speicherstruktur |
| 170 | - |
| 171 | Datei, Textdatei, XML-Dokument |
| 171' | Datei, Textdatei, XML-Dokument |
| 172 | Zugriff, Schreibzugriff |
| 173 | Datenverarbeitungsmittel, Programmroutine |
| 174 | Datenverarbeitungsmittel, Programmroutine |
| 175 | - |
| 176 | Speicherstruktur |
| 177 | Sensor, Taster |
| 178 | Sensor, Taster |
| 179 | Signalverbindung, Netzwerkverbindung, |
| 180 | - |
| 181 | Signalverbindeng, Netzwerkverbindung, Busverbindung |
| 182 | Signalverbindeng, Netzwerkverbindung, Busverbindung |
| 183 | Schnittstelle, XML-Interface |
| 184 | Datenverarbeitungsmittel, Programmroutine |
| 185 | - |
| 186 | Datenverarbeitungsmittel, Programmroutine |
| 187 | Schnittstelle |
| 188 | Schnittstelle |
| 189 | Schnittstelle |
| 190 | - |
| 191 | Schnittstelle |

| | |
|---|---|
| $a_n$ | Bezeichnung, Job-ID |
| A(n) | Auftrag |
| $D_A$ | Information, Daten, Auftragsdaten, Plandaten |
| $D_R$ | Information, Daten, Arbeitsplandaten, Plandaten |
| $D_M$ | Information, Daten, Ressourcendaten |
| $D_{Art}(m)$ | Daten, Artikeldaten |
| $d_G(m')$ | Daten, Datensatz, Gebindedaten |
| $D_G(m')$ | Information, Daten, Gebindedaten |
| | |
| I.g | Signal, Signalfolge, informationsbehaftet |
| I.m | Signal, Signalfolge, informationsbehaftet |
| K | Packstufe |
| M | Materialentnahmerichtung |
| | |
| P | Produktionsprozess, Prozess, Gesamtprozess |
| | |
| P.x | Prozessschritt, Bearbeitungsschritt, mit x aus [P.1; P.1'; P.2'; P.2"; PS.2'''; P.3; P.4; P4' (P.4"); P.5]; |
| P.1 | Prozessschritt, Bearbeitungsschritt, Stoffauftrag, Bedrucken |
| P.1' | Prozessschritt, Bearbeitungsschritt, Druckveredelung, Beschichten |
| P.2 | Prozessschritt, Bearbeitungsschritt, mechanisches Bearbeiten, durch Schneidwerkzeug, Stanzen |
| P.3 | Prozessschritt, Bearbeitungsschritt, mechanisches Bearbeiten, Verformen, Falzen |
| P.4 | Prozessschritt, Bearbeitungsschritt, Kleben (Lasche) |
| P.4' | Prozessschritt, Bearbeitungsschritt, Kleben (Fenster) |
| P.5 | Prozessschritt, Bearbeitungsschritt Ausbrechen |
| P.y | Prozessschritt, Handhabungsschritt mit y aus [P.6, P.7....]; |
| P.6 | Prozessschritt, Handhabungsschritt, Transport (WE - Lager) |
| P.7 | Prozessschritt, Handhabungsschritt, Einlagern |
| P.8 | Prozessschritt, Handhabungsschritt, Auslagern |
| P.9 | Prozessschritt, Handhabungsschritt, Transport (Lager-Stapelwender/Auspackstation) |
| P.10 | Prozessschritt, Handhabungsschritt, Konditionieren, Auspacken |
| P.11 | Prozessschritt, Handhabungsschritt, Konditionieren, Umsetzen, Umpalettieren, Wenden und/oder Lockern |
| P.12 | Prozessschritt, Handhabungsschritt, Transport (Umsetz- und/oder Konditioniereinrichtung - 1. Bearbeitungsstufe) |
| P.13 | Prozessschritt, Handhabungsschritt, Transport (1. Bearbeitungsstufe - 2. Bearbeitungsstufe) |
| P.14 | Prozessschritt, Handhabungsschritt, Transport (1. Bearbeitungsstufe - 1. Pufferlager) |
| P.15 | Prozessschritt, Zwischenlagern |
| P.16 | Prozessschritt, Handhabungsschritt, Konditionieren, Wenden und/oder Lockern |
| P.17 | Prozessschritt, Handhabungsschritt, Transport |

(1. Pufferlager - 2. Bearbeitungsstufe)

P.18 Prozessschritt, Handhabungsschritt, Transport (2. Bearbeitungsstufe - Weiterverarbeitung)

P.19 Prozessschritt, Handhabungsschritt, Transport (2. Bearbeitungsstufe - 1./2. Pufferlager)

P.20 Prozessschritt, Zwischenlagern

P.21 Prozessschritt, Handhabungsschritt, Transport (1./2. Pufferlager - Weiterverarbeitung)

P.22 Prozessschritt, Handhabungsschritt, Transport (ohne Weiterverarbeitung)

P.23 Prozessschritt, Handhabungsschritt, Transport (mit Weiterverarbeitung)

P.24 Verpacken

P.25 Palettieren

P.26 Prozessschritt, Handhabungsschritt, Transport

P.27 Prozessschritt, Handhabungsschritt, Einlagern

P.28 Prozessschritt, Handhabungsschritt, Kommissionieren und/oder Auslagern

P.29 Prozessschritt, Handhabungsschritt, Umpalettieren

P.30 Prozessschritt, Handhabungsschritt, Transport

P.31 Prozessschritt, Handhabungsschritt, Umpalettieren, Umsetzen, Aufsetzen

S.q Bearbeitungsstufe, mit q = 1, 2, 3, ... s; $s \in \mathbb{N}$, $s \geq 2$ (Bedrucken, Weiterbe- und/oder -verarbeiten, z. B. Prägen, Stanzen, Ausbrechen, Falzen oder Kleben)

S.1 Bearbeitungsstufe, Stoffauftrag, Bedrucken

S.1' Bearbeitungsstufe, Stoffauftrag, Druckveredelung, Beschichten

S.2 Bearbeitungsstufe, mechanisches Bearbeiten, durch Schneidwerkzeug, Stanzen

S.3 Bearbeitungsstufe, mechanisches Bearbeiten, Verformen, Falzen

S.4 Bearbeitungsstufe, Verbinden, Kleben, Heften (Lasche)

S.4' Bearbeitungsstufe, Verbinden, Kleben (Fenster)

S.5 Bearbeitungsstufe, mechanisches Bearbeiten, Ausbrechen

$T_M$ Transportauftrag

z Anzahl, $z \in \mathbb{N}$

**Patentansprüche**

1. Verfahren zur Steuerung eines Materialflusses in einer eine Druckmaschine (11) und mindestens ein weiteres, bogenförmige Materialabschnitte (02.j) verarbeitendes Bearbeitungsaggregat umfassenden mehrstufigen Anlage (01), wobei

- eine Vielzahl zu bearbeitender Materialabschnitte (02.j) in einem Gebinde (04.j) durch wenigstens ein erstes Transportmittel (65; 68; 79) zu einem als Druckmaschine (11) ausgebildeten Bearbeitungsaggregat (11) transportiert werden,

- die Materialabschnitte (02.j) die Druckmaschine (11) zumindest einmal durchlaufen und dabei zumindest einmal bedruckt werden,

- und die die Druckmaschine (11) zumindest einmal durchlaufenen und dabei zumindest einmal bedruckten Materialabschnitte (02.j) in mindestens einem Gebinde (04.j) durch das wenigstens eine erste oder durch ein davon verschiedenes zweites Transportmittel (65; 68; 79) zur weiteren Bearbeitung von der Druckmaschine (11) weg zu einem weiteren, von einer Druckmaschine verschiedenen Bearbeitungsaggregat (12; 13; 14; 16; 17; 18) oder zur Zwischenlagerung zu einer Lagerposition (36; 56) eines Lagers (37; 57) transportiert werden,

- zumindest für Transporte von der Druckmaschine (11) weg zum weiteren Bearbeitungsaggregat (12; 13; 14; 16; 17; 18) oder zur Lagerposition (36; 56) hin Transportaufträge ($T_M$) durch Datenverarbeitungsmittel einer Materialflusssteuerung (146) generiert werden, **dadurch gekennzeichnet, dass**

- der jeweilige Transportauftrag ($T_M$) durch die Materialflusssteuerung (146) unter Berücksichtigung von der Materialflusssteuerung (146) elektronisch zugänglichen oder übermittelten Informationen ($D_G$) zu dem den Transportauftrag betreffenden Gebinde (04.j) generiert wird, wobei die Informationen ($D_G$) zumindest die Angabe einer eindeutigen Bezeichnung ($\{04.j\}_m$) für das betreffende Gebinde (04.j) und die Angabe einer eindeutigen Bezeichnung für den dem spezifischen Gebinde (04.j) zugeordneten Auftrag (A(n)) und eine Angabe zum Bearbeitungsstatus ($\{P.x\}$) der Materialabschnitte (02.j) des Gebinde (04.j) umfasst,

- und die betreffenden Transporte auf der Basis dieser durch die Materialflusssteuerung (146) generierten Transportaufträge ($T_M$) erfolgen.

2. Verfahren nach Anspruch 1, **dadurch gekennzeichnet, dass** Transporte von einem der Druckmaschine (11) vorgeordneten Lager und/oder Handhabungsaggregat (118) zu der Druckmaschine (11) hin und/oder von der Lagerposition (36; 56) zum weiteren Bearbeitungsaggregat (12; 13; 14; 16; 17; 18) hin und/oder vom weiteren Bearbeitungsaggregat (12; 13; 14; 16; 17; 18) zu einer weiteren Lagerposition (56) durch Transportmittel (60; 65; 68; 69; 74; 79) ebenfalls auf der Basis jeweiliger, in der Materialflusssteuerung (146) generierter Transportaufträge ($T_M$) erfolgen, und dass der jeweilige Transportauftrag ($T_M$) durch die Materialflusssteuerung (146) unter Berücksichtigung von der Materialflusssteuerung (146) elektronisch zugänglichen und/oder übermittelten Informationen ($D_G$) zu dem den Transportauftrag betreffenden Gebinde (04.j) generiert und/oder ausgelöst wird, wobei dass die gebindespezifische Information ($D_G$) zumindest die Angabe einer eindeutigen Bezeichnung (${04.j}_m$) für das betreffende Gebindes (04.j) und/oder die Angabe einer eindeutigen Bezeichnung für den dem speifischen Gebinde (04.j) zugeordneten Auftrag (A(n)) und/oder eine Angabe zum Bearbeitungsstatus (${P.x}$) der Materialabschnitte (02.j) des Gebinde (04.j) umfasst.

3. Verfahren nach Anspruch 1 oder 2, **dadurch gekennzeichnet, dass** der jeweilige Transportauftrag ($T_M$) durch die Materialflusssteuerung (146) unter Verwendung von elektronisch zugänglichen und/oder übermittelten Daten zu einer Auftragsbeschreibung, insbesondere von Daten oder Angaben aus einer Aufstellung der für einen spezifischen Auftrag (n) erforderlichen Bearbeitungsschritte (P.x), und/oder zu einer Ablauf- und Ressourcenplanung, insbesondere von Daten oder Angaben aus einem die Produktionsläufe für abzuarbeitenden Aufträge (n) an den betreffenden Bearbeitungsaggregaten (11; 12; 13; 14; 16; 17; 18) ausweisenden Maschinenbelegungsplan, generiert wird.

4. Verfahren nach Anspruch 3, **dadurch gekennzeichnet, dass** die Materialflusssteuerung (146) die Angaben zur Auftragsbeschreibung und/oder zu einer Ablauf- und Ressourcenplanung aus einem Planungs- und/oder Steuersystem (139) der Anlage (01) erhält.

5. Verfahren nach Anspruch 1, 2, 3 oder 4, **dadurch gekennzeichnet, dass** der jeweilige Transportauftrag ($T_M$) zu dessen Umsetzung von der Materialflusssteuerung (146) einer zumindest das jeweilige Transportmittel (65; 68; 79) steuernde Transportmittelsteuerung zugeleitet wird und/oder dass durch die Materialflusssteuerung (146) Transportbewegungen für auf mehreren voneinander verschiedenen Transportpfaden auszuführenden Transportbewegungen und/oder für mehrere in der Anlage (01) vorgesehene Transportmittel (60; 65; 68; 69; 74; 79) koordiniert und/oder vorgegeben werden, indem sie entsprechende Transportaufträge ($T_M$) generiert und der oder der jeweils betroffenen Transportmittelsteuerung zuleitet.

6. Verfahren nach Anspruch 1, 2, 3, 4 oder 5, **dadurch gekennzeichnet, dass** der jeweilige Transportauftrag ($T_M$) durch die Materialflusssteuerung (146) unter Berücksichtigung von der Materialflusssteuerung (146) elektronisch zugänglichen und/oder übermittelten Informationen ($D_M$) zum Status eines den Transportauftrag betreffenden Bearbeitungsaggregates (11; 12; 13; 14; 16; 17; 18) und/oder einer diesem Bearbeitungsaggregat (11; 12; 13; 14; 16; 17; 18) zugeordneten Vorlage-oder Abgabeposition (23; 32; 29; 41) generiert und/oder ausgelöst wird.

7. Verfahren nach Anspruch 1, 2, 3, 4, 5 oder 6, **dadurch gekennzeichnet, dass** der jeweilige Transportauftrag ($T_M$) durch die Materialflusssteuerung (146) unter Anwendung vordefinierter und dem Materialflusssteuerung (146) elektronisch zugänglicher und/oder übermittelter Regeln erfolgt.

8. Verfahren nach Anspruch 1, 2, 3, 4, 5, 6 oder 7, **dadurch gekennzeichnet, dass** durch die Materialflusssteuerung (146) ein Transportauftrag ($T_M$) zu einem der Bearbeitungsaggregate (11; 12; 13; 14; 16; 17; 18) hin oder von einem dieser Bearbeitungsaggregate (11; 12; 13; 14; 16; 17; 18) weg generiert und/oder ausgelöst wird, wenn der Materialflusssteuerung (146) vom betreffenden Bearbeitungsaggregat (11; 12; 13; 14; 16; 17; 18) das eingangsseitige Anfordern eines zu bearbeitenden Gebindes (04.j) bzw. eine das ausgangsseitige Bereitstehen eines abzuholenden Gebindes (04.j+1) repräsentierende Information ($D_M$) zugegangen ist.

9. Verfahren nach Anspruch 1, 2, 3, 4, 5, 6, 7 oder 8, **dadurch gekennzeichnet, dass** dem Materialflusssteuerung (146) von einer dem betreffenden Bearbeitungsaggregat (11; 12; 13; 14; 16; 17; 18) vor Ort zugeordnetem Steuereinrichtung (98) her Informationen ($D_G$) zu dem zuletzt bearbeiteten und/oder zur Abholung bereitstehenden Gebinde (04.uj) zugeleitet werden.

10. Verfahren nach Anspruch 9, **dadurch gekennzeichnet, dass** eine dem betreffenden Bearbeitungsaggregat (11; 12; 13; 14; 16; 17; 18), d. h. der Druckmaschine (11) oder dem oder einem weiteren Bearbeitungsaggregat (12; 13; 14; 16; 17; 18), zugeordneten Datenverarbeitungsmittel (173; 174) die Informationen ($D_G$) zum bearbeiteten und/oder bereitstehenden Gebinde (04.j) in Form von Daten, insbesondere in Form einer Datei (171; 171'), bevorzugt einer Datei im XML-Format, bereitstellt.

11. Verfahren nach Anspruch 1, 2, 3, 4, 5, 6, 7, 8, 9 oder 10, **dadurch gekennzeichnet, dass** zwischen der Materialflusssteuerung (146) und den jeweiligen Bearbeitungsaggregaten (11; 12; 13; 14; 16; 17; 18), d. h. der Druckmaschine (11) und/oder dem oder mindestens einem weiteren Bearbeitungsaggregat (12; 13; 14; 16; 17; 18), zugeordneten Steuereinrichtungen (98) und/oder Datenverarbeitungsmitteln (173; 174) ein Austausch einer Angaben zum Zustand des durch das Bearbeitungsaggregat (11; 12; 13; 14; 16; 17; 18) zu bearbeitenden und/oder bearbeiteten Stapels (04.j) enthaltenden Datei (171) erfolgt.

**12.** Verfahren nach Anspruch 1, 2, 3, 4, 5, 6, 7, 8, 9, 10 oder 11, **dadurch gekennzeichnet, dass** die Materialflusssteuerung (146) unter Verwendung einer Angabe zum Bearbeitungsstatus ({P.x}) sowie unter Verwendung von Angaben aus der den Auftrag (A(n)) betreffenden Auftragsbeschreibung und/oder der Ablauf- und Ressourcenplanung das nächste für das Gebinde (04.j) anstehende Ziel, d. h. das als nächstes anzulaufende Aggregat oder Zwischenlager, ermittelt.

**13.** Verfahren nach Anspruch 1, 2, 3, 4, 5, 6, 7, 8, 9, 10, 11 oder 12, **dadurch gekennzeichnet, dass** in einem übergeordneten Planungs- und/oder Steuersystem (139) über eine Bedienerschnittstelle Aufträge A(n) zur Herstellung von Verpackungs- und/oder Druckerzeugnissen (03) beschrieben werden und/oder eine Ablauf- und Ressourcenplanung vorgenommen wird, und Angaben aus der Auftragsbeschreibung und/oder Angaben aus der Ablauf- und Ressourcenplanung in einer dem Planungs- und/oder Steuersystem (139) zugeordneten oder mit diesem verbundenen Speicherstruktur als strukturierte Daten ($D_A$; $D_R$) bereitgestellt werden.

**14.** Verfahren nach Anspruch 1, 2, 3, 4, 5, 6, 7, 8, 9, 10, 11, 12 oder 13, **dadurch gekennzeichnet, dass** zwischen einer von der Materialflusssteuerung (146) umfassten oder mit dieser signaltechnisch verbundenen Materialverwaltung (168) und einer oder mehreren, jeweils einem oder mehreren Bearbeitungsaggregaten (11; 12; 13; 14; 16; 17; 18) zur Steuerung und/oder Bedienung zugeordneten Steuereinrichtungen (98) ein Austausch von gebinderelevanten Informationen ($D_G$) in beide Richtungen erfolgt, wobei vom Materialflusssystem (146) oder der von ihr umfassten oder verbundenen Materialverwaltung (168) zur Steuereinrichtung (98) übermittelte gebinderelevante Informationen (DG) dort durch Änderung oder Neuanlage aktualisiert und zurück an das Materialflusssystem (146) und/oder die Materialverwaltung (168) übermittelt werden

**15.** System zur Steuerung eines Materialflusses in einer eine Druckmaschine (11) sowie eine oder mehrere weitere bogenverarbeitende Bearbeitungsaggregate (12; 13; 14; 16; 17; 18) umfassenden Anlage (01) mit einer Datenverarbeitungsmittel umfassenden Materialflusssteuerung (146), **dadurch gekennzeichnet, dass** die Materialflusssteuerung (146) programmtechnisch dazu eingerichtet ist, aus in elektronischer Form vorliegenden Daten zu einer Auftragsbeschreibung und zu einer Ablauf- und Ressourcenplanung einen Transportauftrag ($T_M$) für den Transport eines Stapels (04.j) aus zu bearbeitenden Materialabschnitten (02.j) von einer definierten Startposition zu einer definierten Zielposition zu generieren und einer einem oder mehreren Transportmitteln (65; 68; 79) zugeordneten Transportmittelsteuerung zuzuleiten und ein Verfahren gemäß einem oder mehreren der Ansprüche 1 bis 14 auszuführen.

**16.** System nach Anspruch 15, **dadurch gekennzeichnet, dass** die Materialflusssteuerung (146) über eine Schnittstelle (163; 164), insbesondere über eine XML-Schnittstelle (163) und/oder ein Datenbank-Interface (164), mit einem Planungs- und/oder Steuersystem (139) und/oder über jeweils eine Schnittstelle (183), insbesondere ein XML-Interface (183), mit mehreren, jeweils einem Bearbeitungsaggregat (12; 13; 14; 16; 17; 18) vor Ort zugeordneten Steuereinrichtungen (98) in Signalverbindung steht.

**17.** System nach Anspruch 15 oder 16, **dadurch gekennzeichnet, dass** das System ein von der Materialflusssteuerung (146) umfasstes oder mit dieser verbundenes Speichermittel mit einer Datenstruktur (169) umfasst, welche dazu eingerichtet ist, für eine Vielzahl von in der Anlage (01) zu handhabenden Gebinden (04.j) gebindespezifische Daten dG(m) mit zumindest einer eindeutigen Bezeichnung ({04.j}m) des betreffenden Gebindes (04.jm) und/oder einer einen zugeordneten Auftrag (A(n) bezeichnenden Angabe und/oder einer einen aktuellen Produktstatus ({P.x} bezeichnenden Angabe und/oder einer eine Anzahl (z) der im Gebinde (04.jm) umfassten Materialabschnitte (02.0) bezeichnende Angabe und/oder einer ein das Gebinde (04.jm) aufnehmendes Transporthilfsmittel (26; 108; 108) charakterisierenden Angabe (p) zu speichern.

**18.** System nach Anspruch 15, 16 oder 17, **dadurch gekennzeichnet, dass** die Materialflusssteuerung (146) über mehrere Transportsteuerungen signaltechnisch mit mehreren, voneinander verschiedenen Transportpfaden zugeordneten Transportmitteln (60; 65; 68; 69; 78; 79) verbunden ist.

**Claims**

**1.** A method for controlling a material flow in a multi-level plant (01) comprising a printing press (11) and at least one further processing aggregate processing sheet-shaped material sections (02.j), wherein

- a plurality of material sections (02.j) to be processed are transported in a drum (04.j) by at least a first transport means (65; 68; 79) to a processing aggregate (11) configured as a printing press (11),
- the material sections (02.j) run through the printing press (11) at least once and in the process are printed at least once,

- and the at least once printed material sections (02.j)haven run through the printing press (11) at least once are transported in at least one drum (04.j) by the at least first transport means (65; 68; 79) or a second different transport means (65; 68; 79) for further processing away from the printing press (11) to a further processing aggregate (12; 13; 14; 16; 17; 18) differing from the printing press or are transported for intermediate storage to a storage position (36; 36) of a warehouse (37; 57),

- at least for transports away from the printing press (11) to the further processing aggregate (12; 13; 14; 16; 17; 18) or to the storage position (36; 56) transport orders ($T_M$)are generated by data processing means of a material flow controller (146),

**characterized in that**

- the respective transport order ($T_M$) is generated by the material flow controller (146) under consideration of the information ($D_G$) about the drum (04.j) relating to the transport order transmitted to the material flow controller (146) or electronically accessible to said material flow controller, wherein the information ($D_G$) comprises at least the specification of a unique designation ($\{04.j\}_m$) for the relevant drum (04.j) and the specification of a unique designation for the order (A(n)) assigned to the drum (04.j) and a specification about the processing status ($\{P.x\}$) of the material sections (02.j) of the drum (04.j),
- and the relevant transports occur on the basis of the transport orders ($T_M$) generated by the material flow controller.

2. The method according to claim 1, **characterized in that** transports from a warehouse and/or manipulation aggregate (118) upstream of the printing press (11) to and/or from the warehouse position (36; 56) to the further processing aggregate (12; 13; 14; 16; 17; 18) and/or from the further processing aggregate (12; 13; 14; 16; 17; 18) to a further warehouse position (56) occur by means of transport means (60; 65; 68; 69; 74; 79) likewise on the basis of respective transport orders ($T_M$) generated in the material flow controller (146), and that the respective transport order ($T_M$) is generated and/or triggered by the material flow controller (146) under consideration of the information ($D_G$) about the drum (04.j) relating to the transport order transmitted to the material flow controller (146) or electronically accessible to said material flow controller, wherein the drum-specific information ($D_G$) comprises at least the specification of a unique designation ($\{04.j\}_m$) for the relevant drum (04.j) and/or the specification of a unique designation for the order (A(n)) assigned to the drum (04.j) and/or a specification about the processing status ($\{P.x\}$) of the material sections (02.j) of the drum (04.j).

3. The method according to claim 1 or 2, **characterized in that** the respective transport order ($T_M$) is generated by the material flow controller (146) using data about an order description transmitted to the material flow controller (146) or electronically accessible to said material flow controller, in particular data or information from a compilation of the processing steps (P.x) required for a specific order (n), and/or about a processing and resource planning, in particular of data or information from a machine utilization plan having the production runs for orders (n) to be processed at the relevant processing aggregates (11; 12; 13; 14; 16; 17; 18).

4. The method according to claim 3, **characterized in that** the material flow controller (146) receives the information about the order description and/or about a process and resource planning from a planning and/or control system (139) of the plant (01).

5. The method according to claim 1, 2, 3 or 4, **characterized in that** the respective transport order ($T_M$) is supplied a transport means controller for controlling at least the respective transport means (65; 68; 79) for its implementation by the material flow controller (146) and/or that the material flow controller (146) coordinates or specifies transport movements to be executed for transport movements on several transport paths differing from one another and/or for several transport means (60; 65; 68; 69; 74; 79) provided in the plant (01) by generating corresponding transport orders ($T_M$) and supplying them to the or the respective affected transport means controller.

6. The method according to claim 1, 2, 3, 4, or 5, **characterized in that** the respective transport order ($T_M$) is generated and/or triggered by the material flow controller (146) under consideration of the information ($D_M$) about the status of a processing aggregate (11; 12; 13; 14; 16; 17; 18) relating to the transport order and/or an advanced position or dispensing position (23; 32; 29; 41) assigned to this processing aggregate (11; 12; 13; 14; 16; 17; 18) transmitted to the material flow controller (146) or electronically accessible to said material flow controller.

7. The method according to claim 1, 2, 3, 4, 5 or 6, **characterized in that** the respective transport order ($T_M$) occurs by means of the material flow controller (146) using predefined rules electrically accessible to the material flow controller (146) and/or transmitted to said material flow controller.

8. The method according to claim 1, 2, 3, 4, 5, 6 or 7, **characterized in that** by means of the material flow controller (146) a transport order ($T_M$) is generated and/or triggered to one of the processing aggregates (11; 12; 13; 14; 16; 17; 18) or away from one of the processing aggregates (11; 12; 13; 14; 16; 17; 18) when the material flow controller (146) receives the input side request of a drum (04.j) to be processed or information ($D_M$) representing the output side provision of a drum (04.j+1) to be picked up from the relevant processing aggregates (11; 12; 13; 14; 16; 17; 18).

9. The method according to claim 1, 2, 3, 4, 5, 6, 7 or 8, **characterized in that** the material flow controller (146) is supplied with information ($D_G$) from a controller (98) assigned to the relevant processing aggregate (11; 12; 13; 14; 16; 17; 18) on site about the last drum (04.uj) processed and/or ready for pickup.

10. The method according to claim 9, **characterized in that** a data processing means (173; 174) assigned to the processing aggregate (11; 12; 13; 14; 16; 17; 18), i.e. to the printing press (11) or to a further processing aggregate (12; 13; 14; 16; 17; 18) provides the information ($D_G$) about the processed and/or available drum (04.j) in the form of data, in particular in the form of a file (171; 171'), preferably a file in XML format.

11. The method according to claim 1, 2, 3, 4, 5, 6, 7, 8, 9 or 10, **characterized in that** between the material flow controller (146) and the respective processing aggregates (11; 12; 13; 14; 16; 17; 18), i.e. to the printing press (11) and/or to the or at least one further processing aggregate (12; 13; 14; 16; 17; 18), assigned controllers (98) and/or data processing means (173; 174) an exchange of a file (171) containing information about the state of the stack (04.j) to be processed and/or processed by the processing aggregate (11; 12; 13; 14; 16; 17; 18) occurs.

12. The method according to claim 1, 2, 3, 4, 5, 6, 7, 8, 9, 10 or 11, **characterized in that** the material flow controller (146) uses information about the processing status ({P.x}) and uses information from the order description relating to the order (A(n)) and/or the process and resource planning to determine the next destination for the drum (04.j), i.e. the next aggregate or intermediate storage to approach.

13. The method according to claim 1, 2, 3, 4, 5, 6, 7, 8, 9, 10, 11 or 12, **characterized in that** in a higher level planning and/or control system (139) over an operator interface orders A(n) for the manufacturing of packing and/or printing products (03) are described and/or a process and resource planning is performed, and information from the order description and/or information from the process and resource planning is provided as structured data ($D_A$; $D_R$) in a memory structure assigned or connected to the planning and/or control system (139).

14. The method according to claim 1, 2, 3, 4, 5, 6, 7, 8, 9, 10, 11, 12 or 13, **characterized in that** an exchange of drum-relevant information ($D_G$) occurs in both directions between material management (168) comprised by or connected by means of electrical signals to the material flow controller (146) and one or more controllers (98) assigned in each case to one or more processing aggregates (11; 12; 13; 14; 16; 17; 18) for control and/or operation, wherein drum-relevant information ($D_G$) transmitted from the material flow system (146) or the material management (168) comprised by or connected to it to the controller (98) is updated by change or new creation and returned to the material flow system (146) and/or transmitted to the material management (168).

15. A system for controlling a material flow in a plant (01) comprising a printing press (11) and one or more sheet-processing processing aggregates (12; 13; 14; 16; 17; 18) with a material flow controller (146) comprising a data processing means, **characterized in that** the material flow controller (146) from a programming point of view is equipped to generate, from data present in electronic form about an order description and a process and resource planning, a transport order ($T_M$) for the transport of a stack (04.j) from material sections (02.j) to be processed from a defined start position to a defined destination position and feed to a transport means controller assigned to one or more transport means (65; 68; 79) and to execute a method according to one or more of claims 1 through 14.

16. The system according to claim 15, **characterized in that** the material flow controller (146) is connected by means of electrical signals via an interface (163; 164), in particular via an XML interface (163) and/or a database interface (164), to a planning and/or control system (139) and/or via in each case one interface (183) in particular an XML interface (183), to several controllers (98) in each case assigned to a processing aggregate (12; 13; 14; 16; 17; 18) on site.

17. The system according to claim 15 or 16, **characterized in that** the system comprises a memory means with a data structure (169) comprised by or connected to the material flow controller (146), said data structure which is equipped to store drum-specific data dG(m) for a plurality of drums (04.j) to be manipulated in the plant (01) with at least one unique designation ({04.j}m) of the relevant drum (04.jm) and/or one specification describing an assigned order (A(n) and/or one specification describing a current product status ({P.x} and/or one specification describing a number (z) of the material sections (02.0) comprised in the drum (04.jm) and/or a specification characterizing a transport means (26; 108; 108) receiving the drum (04.jm).

18. The system according to claim 15, 16 or 17, **characterized in that** the material flow controller (146) is connected by electrical signals via several transport controllers to several transport means (60; 65; 68; 69; 78; 79) assigned to transport paths differing from one another.

## Revendications

1. Procédé de commande d'un flux de matériau dans une installation (01) à étages multiples comportant une machine à imprimer (11) et au moins un autre groupe de traitement traitant des parties de matériau (02.j) en forme de feuilles, dans lequel

   - une pluralité de parties de matériau (02.j) à traiter sont transportées en un paquet (04.j) par au moins un premier moyen de transport (65 ; 68 ; 79) vers un groupe de traitement (11) réalisé sous la forme d'une machine à imprimer (11),
   - les parties de matériau (02.j) parcourent la machine à imprimer (11) au moins une fois et sont imprimées à cette occasion au moins une fois,
   - et les parties de matériau (02.j) ayant parcouru au moins une fois la machine à imprimer (11) et ayant été imprimées au moins une fois à cette occasion sont transportées en au moins un paquet (04.j) par le au moins un premier ou par un deuxième moyen de transport (65 ; 68 ; 79) différent de celui-ci, aux fins d'un traitement subséquent, en s'éloignant de la machine à imprimer (11) et en allant vers un autre groupe de traitement (12 ; 13 ; 14 ; 16 ; 17 ; 18) différent d'une machine à imprimer ou pour un stockage intermédiaire vers une position de stockage (36 ; 56) d'une installation de stockage (37 ; 57),
   - au moins pour les transports s'éloignant de la machine à imprimer (11) et allant en direction de l'autre groupe de traitement (12 ; 13 ; 14 ; 16 ; 17 ; 18) ou de la position de stockage (36 ; 56), des ordres de transport ($T_M$) sont générés par des moyens de traitement de données d'une commande de flux de matériau (146),

   **caractérisé en ce que**

   - l'ordre de transport ($T_M$) respectif est généré par la commande de flux de matériau (146) avec prise en compte des informations ($D_G$) accessibles ou transmises électroniquement par la commande de flux de matériau (146) relatives au paquet (04.j) concernant l'ordre de transport, dans lequel les informations ($D_G$) comportent au moins l'indication d'une désignation claire ($\{04.j\}_m$) pour le paquet (04.j) concerné et l'indication d'une désignation claire pour l'ordre (A(n)) associé au paquet (04.j) spécifique et une indication relative au statut de traitement ($\{P.x\}$) des parties de matériau (02.j) du paquet (04.j),
   - et les transports concernés sont réalisés sur la base de ces ordres de transport ($T_M$) générés par la commande de flux de matériau (146).

2. Procédé selon la revendication 1, **caractérisé en ce que** les transports depuis une installation de stockage et/ou un groupe de manipulation (118) situé(e) en amont de la machine à imprimer (11) en direction de la machine à imprimer (11) et/ou depuis la position de stockage (36 ; 56) en direction de l'autre groupe de traitement (12 ; 13 ; 14 ; 16 ; 17 ; 18) et/ou depuis l'autre groupe de traitement (12 ; 13 ; 14 ; 16 ; 17 ; 18) vers une autre position de stockage (56) sont réalisés par des moyens de transport (60 ; 65 ; 68 ; 69 ; 74 ; 79) également sur la base d'ordres de transport ($T_M$) respectifs générés par la commande de flux de matériau (146), et **en ce que** l'ordre de transport ($T_M$) respectif est généré et/ou déclenché par la commande de flux de matériau (146) avec prise en compte des informations ($D_G$) accessibles et/ou transmises électroniquement par la commande de flux de matériau (146) relatives au paquet (04.j) concernant l'ordre de transport, dans lequel l'information ($D_G$) spécifique au paquet comporte au moins l'indication d'une désignation claire ($\{04.j\}_m$) pour le paquet (04.j) concerné et/ou l'indication d'une désignation claire pour l'ordre (A(n)) associé au paquet (04.j) spécifique et/ou une indication pour le statut de traitement ($\{P.x\}$) des parties de matériau (02.j) du paquet (04.j).

3. Procédé selon la revendication 1 ou 2, **caractérisé en ce que** l'ordre de transport ($T_M$) respectif est généré par la commande de flux de matériau (146) au moyen de données accessibles et/ou transmises électroniquement relatives à une description d'ordre, en particulier de données ou d'indications provenant d'une liste d'étapes de traitement (P.x) nécessaires pour un ordre (n) spécifique et/ou relatives à une planification du déroulement et des ressources, en particulier de données ou d'indications provenant d'un plan d'allocation des machines désignant les cycles de production pour les ordres (n) à exécuter aux groupes de traitement (11 ; 12 ; 13 ; 14 ; 16 ; 17 ; 18) concernés.

4. Procédé selon la revendication 3, **caractérisé en ce que** la commande de flux de matériau (146) reçoit d'un système de planification et/ou de commande (139) de l'installation (01) les indications relatives à la description d'ordre et/ou à une planification du déroulement et des ressources.

**5.** Procédé selon la revendication 1, 2, 3 ou 4, **caractérisé en ce que** l'ordre de transport ($T_M$) respectif, pour sa mise en oeuvre, est transféré par la commande de flux de matériau (146) à une commande de moyen de transport commandant au moins le moyen de transport (65 ; 68 ; 79) respectif et/ou **en ce que** des mouvements de transport pour les mouvements de transport destinés à être mis en oeuvre sur plusieurs voies de transport différentes les unes des autres et/ou pour plusieurs moyens de transport (60 ; 65 ; 68 ; 69 ; 74 ; 79) prévus dans l'installation (01) sont coordonnés et/ou prédéfinis par la commande de flux de matériau (146), par le fait qu'elle génère des ordres de transport ($T_M$) correspondants et les transfère à la commande de moyen de transport ou à la commande de moyen de transport respectivement concernée.

**6.** Procédé selon la revendication 1, 2, 3, 4 ou 5, **caractérisé en ce que** l'ordre de transport ($T_M$) respectif est généré et/ou déclenché par la commande de flux de matériau (146) avec prise en compte des informations ($D_M$) accessibles et/ou transmises électroniquement par la commande de flux de matériau (146) relatives au statut d'un groupe de traitement (11 ; 12 ; 13 ; 14 ; 16 ; 17 ; 18) concernant l'ordre de transport et/ou d'une position d'alimentation ou de distribution (23 ; 32 ; 29 ; 41) associée à ce groupe de traitement (11 ; 12 ; 13 ; 14; 16; 17 ; 18).

**7.** Procédé selon la revendication 1, 2, 3, 4, 5 ou 6, **caractérisé en ce que** l'ordre de transport ($T_M$) respectif est réalisé par la commande de flux de matériau (146) par application de règles prédéfinies et/ou accessibles ou transmises électroniquement à la commande de flux de matériau (146).

**8.** Procédé selon la revendication 1, 2, 3, 4, 5, 6 ou 7, **caractérisé en ce qu'**un ordre de transport ($T_M$) est généré et/ou déclenché par la commande de flux de matériau (146) en direction d'un des groupes de traitement (11 ; 12 ; 13 ; 14 ; 16 ; 17 ; 18) ou s'éloignant d'un de ces groupes de traitement (11 ; 12 ; 13 ; 14 ; 16 ; 17 ; 18), lorsqu'une information ($D_M$) représentant la demande côté entrée d'un paquet (04.j) à traiter ou une mise à disposition côté sortie d'un paquet (04.j+1) à récupérer est parvenue à la commande de flux de matériau (146) depuis le groupe de traitement (11 ; 12 ; 13 ; 14 ; 16 ; 17 ; 18) concerné.

**9.** Procédé selon la revendication 1, 2, 3, 4, 5, 6, 7 ou 8, **caractérisé en ce que** les informations ($D_G$) relatives aux paquet (04.uj) traité en dernier et/ou mis à disposition pour récupération sont transférées à la commande de flux de matériau (146) à partir d'un dispositif de commande (98) associé sur place au groupe de traitement (11 ; 12 ; 13 ; 14 ; 16 ; 17 ; 18) concerné.

**10.** Procédé selon la revendication 9, **caractérisé en ce qu'**un moyen de traitement de données (173 ; 174) associé au groupe de traitement (11 ; 12 ; 13 ; 14 ; 16 ; 17 ; 18) concerné, c'est-à-dire à la machine à imprimer (11) ou à l'autre ou à un autre groupe de traitement (12 ; 13 ; 14 ; 16 ; 17 ; 18), met à disposition les informations ($D_G$) relatives au paquet (04.j) traité et/ou mis à disposition sous forme de données, en particulier sous forme d'un fichier (171 ; 171'), de préférence un fichier au format XML.

**11.** Procédé selon la revendication 1, 2, 3, 4, 5, 6, 7, 8, 9 ou 10, **caractérisé en ce qu'**un échange d'un fichier (171) contenant des indications relatives à l'état de la pile (04.j) à traiter et/ou traitée par le groupe de traitement (11 ; 12 ; 13 ; 14 ; 16 ; 17 ; 18) est réalisé entre la commande de flux de matériau (146) et les groupes de traitement (11 ; 12 ; 13 ; 14 ; 16 ; 17 ; 18) respectifs, c'est-à-dire la machine à imprimer (11) et/ou des dispositifs de commande (98) et/ou des moyens de traitement de données (173 ; 174) associés audit ou au moins un autre groupe de traitement (12 ; 13 ; 14 ; 16 ; 17 ; 18).

**12.** Procédé selon la revendication 1, 2, 3, 4, 5, 6, 7, 8, 9, 10 ou 11, **caractérisé en ce que** la commande de flux de matériau (146), au moyen d'une indication relative au statut de traitement ({P.x}) ainsi qu'au moyen d'indications provenant de la description d'ordre concernant l'ordre (A(n)) et/ou de la planification du déroulement et des ressources, détermine le prochain objectif en attente pour le paquet (04.j), c'est-à-dire le groupe ou l'installation de stockage intermédiaire à démarrer par la suite.

**13.** Procédé selon la revendication 1, 2, 3, 4, 5, 6, 7, 8, 9, 10, 11 ou 12, **caractérisé en ce que** des ordres A(n) de fabrication de produits emballés et/ou imprimés (03) sont décrits et/ou une planification du déroulement et des ressources est réalisée dans un système de planification et/ou de commande (139) maître par l'intermédiaire d'une interface utilisateur, et des indications provenant de la description d'ordre et/ou des indications provenant de la planification du déroulement et des ressources sont mises à disposition sous forme de données structurées ($D_A$ ; $D_R$) dans une structure de mémoire associée au système de planification et/ou de commande (139) ou reliée à celui-ci.

**14.** Procédé selon la revendication 1, 2, 3, 4, 5, 6, 7, 8, 9, 10, 11, 12 ou 13, **caractérisé en ce qu'**un échange d'informations ($D_G$) ayant trait au paquet est réalisé dans les deux directions entre une gestion de matériau (168) englobée par la commande de flux de matériau (146) ou reliée à celle-ci selon une technique de signalisation et un ou plusieurs dispositifs de commande (98) associés respectivement à un ou plusieurs groupes de traitement (11 ; 12 ; 13 ; 14 ; 16 ; 17 ; 18) pour la commande et/ou la commande utilisateur, dans lequel des informations ($D_G$) ayant trait au paquet transmises au dispositif de commande (98) par le système de flux de matériau (146) ou la gestion de matériau (168) englobée par celui-ci ou reliée à celui-ci sont actualisées à cet endroit par modification ou création et à nouveau transmises au système de flux de matériau (146) et/ou à la gestion de matériau (168).

15. Système de commande d'un flux de matériau dans une installation (01) comportant une machine à imprimer (11) ainsi qu'un ou plusieurs autres groupes de traitement (12 ; 13 ; 14 ; 16 ; 17 ; 18) traitant des feuilles au moyen d'une commande de flux de matériau (146) comportant des moyens de traitement de données, **caractérisé en ce que** la commande de flux de matériau (146) est conçue par programmation pour générer, à partir de données présentes sous forme électronique relatives à une description d'ordre et à une planification du déroulement et des ressources, un ordre de transport ($T_M$) pour le transport d'une pile (04.j) faite de parties de matériau (02.j) à traiter d'une position de départ définie à une position cible définie et pour la transférer à une commande de moyen de transport associée à un ou plusieurs moyens de transport (65 ; 68 ; 79) et pour mettre en oeuvre un procédé selon l'une ou plusieurs des revendications 1 à 14.

16. Système selon la revendication 15, **caractérisé en ce que** la commande de flux de matériau (146) est en liaison par signaux avec un système de planification et/ou de commande (139) par l'intermédiaire d'une interface (163 ; 164), en particulier par l'intermédiaire d'une interface XML (163) et/ou d'une interface de base de données (164), et/ou avec plusieurs dispositifs de commande (98) associés sur place à respectivement un groupe de traitement (12 ; 13 ; 14 ; 16 ; 17 ; 18) par l'intermédiaire de respectivement une interface (183), en particulier une interface XML (183).

17. Système selon la revendication 15 ou 16, **caractérisé en ce que** le système comporte un moyen formant mémoire englobé par la commande de flux de matériau (146) ou relié à celle-ci et pourvu d'une structure de données (169), laquelle est conçue, pour une pluralité de paquets (04.j) destinés à être manipulés dans l'installation (01), pour mettre en mémoire les données spécifiques au paquet dG(m) présentant au moins une désignation claire ({04.j}m) du paquet (04.jm) concerné et/ou une indication désignant un ordre (A(n)) associé et/ou une indication désignant un statut de produit actuel ({P.x} et/ou une indication désignant un nombre (z) des parties de matériau (02.0) englobées dans le paquet (04.jm) et/ou une indication (p) caractérisant un moyen auxiliaire de transport (26 ;108 ; 108) logeant le paquet (04.jm).

18. Système selon la revendication 15, 16 ou 17, **caractérisé en ce que** la commande de flux de matériau (146) est reliée selon une technique de signaux à plusieurs moyens de transport (60 ; 65 ; 68 ; 69 ; 78 ; 79) associés à plusieurs voies de transport différentes les unes des autres par l'intermédiaire de plusieurs commandes de transport.

Fig. 1

a)   03

b)   03

KBA

KBA

Fig. 2

EP 3 123 257 B1

29; 41

178

102

111; 112

91

114

I.m; I.g

146

99

139

11 (12; 13; 14; 16; 17; 18)

81 (82; 83; 84; 86; 87; 88)

M

I.m; I.g

113

89

31; 33

101

104

103

23; 32

177

Fig. 3

89

04.j → 1.
109

2.

02.j
3.
109

04.j
04.j'
4.
109'

Fig. 4

91

97
04.j+1
1.
108; 109

02.j+1'
2.
108'; 109' (121)

04.j+1'
3.
108'; 109' (121)

Fig. 5

108

131

b108

l108

128   122   129   129   127   126

# Fig. 6

109 (121)

132

b109   l109

# Fig. 7

118 (19)

Fig. 8

134

109

134

Fig. 9

65

04.j (04.0; 08)

a)

79 (68)

75

04.j (67; 66)

b)

68 (79)

75

04.j (66; 67)

c)

Fig. 10

EP 3 123 257 B1

maschinenseitige Prozess- und Produktionssteuerung

die Materiallogistik betreffende Steuerung

147

S.1　S.1'　S.2　S.3, S.4

P.31

149

151

69

P.29　P.28

P.10; P.11　P.1 (P.1')　P.16　P.1 (P.1')　P.2　P.3; P.4　P.24　P.25

148

Fig. 11

Fig. 12

Fig. 13

141 (142)

156

$D_{A(n)}$

< Bezeichnung $a_n$ >
< 1. Bearbeitungsschritt P.x >
< 2. Bearbeitungsschritt P.x+1 >
⋮

optional:
< Material >, < Kunde >, etc.

$a_n$

$a_n$: < Material >
     < Kunde >
     < Menge >
     <Bearbeitungsschritt P.x >
     ⋮

$a_{n+1}$: < Material >
       < Kunde >
       ⋮

## Fig. 14

142 (141)

$D_R$

166

| heute | Aggregat 11.1 | Aggregat 11.2 | Aggregat 13.1 | Ag |
|---|---|---|---|---|
| | $a_i$ | $a_{i+1}$ | $a_{i-1}$ | |
| | $a_{i+2}$ | $a_{i+4}$ | $a_i$ | |
| | $a_{i+3}$ | — | $a_{i+1}$ | |
| morgen | ... | ... | $a_{i+4}$ | |
| | ... | ... | ... | |

157

## Fig. 15

Fig. 16

Fig. 18

$D_G(m)$     171

< Bezeichnung {04.j}$_m$ >
< Auftrag a$_n$ >
< Produktstatus {P.j} >
⋮

optional:
< Anzahl            z >
< Gebindenummer    g >
< Transporthilfsmittel    p >
< Zeitstempel       t >

(P.j+1, z', l', p', t')

98 (11; 12; 13; 14; 16; 17; 18)

173; 174

$D_G(m')$     171'

< Bezeichnung {04.j}$_{m'}$ >
< Auftrag a$_n$ >
< Produktstatus {P.j+1} >
⋮

optional:
< Anzahl            z' >
< Gebindenummer    g' >
< Transporthilfsmittel    p' >
< Zeitstempel       t' >

Fig. 17

Fig. 19

ERP    139

146; 152

06    07

141 (142)    142 (141)

171;
171'    171;
171'

S.1; S.1'    S.2    S.3; S.4; S.4'; S.5

EP 3 123 257 B1

62

Fig. 20

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19740974 A1
- EP 0654721 B1
- DE 4329886 A1
- DE 20122255 U1
- DE 102012215369 A1
- DE 19926822 A1
- DE 3914238 A1
- DE 202008008081 U1
- DE 10122430 A1
- DE 3739659 C1

- US 3180638 A
- DE 112005002817 T5
- DE 10245658 A1
- DE 102010041837 A1
- DE 102005054496 B3
- DE 102006061119 A1
- DE 102006033365 A1
- DE 202007012351 U1
- EP 2481566 A1

**In der Beschreibung aufgeführte Nicht-Patentliteratur**

- **FA. KOENIG ; BAUER AG.** *RAPIDA 106,* 28, , 29